# EUROPEAN PATENT APPLICATION

(11) **EP 4 501 935 A1**
(43) Date of publication of application: **05.02.2025**
(21) Application number: 23774462.8
(22) Date of filing: 03.03.2023
(51) Int. Cl.: C07F 7/18, C08G 65/336, C09K 3/18

(54) **COMPOUND, COMPOSITION, SURFACE TREATMENT AGENT, ARTICLE AND METHOD OF PRODUCING ARTICLE**

(30) Priority: 24.03.2022 JP 2022049060
(71) Applicant: AGC INC., Chiyoda-ku, Tokyo 1008405 (JP)
(72) Inventor: WATANABE, Koki, Tokyo 100-8405 (JP); AOYAMA, Motoshi, Tokyo 100-8405 (JP); HIRATA, Yasuhiro, Tokyo 100-8405 (JP); SAKAGUCHI, Hironobu, Tokyo 100-8405 (JP); ANRAKU, Eiichiro, Tokyo 100-8405 (JP); KAWAKAMI, Shiori, Tokyo 100-8405 (JP)
(74) Representative: Müller-Boré & Partner Patentanwälte PartG mbB
(86) International application number: PCT/JP2023/008162
(87) International publication number: WO 2023/181863

(57) **Abstract**

A compound including the following Group 1, a partial structure that is an alkylene chain or a polyalkylene oxide chain, and the following Group 2: Group 1: -SiR¹₃ Group 2: - Si(R²)ₙL₃₋ₙ where each of pieces of R¹ independently represents a hydrocarbon group or a trialkylsilyloxy group, each of pieces of R² independently represents a hydrocarbon group, each of pieces of L independently represents a hydrolyzable group or a hydroxyl group, and n is an integer from 0 to 2.

## Description

### Technical Field

The present disclosure relates to a compound, a composition, a surface treatment agent, an article, and a method of producing an article.

### Background Art

In recent years, in order to improve performance such as appearance and visibility, a technique for making it difficult for a fingerprint to adhere to a surface of an article and a technique for making it easy to remove stains are required. As a specific method, a method of performing a surface treatment on a surface of an article using a surface treatment agent is known.

For example, Patent Literature 1 describes a composition containing an organosilicon compound having at least one trialkylsilyl group and two or more hydrolyzable silicon groups, and a metal compound in which at least one hydrolyzable group is bonded to a metal atom. Patent Literature 2 describes a method of producing an organic thin film in which an organic thin film is formed on a surface of a substrate, the method including at least a step of bringing the substrate into contact with an organic solvent solution containing a metal-based surfactant having at least one hydrolyzable group or hydroxyl group and a catalyst capable of interacting with the metal-based surfactant.

### Citation List

### Patent Literature

Patent Literature 1: Japanese Patent Application Laid-Open (JP-A) No. 2017-119849
Patent Literature 2: WO 2008/016029 A

### SUMMARY OF INVENTION

### Technical Problem

Compositions used for surface treatment agents and the like are required to be further improved from the viewpoint of water repellency and abrasion resistance.

The present disclosure has been made in view of such circumstances, and an object of an embodiment of the present invention is to provide a novel compound and composition useful as a surface treatment agent capable of forming a surface treatment layer excellent in water repellency and abrasion resistance on a substrate.

An object of an embodiment of the present invention is to provide a surface treatment agent capable of forming a surface treatment layer excellent in water repellency and abrasion resistance on a substrate.

An object of an embodiment of the present invention is to provide an article having a surface treatment layer excellent in water repellency and abrasion resistance, and a method of producing the article.

### Solution to Problem

The present disclosure includes the following aspects.
<1>
   A compound comprising the following Group 1, a partial structure that is an alkylene chain having 3 or more carbon atoms or a polyalkylene oxide chain, and the following Group 2:
   Group 1: -M¹R¹₃
   Group 2: -Si(R²)ₙL₃₋ₙ
   M¹ is Si, Sn, or Ge,
   each R¹ independently represents a hydrocarbon group or a trialkylsilyloxy group, each R² independently represents a hydrocarbon group, each L independently represents a hydrolyzable group or a hydroxyl group, and n is an integer from 0 to 2.
<2>
   The compound according to <1>, represented by the following Formula 1:

   [R¹₃Si-(O)ᵣ-Z]ₚA(Si(R²)ₙL₃₋ₙ)_{q} ... (1)

   where each R¹ independently represents a hydrocarbon group or a trialkylsilyloxy group, r represents 0 or 1, each Z independently represents an alkylene chain or a polyalkylene oxide chain, or any combination of an alkylene chain and a divalent polysiloxane residue, A represents a single bond or a (p+q)-valent linking group, each R² independently represents a hydrocarbon group, each L independently represents a hydrolyzable group or a hydroxyl group, each of n independently represents an integer from 0 to 2, and each of p and q independently represents an integer of 1 or more.
<3>
   The compound according to <2>, wherein Z is an alkylene chain having 10 or more carbon atoms in Formula 1.
<4>
   The compound according to <2>, wherein Z is a polyalkylene oxide chain having a repeat number of 3 or more in Formula 1.
<5>
   The compound according to any one of <2> to <4>, wherein each R¹ independently represents a trialkylsilyloxy group.
<6>
   The compound according to any one of <2> to <5>, wherein each R¹ independently represents a trimethylsilyloxy group or a triethylsilyloxy group.
<7>
   The compound according to any one of <2> to <6>, wherein p is 2 to 4 in Formula 1.
<8>
   The compound according to any one of <2> to <7>, wherein q is 2 to 4 in Formula 1.
<9>
   A composition comprising the compound according to any one of <1> to <8> and a liquid medium.
<10>
   A surface treatment agent comprising the compound according to any one of <1> to <8>.
<11>
   A surface treatment agent comprising the compound according to any one of <1> to <8> and a liquid medium.
<12>
   A method of producing an article, the method comprising: subjecting a substrate to a surface treatment with the surface treatment agent according to <10> or <11> to produce an article having a surface treatment layer formed on the substrate.
<13>
   An article comprising: a substrate; and a surface treatment layer disposed on the substrate and surface-treated with the surface treatment agent according to <10>.
<14>
   The article according to <13>, the article being an optical member.
<15>
   The article according to <13>, the article being a display or a touch panel.
<16>
   A compound comprising the following Group 1, a partial structure that is an alkylene chain having 3 or more carbon atoms or a polyalkylene oxide chain, and the following Group 2:
   Group 1: -M¹R¹₃
   Group 2: -Si(R²)ₙL₃₋ₙ
   M¹ is Si, Sn, or Ge,
   each R¹ independently represents a hydrocarbon group or a trialkylsilyloxy group, each R² independently represents a hydrocarbon group, each L independently represents a hydrolyzable group or a hydroxyl group, and n is an integer from 0 to 2.

### Advantageous Effects of Invention

An embodiment of the present invention provides a novel compound and composition useful as a surface treatment agent capable of forming a surface treatment layer excellent in water repellency and abrasion resistance on a substrate.

An embodiment of the present invention provides a surface treatment agent capable of forming a surface treatment layer excellent in water repellency and abrasion resistance on a substrate.

An embodiment of the present invention provides an article having a surface treatment layer excellent in water repellency and abrasion resistance and a method of producing the article.

### DESCRIPTION OF EMBODIMENTS

In the present description, the numerical range indicated using "to" includes the numerical values described before and after "to" as the minimum value and the maximum value, respectively.

In the numerical ranges described in stepwise in the present description, the upper limit value or the lower limit value described in one numerical range may be replaced with the upper limit value or the lower limit value of the numerical range described in another stage. In addition, in the numerical range described in the present description, the upper limit value or the lower limit value of the numerical range may be replaced with a value shown in Examples.

In the present description, the "surface treatment layer" means a layer formed on the surface of the substrate by surface treatment.

In the present description, when a compound or group is represented by a specific Formula (X), the compound or group represented by the Formula (X) may be referred to as a Compound (X) or a Compound X, and a Group (X) or a Group X, respectively.

### [Compound]

The compound of the present disclosure includes the following Group 1, a partial structure that is an alkylene chain or a polyalkylene oxide chain, and the following group 2.
Group 1: -M¹R¹₃
Group 2: -Si(R²)ₙL₃₋ₙ

M¹ is Si, Sn, or Ge, each R¹ independently represents a hydrocarbon group or a trialkylsilyloxy group, each R² independently represents a hydrocarbon group, each L independently represents a hydrolyzable group or a hydroxyl group, and n is an integer from 0 to 2.

When the compound of the disclosure is used as a surface treatment agent, a surface treatment agent excellent in water repellency and abrasion resistance can be formed. The reason for this is not clear, but is presumed as follows.

In the compound of the present disclosure, the Group 2 is contained, and thus adhesion to the substrate is high, and the surface treatment layer can be formed on the substrate. In addition, containing the Group 1 can impart water repellency, and containing a partial structure that is an alkylene chain or a polyalkylene oxide chain causes intermolecular interaction to work to form a packing structure, thereby allowing to provide abrasion resistance.

The compound described in Patent Literature 1 does not contain a partial structure of an alkylene chain or a polyalkylene oxide chain, and thus it is considered that the abrasion resistance of the surface treatment layer is insufficient in a case of being used as a surface treatment agent. The compound described in Patent Literature 2 does not contain the Group 1, and thus it is considered that the water repellency of the surface treatment layer is insufficient in a case of being used as a surface treatment agent.

Hereinafter, the compound of the disclosure will be described in detail.

The compound of the present disclosure includes a Group 1, a partial structure that is an alkylene chain or a polyalkylene oxide chain, and the following Group 2, and may include a structure other than the Group 1, the Group 2, and the partial structure. For example, the compounds of the present disclosure may contain or need not contain organosiloxane residues.

### (Group 1)

The compound of the present disclosure includes the above Group 1. In the compound, only one Group 1 may be contained, or two or more groups 1 may be contained. The Group 1 is a monovalent group, and thus is located at the terminal of the compound.
Group 1: -M¹R¹₃
M¹ is Si, Sn, or Ge.

Each R¹ independently represents a hydrocarbon group or a trialkylsilyloxy group.

In a case in which there are a plurality of Groups 1 in one molecule, the plurality of Groups 1 1 may be the same or different from each other. From the viewpoint of availability of raw materials and ease of production of the compound, the plurality of Groups 1 1 are preferably the same.

All of Si, Sn, and Ge are Group 14 elements, and thus the same effect is achieved, but M¹ is preferably Si from the viewpoint of availability of raw materials.

Examples of the hydrocarbon group represented by R¹ include an aliphatic hydrocarbon group and an aromatic hydrocarbon group. Among them, the hydrocarbon group is preferably an aliphatic hydrocarbon group, and more preferably an alkyl group. The alkyl group may be any of a linear alkyl group, a branched alkyl group, and a cycloalkyl group, and is preferably a linear alkyl group, more preferably a methyl group, an ethyl group, a n-propyl group, or a n-butyl group, and still more preferably a methyl group.

The alkyl group contained in the trialkylsilyloxy group represented by R¹ may be any of a linear alkyl group, a branched alkyl group, and a cycloalkyl group, but is preferably a linear alkyl group, more preferably a methyl group, an ethyl group, a n-propyl group, or a n-butyl group, and still more preferably a methyl group. In a case in which R¹ is a trialkylsilyloxy group, the three alkylsilyloxy groups may be the same or different from each other, but are preferably the same from the viewpoint of ease of production.

Examples of the Group 1 include a methyldiethylsilyl group, a methylethylpropylsilyl group, a methylethylbutylsilyl group, a methyldipropylsilyl group, a methylpropylbutylsilyl group, a methyldibutylsilyl group, a dimethylethylsilyl group, a dimethylpropylsilyl group, a dimethylbutylsilyl group, a trimethylsilyl group, a triethylsilyl group, a tri-n-propylsilyl group, a tri-isopropylsilyl group, and a trialkylsilyloxy group having these groups.

Among them, from the viewpoint of improving the water repellency of the surface treatment layer, R¹ in the Group 1 is preferably a trialkylsilyloxy group, and more preferably a trimethylsilyloxy group or a triethylsilyloxy group.

### (Group 2)

The compound of the present disclosure includes the above Group 2. The compound may contain only one Group 2 or two or more Groups 1 2. For example, the number may be from 1 to 18, from 2 to 12, or from 2 to 8. The Group 2 is a monovalent group, and thus is located at the terminal of the compound.
Group 2: -Si(R²)ₙL₃₋ₙ
Each R² independently represents a hydrocarbon group, each L independently represents a hydrolyzable group or a hydroxyl group, and n represents an integer from 0 to 2.

In a case in which there are a plurality of Groups 1 2 in one molecule, the plurality of Groups 1 2 may be the same or different from each other. From the viewpoint of availability of raw materials and ease of production of the compound, the plurality of Groups 1 2 are preferably the same.

R² is a hydrocarbon group, and is preferably a saturated hydrocarbon group. The number of carbon atoms in R² is preferably from 1 to 6, more preferably from 1 to 3, and still more preferably from 1 to 2.

Each L independently represents a hydrolyzable group or a hydroxyl group.

The hydrolyzable group is a group that becomes a hydroxyl group by a hydrolysis reaction. That is, the hydrolyzable silyl group represented by Si-L undergoes a hydrolysis reaction to become a silanol group represented by Si-OH. The silanol group further react between the silanol groups to form a Si-O-Si bond. The silanol group undergoes dehydration condensation reaction with a silanol group derived from an oxide present on the surface of the substrate to allow forming a Si-O-Si bond.

Examples of the hydrolyzable group include an alkoxy group, an aryloxy group, a halogen atom, an acyl group, an acyloxy group, and an isocyanato group (-NCO). The alkoxy group is preferably an alkoxy group having 1 to 4 carbon atoms. The aryloxy group is preferably an aryloxy group having 3 to 10 carbon atoms. However, examples of the aryl group of the aryloxy group includes a heteroaryl group. The halogen atom is preferably a chlorine atom. The acyl group is preferably an acyl group having 1 to 6 carbon atoms. The acyloxy group is preferably an acyloxy group having 1 to 6 carbon atoms.

Among them, L is preferably an alkoxy group having 1 to 4 carbon atoms or a halogen atom from the viewpoint of ease of production of the compound. L is preferably an alkoxy group having 1 to 4 carbon atoms, and more preferably an ethoxy group or a methoxy group from the viewpoint of less outgassing at the time of coating and more excellent storage stability of the compound.

n is an integer from 0 to 2, preferably 0 or 1, and more preferably 0. The presence of a plurality of L causes stronger adhesion of the surface treatment layer to a substrate.

When n is 1 or less, a plurality of L present in one molecule may be the same or different from each other. The plurality of L is preferably the same from the viewpoint of easy availability of the raw material and easy production of the compound. In a case in which n is 2, a plurality of R²s present in one molecule may be the same or different from each other. The plurality of R²s is preferably the same from the viewpoint of easy availability of the raw material and easy production of the compound.

### (Partial Structure of Alkylene Chain or Polyalkylene Oxide Chain)

The compound of the present disclosure includes a partial structure that is an alkylene chain or polyalkylene oxide chain. The partial structure is preferably present between the Groups 1 1 and 2. The Group 1 and the partial structure and the Group 2 and the partial structure may be bonded directly or via another structure.

The number of carbon atoms in the alkylene chain is preferably 2 or more, more preferably 3 or more, still more preferably 10 or more from the viewpoint of improving the water repellency and abrasion resistance of the surface treatment layer. The upper limit of the number of carbon atoms in the alkylene chain is not particularly limited, and is, for example, 80, preferably 30. Specifically, the number of carbon atoms in the alkylene chain is preferably from 1 to 30, more preferably from 3 to 30, still more preferably from 4 to 20, and particularly preferably from 5 to 15.

The alkylene chain may be linear, branched, or cyclic.

Among them, the alkylene chain is preferably linear from the viewpoint of improving the water repellency and abrasion resistance of the surface treatment layer.

The Group 1 and the alkylene chain may be directly bonded to each other, or may be bonded to each other via another structure. For example, an organopolysiloxane residue (for example, divalent organopolysiloxane residue) may be contained or need not be contained between the Group 1 and the alkylene chain.

For example, the Group 1 and the alkylene chain may be bonded via a divalent organopolysiloxane residue. In a case in which the Group 1, the divalent organopolysiloxane residue, and the alkylene chain are disposed in this order, another structure may be included between the Group 1 and the divalent organopolysiloxane residue. For example, an oxygen atom or an alkylene chain may be disposed between the Group 1 and the divalent organopolysiloxane residue.

The divalent organopolysiloxane residue is preferably represented by the following Formula B.

In Formula B, each R⁵ independently represents a hydrocarbon group, and k is an integer of 1 or more.

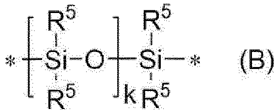

Examples of the hydrocarbon group represented by R⁵ include an aliphatic hydrocarbon group and an aromatic hydrocarbon group. Among them, the hydrocarbon group is preferably an aliphatic hydrocarbon group, and more preferably an alkyl group. The alkyl group may be any of a linear alkyl group, a branched alkyl group, and a cycloalkyl group, and is preferably a linear alkyl group, more preferably a methyl group, an ethyl group, a n-propyl group, or a n-butyl group, and still more preferably a methyl group.

k is an integer of 1 or more, preferably from 2 to 500, more preferably from 8 to 300, and still more preferably from 15 to 60. From the viewpoint of excellent abrasion resistance, from 9 to 50 is preferable, from 11 to 30 is more preferable, and from 11 to 25 is particularly preferable.

The combination of the alkylene chain and the divalent organopolysiloxane residue is preferably represented by the following Formula C1, C2, or C3.

In Formula C1, each of Ak¹ and Ak² independently means an alkylene chain. R⁵ represents the same as R⁵ in Formula B. k1 is an integer of 1 or more.

In Formula C2, Ak³ means an alkylene chain. R⁵ represents the same as R⁵ in Formula B. Each of k2 and k3 independently is an integer of 1 or more.

In Formula C3, Ak⁴ means an alkylene chain. R⁵ represents the same as R⁵ in Formula B. k4 is an integer of 1 or more.

In Formulas C1, C2, and C3, *1 is connected to the Group 1 side, and *2 is connected to the Group 2 side.

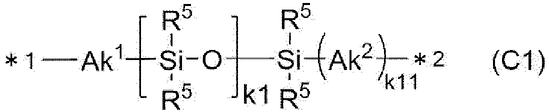

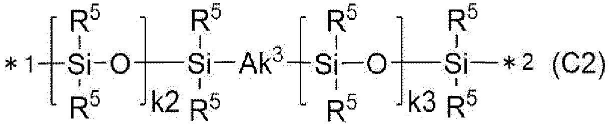

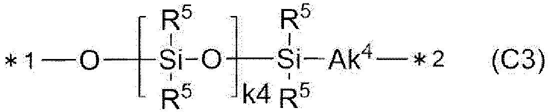

In Formula C1, the number of carbon atoms in the alkylene chain represented by Ak¹ is preferably 2 or more, more preferably 4 or more from the viewpoint of improving the water repellency and abrasion resistance of the surface treatment layer. The upper limit of the number of carbon atoms in the alkylene chain is not particularly limited, and is, for example, 30.

The number of carbon atoms in the alkylene chain represented by Ak² is preferably from 1 to 30, more preferably from 3 to 30, still more preferably from 4 to 20, and particularly preferably from 5 to 15 from the viewpoint of improving the water repellency and abrasion resistance of the surface treatment layer.

The alkylene chain may be linear, branched, or cyclic.

Among them, the alkylene chain is preferably linear from the viewpoint of improving the water repellency and abrasion resistance of the surface treatment layer.

k1 is an integer of 1 or more, preferably from 2 to 500, more preferably from 8 to 300, and still more preferably from 15 to 60. From the viewpoint of excellent abrasion resistance, from 9 to 50 is preferable, from 11 to 30 is more preferable, and from 11 to 25 is particularly preferable.

k11 is 0 or 1.

In Formula C2, the number of carbon atoms in the alkylene chain represented by Ak³ is preferably 1 or more, more preferably from 2 to 10, still more preferably from 2 to 6 from the viewpoint of improving the water repellency and abrasion resistance of the surface treatment layer.

The alkylene chain may be linear, branched, or cyclic.

Among them, the alkylene chain is preferably linear from the viewpoint of improving the water repellency and abrasion resistance of the surface treatment layer.

Each of k2 and k3 independently is an integer of 1 or more, preferably from 2 to 500, more preferably from 8 to 300, and still more preferably from 15 to 60. From the viewpoint of excellent abrasion resistance, from 9 to 50 is preferable, from 11 to 30 is more preferable, and from 11 to 25 is particularly preferable.

In Formula C3, the number of carbon atoms in the alkylene chain represented by Ak⁴ is preferably from 1 to 30, more preferably from 3 to 30, still more preferably from 4 to 20, and particularly preferably from 5 to 15 from the viewpoint of improving the water repellency and abrasion resistance of the surface treatment layer.

The alkylene chain may be linear, branched, or cyclic.

Among them, the alkylene chain is preferably linear from the viewpoint of improving the water repellency and abrasion resistance of the surface treatment layer.

k4 is an integer of 1 or more, preferably from 2 to 500, more preferably from 8 to 300, and still more preferably from 15 to 60. From the viewpoint of excellent abrasion resistance, from 9 to 50 is preferable, from 11 to 30 is more preferable, and from 11 to 25 is particularly preferable.

Among them, from the viewpoint of improving the water repellency and abrasion resistance of the surface treatment layer, any combination of an alkylene chain and a divalent organopolysiloxane residue is preferably represented by Formula C3.

The polyalkylene oxide chain is represented by the following Formula A.

(XO)ₘ ... (A)

In Formula A, each of X independently represents an alkylene group.

The number of carbon atoms in the alkylene group is preferably from 1 to 20, and more preferably from 2 to 6 from the viewpoint of improving the water repellency and abrasion resistance of the surface treatment layer.

The alkylene group may be linear, branched, or cyclic.

Specific examples of (XO) include -CH₂O-, -C₂H₄O-, -C₃H₆O-, -C₄H₈O-, -C₅H₁₀O-,-C₆H₁₂O-, -CH(CH₃)CH₂O-, -CH(CH₃) CH₂CH₂O-, -cycloC₄H₆-O-, -cycloC₅H₈-O-, and-cycloC₆H₁₀-O-.

Herein, -cycloC₄H₆- means a cyclobutanediyl group. Examples of the cyclobutanediyl group include a cyclobutane-1,2-diyl group and a cyclobutane -1,3-diyl group. -cycloC₅H₈-means a cyclopentanediyl group. Examples of the cyclopentanediyl group include a cyclopentane-1,2-diyl group and a cyclopentane-1,3-diyl group. -cycloC₆H₁₀- means a cyclohexanediyl group. Examples of the cyclohexanediyl group include a cyclohexane-1,2-diyl group, a cyclohexane-1,3-diyl group, and a cyclohexane-1,4-diyl group.

The repetition number m of (XO) is an integer of 2 or more, more preferably an integer from 3 to 200, still more preferably an integer from 5 to 150, particularly preferably an integer from 5 to 100, and most preferably an integer from 10 to 50.

(XO)ₘ may include two or more kinds of (XO).

The bonding order of the two or more kinds of (XO) is not limited, and the two or more kinds of (XO) may be disposed in any of random, alternate, and block.

Containing two or more kinds of (XO) is that two or more kinds of (XO) having different carbon numbers exist in the compound, and two or more kinds of (XO) having different presence or absence of a side chain and a type of a side chain (for example, the number of side chains, the number of carbon atoms in side chains, and the like) exist even if the carbon numbers are the same.

For the disposition of two or more kinds of (XO), for example, a structure represented by {(CH₂O)ₘ₂₁(C₂H₄O)ₘ₂₂} represents that m21 pieces of (CH₂O) and m22 pieces of (C₂H₄O) are randomly disposed. In addition, the structure represented by (C₂H₄O-C₃H₆O)ₘ₂₅ represents that m25 pieces of (C₂H₄O) and m25 pieces of (C₃H₆O) are alternately disposed.

Among them, the (XO)ₘ is preferably [(CH₂O)ₘ₁₁(C₂H₄O)ₘ₁₂(OC₃H₆)ₘ₁₃(OC₄H₈)ₘ₁₄(C₅H₁₀O)ₘ₁₅ •(C₆H₁₂O)ₘ₁₆(cycloC₄H₆-O)ₘ₁₇(cycloC₅H₈-O)ₘ₁₈(cycloC₆H₁₀-O)ₘ₁₉].

Each of m11, m12, m13, m14, m15, m16, m17, m18, and m19 independently is an integer of 0 or more, and preferably 100 or less.

m11+m12+m13+m14+m15+m16+m17+m18+m19 is an integer of 2 or more, and is more preferably an integer from 2 to 200, more preferably an integer from 5 to 150, still more preferably an integer from 5 to 100, particularly preferably an integer from 10 to 50.

Among them, m12 is preferably an integer of 2 or more, and particularly preferably an integer from 2 to 200.

In addition, C₃H₆, C₄H₈, C₅H₁₀, and C₆H₁₂ may be linear or branched, but are preferably linear from the viewpoint of improving the abrasion resistance of the surface treatment layer.

The above formula represents the type of unit and the number of units, and does not represent the sequence of units. That is, m11 to m19 represent the number of units, and for example, (CH₂O)ₘ₁₁ does not indicate a block in which m11 pieces of (CH₂O) units are continuous. Similarly, the description order of (CH₂O) to (cycloC₆H₁₀-O) does not indicate that they are disposed in the description order.

In the above formula, in a case in which two or more of m11 to m19 is not 0 (that is, in a case in which (XO)ₘ is made of two or more kinds of units), the sequence of different units may be any of a random sequence, an alternating sequence, a block sequence, and any combination of these sequences.

(XO)ₘ preferably has the following structure.
(C₂H₄O)ₘ₂₁,
(C₃H₆O)ₘ₂₂,
(C₂H₄O)ₘ₂₃(C₃H₆O)ₘ₂₄, and
(C₂H₄O-C₃H₆O)ₘ₂₅.

Herein, m21 is an integer of 2 or more, m22 is an integer of 2 or more, each of m23 and m24 independently is an integer of 1 or more, m25 is an integer of 1 or more, and each of m26 and m27 independently is an integer of 1 or more.

The number average molecular weight (Mn) of the partial structure is preferably from 400 to 18,000, more preferably from 500 to 15,000, and particularly preferably from 600 to 10,000.

When Mn is 1,000 or more, the fluidity of the molecular chain of the compound is increased, and thus the abrasion resistance of the surface treatment layer is more excellent.

The compound of the disclosure is preferably represented by the following Formula 1 from the viewpoint of being more excellent in water repellency and abrasion resistance of the surface treatment layer.

[R¹₃M¹-(O)ᵣ-Z]ₚA(Si(R²)ₙL₃₋ₙ)_{q} ... (1)

In Formula 1, M¹ is Si, Sn, or Ge, each R¹ independently represents a hydrocarbon group or a trialkylsilyloxy group, r represents 0 or 1, each of Z independently represents an alkylene chain or a polyalkylene oxide chain, or any combination of an alkylene chain and a divalent polysiloxane residue, A represents a single bond or a (p+q)-valent linking group, each R² independently represents a hydrocarbon group, each L independently represents a hydrolyzable group or a hydroxyl group, each of n independently represents an integer from 0 to 2, and each of p and q independently represents an integer of 1 or more.

R¹ and M¹ in Formula 1 are the same as R¹ and M¹ in the Group 1, and thus description thereof is omitted.

In Formula 1, M¹ is preferably Si.

In Formula 1, R¹ is preferably a trialkylsilyloxy group, and more preferably a trimethylsilyloxy group or a triethylsilyloxy group.

R², L, and n in Formula 1 are the same as R², L, and n in the Group 2, and thus explanation thereof is omitted.

The polyalkylene oxide chain represented by Z is the same polyalkylene oxide chain that is a partial structure, and thus the description thereof is omitted.

Z is preferably an alkylene chain. The number of carbon atoms in the alkylene chain is preferably 2 or more, more preferably 3 or more, still more preferably 10 or more from the viewpoint of improving the water repellency and abrasion resistance of the surface treatment layer. The upper limit of the number of carbon atoms in the alkylene chain is not particularly limited, and is, for example, 80, preferably 30. Specifically, the number of carbon atoms in the alkylene chain is preferably from 1 to 30, more preferably from 3 to 30, still more preferably from 4 to 20, and particularly preferably from 5 to 15.

In a case in which Z is any combination of an alkylene chain and a divalent polysiloxane residue, the side bonded to "R¹₃M¹-(O)ᵣ-" may be an alkylene chain or a divalent polysiloxane residue.

In addition, it is preferable that Z is represented by -Z¹¹-Z¹²-, Z¹¹ is a divalent organopolysiloxane residue, and Z¹² is an alkylene chain.

The divalent organopolysiloxane residue represented by Z¹¹ is preferably represented by the above formula B.

The number of carbon atoms in the alkylene chain represented by Z¹² is preferably from 1 to 30, more preferably from 3 to 30, still more preferably from 4 to 20, and particularly preferably from 5 to 15 from the viewpoint of improving the water repellency and abrasion resistance of the surface treatment layer.

In Formula 1, A is a single bond or a (p+q)-valent linking group.

In a case in which the terminal of Z on the side bonded to A is an alkylene chain, the terminal of A on the side bonded to Z is not an alkylene group.

In a case in which Z is a polyalkylene oxide chain, the terminal of A on the side bonded to Z is not an alkylene oxide group.

A only needs to be a group that does not impair the effects of the present disclosure, and examples thereof include an alkylene group optionally having an etheric oxygen atom or a divalent organopolysiloxane residue, a carbon atom, a nitrogen atom, a silicon atom, a divalent to octavalent organopolysiloxane residue, and a group obtained by removing Si(R²)ₙL₃₋ₙ from Formulas (3-1A), (3-1B), and (3-1A-1) to (3-1A-7) described later.

A may be a group (g2-1) to a group (g2-14) described later.

p is an integer from one or more. p is preferably from 1 to 6, more preferably from 2 to 4, from the viewpoint of more excellent water repellency of the surface treatment layer.

In a case in which p is 2 or more, a plurality of [R¹₃Si-(O)ᵣ-Z] may be the same or different from each other.

q is an integer from one or more. q is preferably from 1 to 15, more preferably from 1 to 6, still more preferably from 2 to 4, and particularly preferably 2 or 3 from the viewpoint of more excellent abrasion resistance of the surface treatment layer.

In a case in which q is two or more, a plurality of [Si(R²)ₙL₃₋ₙ] may be the same or different from each other.

The group represented by A(Si(R²)ₙL₃₋ₙ)_{q} in Formula 1 is preferably a Group (3-1A) or a Group (3-1B), and more preferably a Group (3-1 A).

-Q^{a}-X³¹(-Q^{b}-Si(R²)ₙL₃₋ₙ)ₕ(-R³¹)ᵢ ... (3-1A)

-Q^{c}-[CH₂C(R₃²)(-Q^{d}-Si(R²)ₙL₃₋ₙ)]_{y}-R₃³ ... (3-1B)

In Formulas (3-1A) and (3-1B), the definitions of R², L, and n are as described above.

In Formula (3-1A), Q^{a} represents a single bond or a divalent linking group.

In a case in which the terminal of Z on the side bonded to Q^{a} is an alkylene chain, the terminal of A on the side bonded to Z is not an alkylene group.

In a case in which Z is a polyalkylene oxide chain, the terminal of Q^{a} on the side bonded to Z is not an alkylene oxide group.

Examples of the divalent linking group include a divalent hydrocarbon group, a divalent heterocyclic group, -O-, -S-, -SO₂-, -N(R^{d})-, -C(O)-, -Si(R^{a})₂-, and a group obtained by combining the two or more kinds of groups of them.

The divalent hydrocarbon group may be a divalent saturated hydrocarbon group, a divalent aromatic hydrocarbon group, an alkenylene group, or an alkynylene group. The divalent saturated hydrocarbon group may be linear, branched, or cyclic, and examples thereof include an alkylene group. The number of carbon atoms in the alkylene group is preferably from 1 to 30, more preferably from 1 to 20, still more preferably from 4 to 20, and particularly preferably from 5 to 15. The divalent aromatic hydrocarbon group is preferably one having 5 to 20 carbon atoms, and examples thereof include a phenylene group. An alkenylene group having 2 to 20 carbon atoms and an alkynylene group having 2 to 20 carbon atoms may be used.

The R^{a} is an alkyl group (preferably having 1 to 10 carbon atoms) or a phenyl group. The R^{d} is a hydrogen atom or an alkyl group (preferably having 1 to 10 carbon atoms).

Examples of the group in combination of the two or more kinds of groups of them include:
-OC(O)-, -C(O)O-, -C(O)S-, -C(O)N(R^{d})-, -N(R^{d})C(O)-, -N(R^{d})C(O)N(R^{d})-,-N(R^{d})C(O)O-, -OC(O)N(R^{d})-, -SO₂N(R^{d})-, -N(R^{d})SO₂-, an alkylene group having-C(O)N(R^{d})-; an alkylene group having -N(R^{d})C(O)-, an alkylene group having -OC(O)N (R^{d})-, and an alkylene group having an etheric oxygen atom, an alkylene group having -S-, an alkylene group having -OC(O)-, an alkylene group having -C(O)O-, an alkylene group having -C(O)S-, an alkylene group having -N(R^{d})-, an alkylene group having -N(R^{d})C(O)N(R^{d})-, an alkylene group having -SO₂N(R^{d})-, and an alkylene group-Si(R^{a})₂-phenylene group-Si(R^{a})₂.

Particularly, in a case in which the terminal of Z on the side bonded to A is an alkylene chain, Q^{a} is preferably a divalent hydrocarbon group other than an alkylene group, a divalent heterocyclic group, -O-, -S-, -SO₂-, -N(R^{d})-, -C(O)-, -Si(R^{a})₂-, -OC(O)-, -C(O)O-, -C(O)S-,-C(O)N(R^{d})-, -N(R^{d})C(O)-, -N(R^{d})C(O)N(R^{d})-, -N(R^{d})C(O)O-, -OC (O)N(R^{d})-, -SO₂N(R^{d})-,-N(R^{d})SO₂-, an alkylene group having -C(O)N(R^{d})-, an alkylene group having -N(R^{d})C(O)-, an alkylene group having -OC(O)N(R^{d})-, an alkylene group having an etheric oxygen atom, an alkylene group having -S-, an alkylene group having -OC(O)-, an alkylene group having - C(O)O-, an alkylene group having -C(O)S-, an alkylene group having -N(R^{d})-, an alkylene group having -N(R^{d})C(O)N(R^{d})-, or an alkylene group having -SO₂N(R^{d})-, more preferably an alkylene group having -OC(O)-, -C(O)N(R^{d})-, an alkylene group having -OC(O)N(R^{d})-, an alkylene group having an etheric oxygen atom, an alkylene group having -S-, an alkylene group having -C(O)O-, an alkylene group having -C(O)S-, an alkylene group having -N(R^{d})-, or an alkylene group having -N(R^{d})C(O)N(R^{d})-, and still more preferably an alkylene group having -C(O)O- or an alkylene group having -C(O)N(R^{d})-.

In a case in which Z is a polyalkylene oxide chain, Q^{a} is preferably a divalent hydrocarbon group, a divalent heterocyclic group, -SO₂-, -C(O)-, -Si(R^{a})₂-, -C(O)O-, -C(O)S-, -C(O)N(R^{d})-, -SO₂N(R^{d})-, an alkylene group having -C(O)N(R^{d})-, an alkylene group having-C(O)O-, an alkylene group having -SO₂N(R^{d})-, alkylene group-Si(R^{a})₂-phenylene group-Si(R^{a})₂, and more preferably -C(O)-.

In Formula (3-1A), X³¹ represents a single bond, an alkylene group, a carbon atom, a nitrogen atom, a silicon atom, a divalent to octavalent organopolysiloxane residue, or a group having a (h+i+1)-valent ring.

In a case in which the terminal of Z on the side bonded to A is an alkylene chain and Q^{a} is a single bond, the terminal of X³¹ on the side bonded to Z is not an alkylene group.

In addition, in a case in which Z is a polyalkylene oxide chain and Q^{a} is a single bond, the terminal of X³¹ on the side bonded to Z is not a polyalkylene oxide group. In a case other than the above, the terminal of X³¹ may be an alkylene group or an alkylene oxide group.

The above alkylene group may have a -O-, silphenylene skeleton group, a divalent organopolysiloxane residue, or a dialkylsilylene group. The alkylene group may have a plurality of groups selected from the group consisting of a -O-, silphenylene skeleton group, a divalent organopolysiloxane residue, and a dialkylsilylene group.

The number of carbon atoms of the alkylene group represented by X³¹ is preferably from 1 to 20, and more preferably from 1 to 10.

Examples of the divalent to octavalent organopolysiloxane residue include a divalent organopolysiloxane residue and a (w+1)-valent organopolysiloxane residue described later.

In Formula (3-1A), in a case in which X³¹ is a group having a (h+i+1)-valent ring, Q^{a}, (-Q^{b}-Si(R²)ₙL₃₋ₙ), and R³¹ are directly bonded to atoms constituting the ring. However, the ring is a ring other than the organopolysiloxane ring.

The ring in X³¹ may be any of a monocyclic ring, a fused polycyclic ring, a bridged ring, a spiro ring, and an assembled polycyclic ring, and the atom constituting the ring may be a carbocyclic ring composed of only carbon atoms, or may be a heterocyclic ring composed of a hetero atom having a divalent or above and a carbon atom. The bond between atoms constituting the ring may be a single bond or a multiple bond. The ring may be an aromatic ring or a non-aromatic ring.

The monocyclic ring is preferably a 4-membered ring to an 8-membered ring, and more preferably a 5-membered ring or a 6-membered ring. The fused polycyclic ring is preferably a fused polycyclic ring in which two or more rings of 4-membered to 8-membered rings are fused, and more preferably a fused polycyclic ring in which 2 or 3 rings selected from a 5-membered ring and a 6-membered ring are bonded, and a fused polycyclic ring in which one or two rings selected from a 5-membered ring and a 6-membered ring and one 4-membered ring are bonded. The bridged ring is preferably a bridged ring having a 5-membered ring or a 6-membered ring as the largest ring, and the spiro ring is preferably a spiro ring as a component of two of 4-membered to 6-membered rings. The assembled polycyclic ring is preferably an assembled polycyclic ring in which 2 or 3 rings selected from a 5-membered ring and a 6-membered ring are bonded via a single bond, from 1 to 3 carbon atoms, or one heteroatom having a valence of 2 or 3. In the assembled polycyclic ring, any one of Q^{a}, (-Q^{b}-Si(R²)ₙL₃₋ₙ) and R³¹ (in a case in which i = 1 or more) is preferably bonded to each ring.

As the hetero atom constituting the ring, a nitrogen atom, an oxygen atom, and a sulfur atom are preferable, and a nitrogen atom and an oxygen atom are more preferable. The number of the heteroatoms constituting the ring is preferably 3 or less. When the number of the heteroatoms constituting the ring is two or more, those heteroatoms may be different.

The ring for X³¹ is preferably one kind selected from the group consisting of a 3-membered to 8-membered aliphatic rings, a benzene ring, 3-membered to 8-membered heterocyclic rings, a fused ring in which 2 or 3 rings of these rings are fused, a bridged ring having a 5-membered ring or a 6-membered ring as the largest ring, and an assembled polycyclic ring which has the two or more rings of these rings and in which the linking group is a single bond, an alkylene group having 3 or less carbon atoms, an oxygen atom or a sulfur atom, from the viewpoint of easily producing a compound and being further excellent in the abrasion resistance of the surface treatment layer.

Preferred rings are benzene rings, 5- or 6-membered aliphatic rings, 5- or 6-membered heterocycles having a nitrogen atom or an oxygen atom, and fused rings of 5- or 6-membered carbocycles and 4-membered to 6-membered heterocycles.

Specific examples of the ring include the following rings, 1,3-cyclohexadiene ring, 1,4-cyclohexadiene ring, anthracene ring, cyclopropane ring, decahydronaphthalene ring, norbornene ring, norbornadiene ring, furan ring,
pyrrole ring, thiophene ring, pyrazine ring, morpholine ring, aziridine ring, isoquinoline ring, oxazole ring, isoxazole ring, thiazole ring, imidazole ring, pyrazole ring, pyran ring, pyridazine ring, pyrimidine ring, and indene ring. A ring having an oxo group (=O) is also described below.

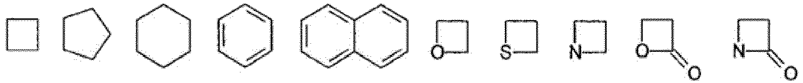

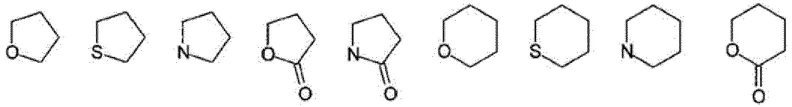

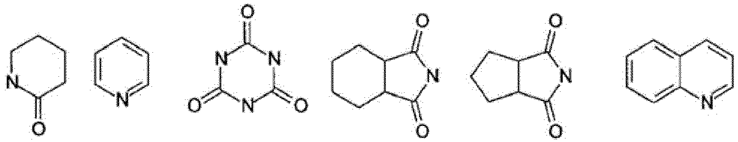

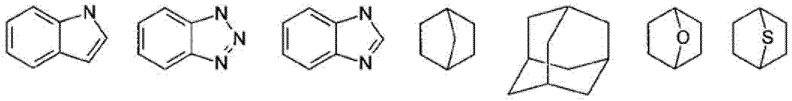

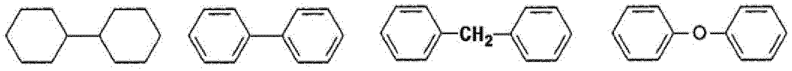

A bond that does not constitute a ring of atoms constituting the ring in X³¹ is a bond bonded to Q^{a}, (-Q^{b}-Si(R²)ₙL₃₋ₙ), or R³¹. When there are remaining bonds, the remaining bonds are bonded to a hydrogen atom or a substituent. Examples of the substituent include a halogen atom, an alkyl group (an etheric oxygen atom may be contained between the carbon-carbon atoms), a cycloalkyl group, an alkenyl group, an allyl group, an alkoxy group, and an oxo group (=O).

In a case in which one of the carbon atoms constituting the ring has two bonds bonded to Q^{a}, (-Q^{b}-Si(R²)ₙL₃₋ₙ) or R³¹, Q^{a} and (-Q^{b}-Si(R²)ₙL₃₋ₙ) may be bonded to one of the carbon atoms, or two (-Q^{b}-Si(R²)ₙL₃₋ₙ) may be bonded to one of the carbon atoms. Q^{a}, and (-Q^{b}-Si(R²)ₙL₃₋ₙ) or R³¹ are preferably bonded to another ring-constituting atom. Each of h pieces of (-Q^{b}-Si(R²)ₙL₃₋ₙ) may be bonded to a separate ring-constituting atom, and two of h pieces of (-Q^{b}-Si(R²)ₙL₃₋ₙ) may be bonded to one ring-constituting carbon atom, and there may be two or more ring-constituting carbon atoms to which two pieces of (-Q^{b}-Si(R²)ₙL₃₋ₙ) are bonded. Each of i pieces of R³¹ may be bonded to a separate ring-constituting atom, two pieces of R³¹ may be bonded to one ring-constituting carbon atom, and further, there may be two or more ring-constituting carbon atoms to which two pieces of R³¹ are bonded.

Among them, from the viewpoint of improving the abrasion resistance of the surface treatment layer, X³¹ is preferably a carbon atom, a nitrogen atom, a silicon atom, quadrivalent to octavalent organopolysiloxane residue, or a group having a (h+i+1)-valent ring, and more preferably a carbon atom.

In Formula (3-1A), Q^{b} represents a single bond or a divalent linking group.

The definition of the divalent linking group is the same as the definition described in Q^{a} described above.

In a case in which the terminal of Z on the side bonded to A is an alkylene chain and Q^{a} and X³¹ have a single bond, the terminal of Q^{b} on the side bonded to Z is not an alkylene group.

In a case in which Z is a polyalkylene oxide chain and Q^{a} and X³¹ have a single bond, the terminal of Q^{b} on the side bonded to Z is not an alkylene oxide group. In a case other than the above, the terminal of Q^{b} may be an alkylene group or an alkylene oxide group.

Among them, Q^{b} is preferably an alkylene group which may have an etheric oxygen atom. The number of carbon atoms in the alkylene group is preferably from 1 to 30, more preferably from 1 to 20, still more preferably from 2 to 20, and may be from 2 to 10, from 2 to 6, or from 2 to 5. Examples thereof include 2, 3, 8, 9, and 11. The number of carbon atoms may be from 1 to 10.

In Formula (3-1A), R³¹ is a hydrogen atom, a hydroxyl group, or an alkyl group.

The number of carbon atoms in the alkyl group is preferably from 1 to 5, more preferably from 1 to 3, and still more preferably 1.

When X³¹ is a single bond or an alkylene group, h is 1, and i is 0;
when X³¹ is a nitrogen atom, h is an integer from 1 to 2, i is an integer from 0 to 1, and h + i = 2 is satisfied;
when X³¹ is a carbon atom or a silicon atom, h is an integer from 1 to 3, i is an integer from 0 to 2, and h + i = 3 is satisfied; and
when X³¹ is a divalent to octavalent organopolysiloxane residue, h is an integer from 1 to 7, i is an integer from 0 to 6, and h + i = 1 to 7 is satisfied.

When X³¹ is a group having a (h + i + 1)-valent ring, h is an integer from 1 to 7, i is an integer from 0 to 6, and h + i = 1 to 7 is satisfied.

In a case in which there are two or more pieces of (-Q^{b}-Si(R)ₙL₃₋ₙ), two or more pieces of (-Q^{b}-Si(R)ₙL₃₋ₙ) may be the same or different from each other. When there are two or more pieces of R³¹, two or more pieces of (-R³¹) may be the same or different from each other.

Among them, i is preferably 0 from the viewpoint of improving the abrasion resistance of the surface treatment layer.

In Formula (3-1A), in a case in which Q^{a}, X³¹, and Q^{b} have a single bond, [Si(R²)ₙL₃₋ₙ] is directly bonded to Z, and Z is an alkylene chain.

In Formula (3-1B), Q^{c} represents a single bond or a divalent linking group.

In a case in which the terminal of Z on the side bonded to A is an alkylene chain, the terminal of Q^{c} on the side bonded to Z is not an alkylene group.

In a case in which Z is a polyalkylene oxide chain, the terminal of Q^{c} on the side bonded to Z is not an alkylene oxide group.

The definition of the divalent linking group is the same as the definition described in Q^{a} described above.

In Formula (3-1B), R³² is a hydrogen atom or an alkyl group having 1 to 10 carbon atoms, and is preferably a hydrogen atom from the viewpoint of easily producing a compound.

The alkyl group is preferably a methyl group.

In Formula (3-1B), Q^{d} is a single bond or an alkylene group. The number of carbon atoms in the alkylene group is preferably from 1 to 10, and more preferably from 1 to 6. Q^{d} is preferably a single bond or CH₂- from the viewpoint of easily producing a compound.

In Formula (3-1B), R³³ is a hydrogen atom or a halogen atom, and is preferably a hydrogen atom from the viewpoint of easily producing a compound.

y is an integer from 1 to 10 and preferably an integer from 1 to 6.

Two or more pieces of [CH₂C(R³²)(-Q^{d}-Si(R²)ₙL₃₋ₙ)] may be the same or different from each other.

As the Group (3-1A), Groups (3-1A-1) to (3-1A-7) are preferable.

-(X³²)ₛ₁-Q^{b1}-Si(R²)ₙL₃₋ₙ ... (3-1A-1)

-(X³³)ₛ₂-Q^{a2}-N[-Q^{b2}-Si(R²)ₙL₃₋ₙ]₂ ... (3-1A-2)

-Q^{a3}-Si(R^{g})[-Q^{b3}-Si(R²)ₙL₃₋ₙ]₂ ... (3-1A-3)

-[Q^{c}]ₛ₄-Q^{a4}-(O)ₜ₄-C[-(O)ᵤ₄-Q^{b4}-Si(R²)ₙL₃₋ₙ]_{3-w1}(-R³¹)_{w1} ... (3-1A-4)

-Q^{a5}-Si[-Q^{b5}-Si(R²)ₙL₃₋ₙ]₃ ... (3-1A-5)

-[Q^{e}]ᵥ-Q^{a6}-Z^{a}[-Q^{b6}-Si(R²)ₙL₃₋ₙ]_{w2} ... (3-1A-6)

-[Q^{e}]ₛ₄-Q^{a4}-(O)ₜ₄-Z^{c}[-(O-Q^{b}4)ᵤ₄-Si(R²)ₙL₃₋ₙ]_{w3}(-OH)_{w4} ... (3-1A-7)

In Formulas (3-1A-1) to (3-1A-7), the definitions of R², L, and n are as described above.

In a case in which the terminal of Z on the side bonded to A is an alkylene chain, the terminal of the Groups (3-1A-1) to (3-1A-7) on the side bonded to Z is not an alkylene group.

In a case in which Z is a polyalkylene oxide chain, the terminal of the Groups (3-1A-1) to (3-1A-7) on the side bonded to Z is not an alkylene oxide group.

Among them, the Group (3-1A) is preferably a Group (3-1A-4).

In the Group (3-1A-1), X³² is -O-, -S-, -N(R^{d})-, -C (O)-, -C(O)O-, -C(O)S-, -SO₂N(R^{d})-, -N(R^{d})SO₂-, -N(R^{d})C(O)-, -N(R^{d})C(O)N(R^{d})-, -OC(O)N(R^{d})-, or -C(O)N(R^{d})- (however, N in the formulas binds to Q^{b1}).

The definition of R^{d} is as described above.

s1 is 0 or 1.

Among them, in a case in which the terminal on the side of Z bonded to A is an alkylene chain, X³² is preferably -O-, -S-, -N(R^{d})-, -C(O)-, -C(O)O-, -C(O)S-, -SO₂N(R^{d})-, -N(R^{d})SO₂-, -N(R^{d})C(O)-, -N(R^{d})C(O)N(R^{d})-, -OC(O)N(R^{d})-, or -C(O)N(R^{d})-, more preferably -O-, -S-,-N(R^{d})-, -C(O)O-, -C(O)S-, -N(R^{d})C(O)N(R^{d})-, -OC(O)N(R^{d})- or -C(O)N(R^{d})-, and still more preferably -C(O)O- or -C(O)N(R^{d})-.

In a case in which Z is a polyalkylene oxide chain, X³² is preferably -C(O)O-, -C(O)S-, -SO₂N(R^{d})-, or -C(O)N(R^{d})-, more preferably -C(O)-.

Q^{b1} is a single bond or an alkylene group. The alkylene group may have a -O-, silphenylene skeleton group, or a dialkylsilylene group. The alkylene group may have a plurality of groups selected from the group consisting of a -O-, silphenylene skeleton group, a divalent organopolysiloxane residue, and a dialkylsilylene group.

When the alkylene group has a -O-, silphenylene skeleton group, a divalent organopolysiloxane residue, or a dialkylsilylene group, it is preferable to have these groups between carbon-carbon atoms.

The number of carbon atoms of the alkylene group represented by Q^{b1} is preferably from 1 to 30, more preferably from 1 to 20, still more preferably from 2 to 20, and particularly preferably from 2 to 6. The number of carbon atoms may be from 1 to 10.

In particular, in a case in which the terminal of Z on the side bonded to A is an alkylene chain, s1 is preferably 1, and Q^{b1} is preferably an alkylene group having 2 to 6 carbon atoms.

In a case in which Z is a polyalkylene oxide chain, s1 is preferably 0, and Q^{b1} is preferably an alkylene group having 2 to 6 carbon atoms.

In a case in which the terminal of Z on the side bonded to A is an alkylene chain, specific examples of the Group (3-1A-1) include the following groups. In the following formula, * represents a bonding position with Z.

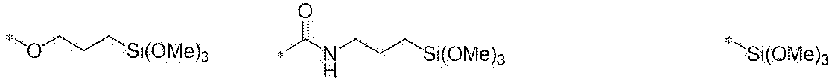

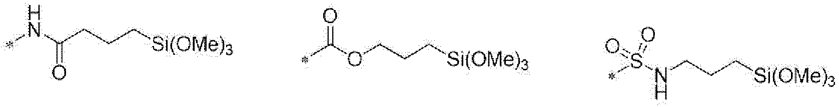

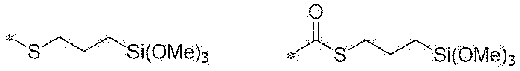

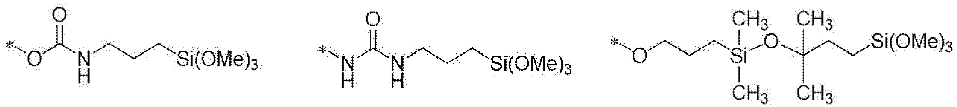

In a case in which Z is a polyalkylene oxide chain, specific examples of the Group (3-1A-1) include the following groups. In the following formula, * represents a bonding position with Z.

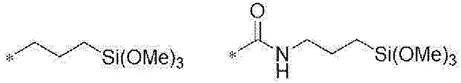

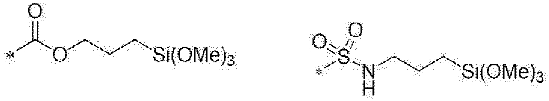

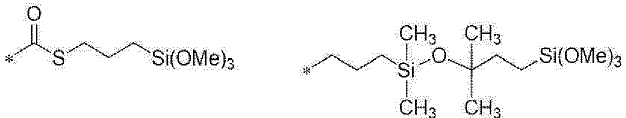

In the Group (3-1A-2), X³³ is -O-, -S-, -N(R^{d})-, -C(O)-, -C(O)O-, -C(O)S-, -SO₂N(R^{d})-, -N(R^{d})SO₂-, -N(R^{d})C(O)-, -N(R^{d})C(O)N(R^{d})-, -OC(O)N(R^{d})-, or -C(O)N(R^{d})-.

The definition of R^{d} is as described above.

s2 is 0 or 1. s2 is preferably 0 from the viewpoint of easily producing a compound.

In particular, in a case in which the terminal on the side of Z bonded to A is an alkylene chain, X³³ is preferably -O-, -S-, -N(R^{d})-, -C(O)-, -C(O)O-, -C(O)S-, -SO₂N(R^{d})-, -N(R^{d})SO₂-, -N(R^{d})C(O)-, -N(R^{d})C(O)N(R^{d})-, -OC(O)N(R^{d})-, or -C(O)N(R^{d})-.

In a case in which Z is a polyalkylene oxide chain, X³³ is preferably -C(O)O-, -C(O)S-, -SO₂N(R^{d})-, or -C(O)N(R^{d})-.

Q^{a2} is a group having a single bond, an alkylene group, -C(O)-, or a group having an etheric oxygen atom, -C(O)-, -C(O)O-, -OC(O)-, -C(O)N (R^{d})-, -N(R^{d})C(O)-,-N(R^{d})C(O)N(R^{d})-, -N(R^{d})C(O)O-, -OC(O)N(R^{d})-, -SO₂N(R^{d})-, -N(R^{d})SO₂-, -C(O)N(R^{d})-, or-NH- between carbon-carbon atoms of an alkylene group having two or more carbon atoms.

The number of carbon atoms of the alkylene group represented by Q^{a2} is preferably from 1 to 20, more preferably from 1 to 10, still more preferably from 1 to 6, and particularly preferably from 1 to 3.

The number of carbon atoms of a group having an etheric oxygen atom, -C(O)-,-C(O)O-, -OC (O)-, -C(O)N(R^{d})-, -N(R^{d})C(O)-, -N(R^{d})C(O)N(R^{d})-, -N(R^{d})C(O)O-,-OC(O)N(R^{d})-, -SO₂N(R^{d})-, -N(R^{d})SO₂-, -C(O)N(R^{d})-, or -NH- between carbon-carbon atoms of the alkylene group having two or more carbon atoms represented by Q^{a2} is preferably from 2 to 10, more preferably from 2 to 6.

Q^{a2} is preferably a single bond from the viewpoint of easily producing a compound.

Q^{b2} is an alkylene group or a group having a divalent organopolysiloxane residue, an etheric oxygen atom, or -NH- between carbon-carbon atoms of an alkylene group having two or more carbon atoms.

The number of carbon atoms in the alkylene group represented by Q^{b2} is preferably from 1 to 30, more preferably from 1 to 20, still more preferably from 2 to 20, and may be from 2 to 10, from 2 to 6. Examples thereof include 2, 3, 8, 9, and 11. The number of carbon atoms may be from 1 to 10.

The number of carbon atoms of a divalent organopolysiloxane residue, an etheric oxygen atom, or a group having -NH- between carbon-carbon atoms of the alkylene group having two or more carbon atoms represented by Q^{b2} is preferably from 2 to 10, and more preferably from 2 to 6.

Q^{b2} is preferably -CH₂CH₂CH₂- or -CH₂CH₂OCH₂CH₂CH₂- from the viewpoint of easily producing a compound (however, the right side is bonded to Si).

Two pieces of [-Q^{b2}-Si(R²)ₙL₃₋ₙ] may be the same or different from each other.

In a case in which the terminal of Z on the side bonded to A is an alkylene chain, specific examples of the Group (3-1A-2) include the following groups. In the following formula, * represents a bonding position with Z. In the formula, α in (CH₂)_{α} bonded to the reactive silyl group is an integer representing the number of methylene groups, and is preferably from 1 to 30, more preferably from 1 to 20, still more preferably from 2 to 20, may be from 2 to 10, or may be from 2 to 6. Examples thereof include 2, 3, 8, 9, and 11. The number of carbon atoms may be from 1 to 10. A plurality of α contained in the same compound may be the same or different from each other, but is preferably the same. For example, the plurality of α contained in the same compound is all 2, 3, 8, 9, and 11. The same applies hereinafter.

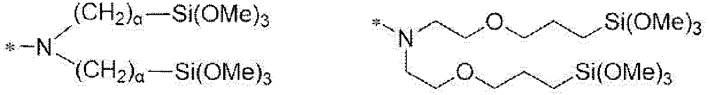

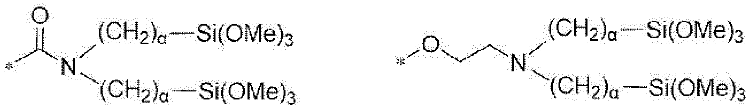

In a case in which Z is a polyalkylene oxide chain, specific examples of the Group (3-1A-2) include the following groups. In the following formula, * represents a bonding position with Z.

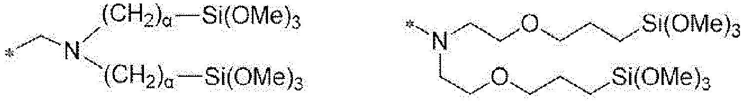

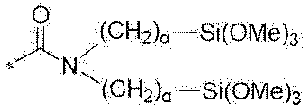

In the Group (3-1A-3), Q^{a3} is a single bond or an alkylene group optionally having an etheric oxygen atom. Q^{a3} is preferably a single bond from the viewpoint of easily producing a compound.

The number of carbon atoms of the alkylene group optionally having an etheric oxygen atom is preferably from 1 to 10, and particularly preferably from 2 to 6.

R^{g} is a hydrogen atom, a hydroxyl group, or an alkyl group.

R^{g} is preferably a hydrogen atom or an alkyl group from the viewpoint of easily producing a compound. The number of carbon atoms in the alkyl group is preferably from 1 to 10, more preferably from 1 to 4, and still more preferably a methyl group.

Q^{b3} is an alkylene group or a group having an etheric oxygen atom or a divalent organopolysiloxane residue between carbon-carbon atoms of the alkylene group having two or more carbon atoms.

The number of carbon atoms in the alkylene group represented by Q^{b3} is preferably from 1 to 30, more preferably from 1 to 20, still more preferably from 2 to 20, and may be from 2 to 10, from 2 to 6. Examples thereof include 2, 3, 8, 9, and 11. The number of carbon atoms may be from 1 to 10.

The number of carbon atoms of the group having an etheric oxygen atom or a divalent organopolysiloxane residue between carbon-carbon atoms of the alkylene group having two or more carbon atoms represented by Q^{b3} is preferably from 2 to 20, more preferably from 2 to 10, and still more preferably from 2 to 6.

Q^{b3} is preferably -CH₂CH₂-, -CH₂CH₂CH₂-, or -CH₂CH₂CH₂CH₂CH₂CH₂CH₂CH₂-from the viewpoint of easily producing a compound.

Two pieces of [-Q^{b3}-Si(R²)ₙL₃₋ₙ] may be the same or different from each other.

In a case in which the terminal of Z on the side bonded to A is an alkylene chain, specific examples of the Group (3-1A-3) include the following groups. In the following formula, * represents a bonding position with Z.

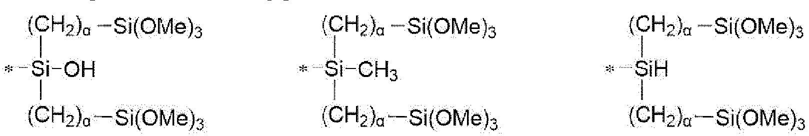

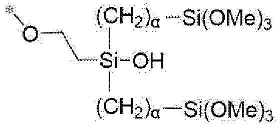

In a case in which Z is a polyalkylene oxide chain, specific examples of the Group (3-1A-3) include the following groups. In the following formula, * represents a bonding position with Z.

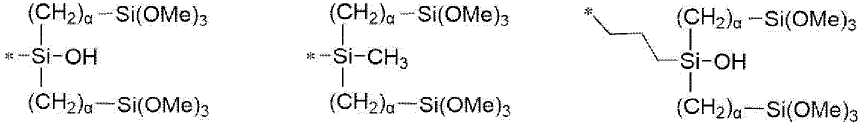

In the Group (3-1A-4), Q^{e} represents -C(O)O-, -SO₂N(R^{d})-, -N(R^{d})SO₂-, -N(R^{d})C(O)-, or -C(O)N(R^{d})-.

The definition of R³¹ is as described above. When w1 is 1 or 2, R³¹ is preferably a hydrogen atom.

s4 is 0 or 1.

Q^{a4} is a single bond or an alkylene group optionally having an etheric oxygen atom.

The number of carbon atoms of the alkylene group optionally having an etheric oxygen atom is preferably from 1 to 20, more preferably from 1 to 10, still more preferably from 1 to 6, and particularly preferably from 1 to 3.

t4 is 0 or 1(however, when Q^{a4} is a single bond, Q^{a4} is 0).

As -Q^{a4}-(O)ₜ₄-, in a case in which s4 is 0, a single bond, -CH₂O-, -CH₂OCH₂-,-CH₂OCH₂CH₂O-, -CH₂OCH₂CH₂OCH₂-, or -CH₂OCH₂CH₂CH₂CH₂OCH₂- is preferable (however, the left side is bonded to (XO)ₘ), and in a case in which s4 is 1, a single bond, -CH₂-, or -CH₂CH₂- is preferable from the viewpoint of easily producing a compound.

Q^{b4} is an alkylene group, and the alkylene group may have -O-, -C(O)N(R^{d})- (the definition of R^{d} is as described above), a silphenylene skeleton group, a divalent organopolysiloxane residue, or a dialkylsilylene group.

When the alkylene group has a -O- or silphenylene skeleton group, the alkylene group preferably has a -O- or silphenylene skeleton group between carbon-carbon atoms. When the alkylene group has -C(O)N(R^{d})-, a dialkylsilylene group, or a divalent organopolysiloxane residue, it is preferable to have these groups between carbon-carbon atoms or at the terminal on the side which is bonded to (O)ᵤ₄.

The number of carbon atoms in the alkylene group represented by Q^{b4} is preferably from 1 to 30, more preferably from 1 to 20, still more preferably from 2 to 20, and may be from 2 to 10, from 2 to 6. Examples thereof include 2, 3, 8, 9, and 11. The number of carbon atoms may be from 1 to 10.

u4 is 0 or 1.

As -(O)ᵤ₄-Q^{b4}-, -CH₂CH₂-, -CH₂CH₂CH₂-, -CH₂OCH₂CH₂CH₂-,-CH₂OCH₂CH₂CH₂CH₂CH₂-, -OCH₂CH₂CH₂-, -OSi(CH₃)₂CH₂CH₂CH₂-,-OSi(CH₃)₂OSi(CH₃)₂CH₂CH₂CH₂-, -CH₂CH₂CH₂Si(CH₃)₂PhSi(CH₃)₂CH₂CH₂- are preferable from the viewpoint of easily producing a compound (however, the right side is bonded to Si).

w1 is an integer from 0 to 2, preferably 0 or 1, and particularly preferably 0.

In a case in which there are two or more pieces of [-(O)ᵤ₄-Q^{b4}-Si(R²)ₙL₃₋ₙ], two or more pieces of [-(O)ᵤ₄-Q^{b4}-Si(R²)ₙL₃₋ₙ] may be the same or different from each other.

When there are two or more pieces of R³¹, two or more pieces of (-R³¹) may be the same or different from each other.

In a case in which the terminal of Z on the side bonded to A is an alkylene chain, specific examples of the Group (3-1A-4) include the following groups. In the following formula, * represents a bonding position with Z.

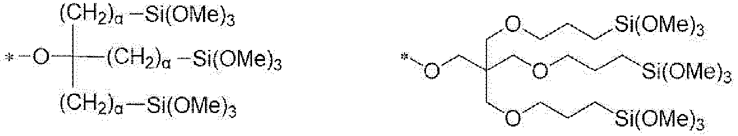

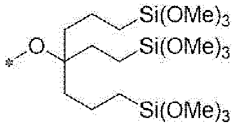

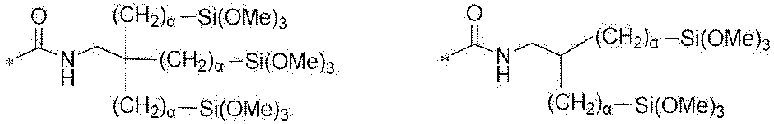

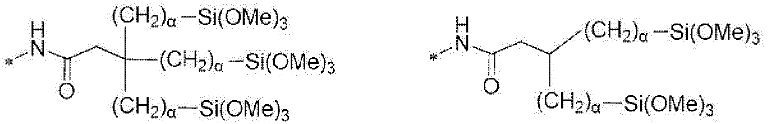

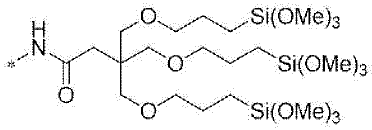

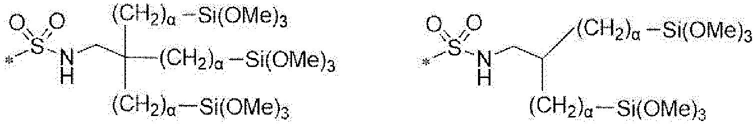

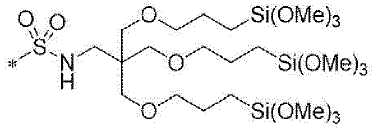

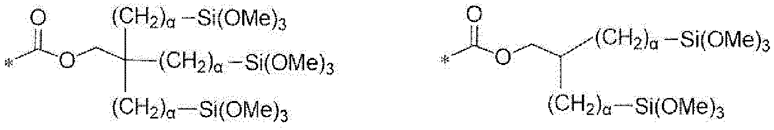

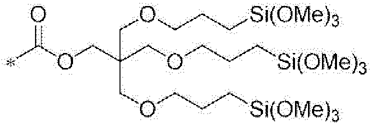

In a case in which Z is a polyalkylene oxide chain, specific examples of the Group (3-1A-4) include the following groups. In the following formula, * represents a bonding position with Z.

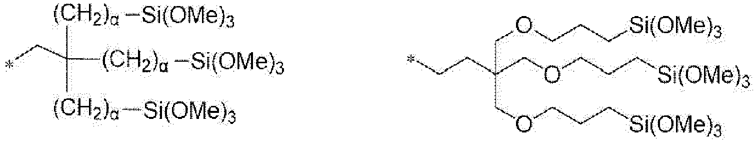

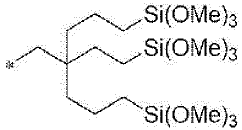

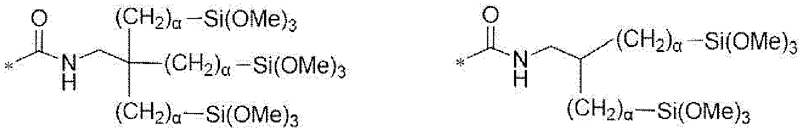

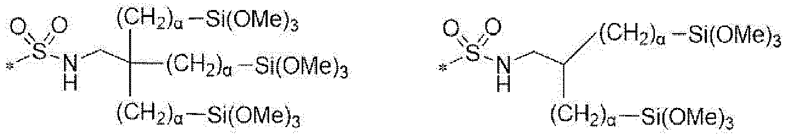

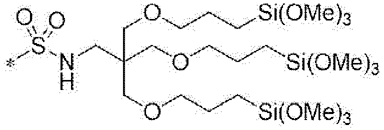

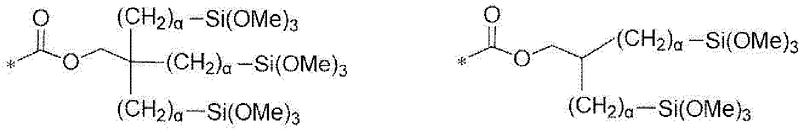

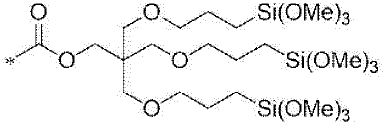

In the Group (3-1A-5), Q^{a5} is an alkylene group optionally having an etheric oxygen atom.

The number of carbon atoms of the alkylene group optionally having an etheric oxygen atom is preferably from 1 to 10, and particularly preferably from 2 to 6.

Q^{a5} is preferably -OCH₂CH₂CH₂-, -OCH₂CH₂OCH₂CH₂CH₂-, -CH₂CH₂-, or-CH₂CH₂CH₂- from the viewpoint of easily producing a compound (however, the right side is bonded to Si).

Q^{b5} is an alkylene group or a group having an etheric oxygen atom or a divalent organopolysiloxane residue between carbon-carbon atoms of the alkylene group having two or more carbon atoms.

The number of carbon atoms in the alkylene group represented by Q^{b5} is preferably from 1 to 30, more preferably from 1 to 20, still more preferably from 2 to 20, and may be from 2 to 10, from 2 to 6. Examples thereof include 2, 3, 8, 9, and 11. The number of carbon atoms may be from 1 to 10.

The number of carbon atoms of the group having an etheric oxygen atom or a divalent organopolysiloxane residue between carbon atoms of the alkylene group having two or more carbon atoms represented by Q^{b5} is preferably from 2 to 20, more preferably from 2 to 10, still more preferably from 2 to 6.

Q^{b5} is preferably -CH₂CH₂CH₂- or -CH₂CH₂OCH₂CH₂CH₂- from the viewpoint of easily producing a compound (however, the right side is bonded to Si(R²)ₙL₃₋ₙ).

Three pieces of [-Q^{b5}-Si(R²)ₙL₃₋ₙ] may be the same or different from each other.

In a case in which the terminal of Z on the side bonded to A is an alkylene chain, specific examples of the Group (3-1A-5) include the following groups. In the following formula, * represents a bonding position with Z.

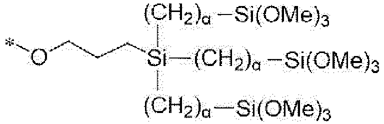

In a case in which Z is a polyalkylene oxide chain, specific examples of the Group (3-1A-5) include the following groups. In the following formula, * represents a bonding position with Z.

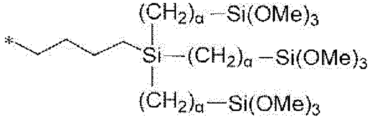

The definition of Q^{e} in Group (3-1A-6) is as defined in the Group (3-1A-4).

v is 0 or 1.

Q^{a6} is an alkylene group optionally having an etheric oxygen atom.

The number of carbon atoms of the alkylene group optionally having an etheric oxygen atom is preferably from 1 to 10, and particularly preferably from 2 to 6.

Q^{a6} is preferably -CH₂OCH₂CH₂CH₂-, -CH₂OCH₂CH₂OCH₂CH₂CH₂-, -CH₂CH₂-, or -CH₂CH₂CH₂- from the viewpoint of easily producing a compound (however, the right side is bonded to Z^{a}).

Z^{a} is a (w2+1)-valent organopolysiloxane residue or a (w2+1)-valent group having an alkylene group between the organopolysiloxane residue and the organopolysiloxane residue.

w2 is an integer from 2 to 7.

Examples of the (w2+1)-valent organopolysiloxane residue and the (w2+1)-valent group having an alkylene group between the organopolysiloxane residue and the organopolysiloxane residue include the following groups. However, R^{a} in the following formula is as described above. * indicates the binding site.

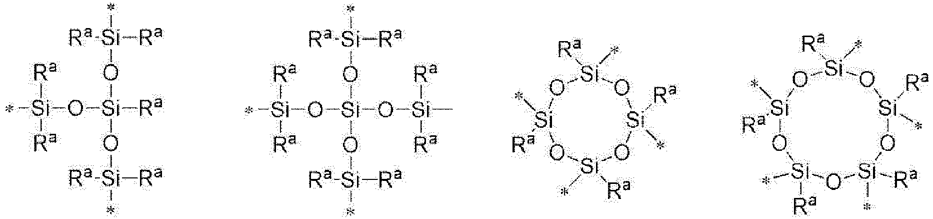

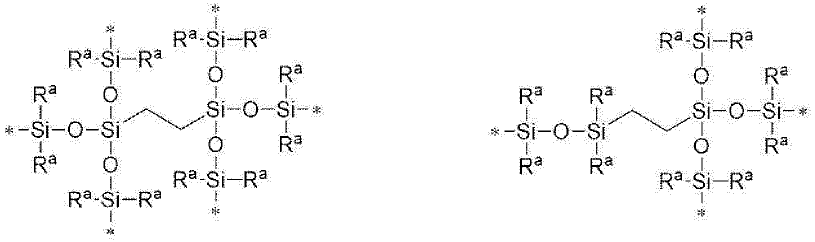

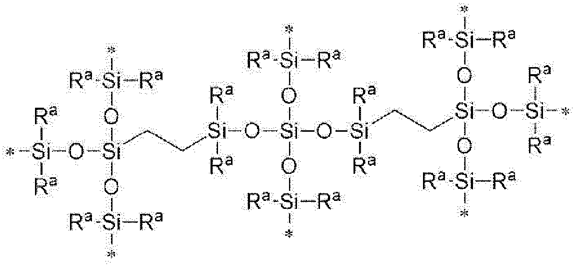

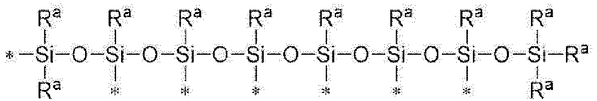

Q^{b6} is an alkylene group or a group having an etheric oxygen atom or a divalent organopolysiloxane residue between carbon-carbon atoms of the alkylene group having two or more carbon atoms.

The number of carbon atoms in the alkylene group represented by Q^{b6} is preferably from 1 to 30, more preferably from 1 to 20, still more preferably from 2 to 20, and may be from 2 to 10, from 2 to 6. Examples thereof include 2, 3, 8, 9, and 11. The number of carbon atoms may be from 1 to 10.

The number of carbon atoms of the group having an etheric oxygen atom or a divalent organopolysiloxane residue between carbon-carbon atoms of the alkylene group having two or more carbon atoms represented by Q^{b6} is preferably from 2 to 20, more preferably from 2 to 10, and still more preferably from 2 to 6.

Q^{b6} is preferably -CH₂CH₂- or -CH₂CH₂CH₂- from the viewpoint of easily producing a compound.

w2 pieces of [-Q^{b6}-Si(R²)ₙL₃₋ₙ] may be the same or different from each other.

Specific examples of the Group (3-1A-6) include the following groups. In the following formula, * represents a bonding position with Z.

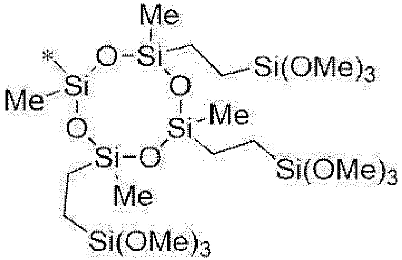

In the Group (3-1A-7), Z^{c} is a (w3+w4+1)-valent hydrocarbon group.

w3 is an integer of 4 or more.

w4 is an integer of 0 or more.

The definitions and preferred ranges of Q^{e}, s4, Q^{a4}, t4, Q^{b4}, and u4 are the same as the definitions of the respective reference numerals in the Group (3-1A-4).

Z^{c} may be composed of a hydrocarbon chain, may have an etheric oxygen atom between carbon-carbon atoms of the hydrocarbon chain, and is preferably composed of a hydrocarbon chain.

The valence of Z^{c} is preferably from pentavalent to 20 valence, more preferably from pentavalent to decavalent, still more preferably from pentavalent to octavalent, and particularly preferably from pentavalent to hexavalent.

The number of carbon atoms in Z^{c} is preferably from 3 to 50, more preferably from 4 to 40, and still more preferably from 5 to 30.

w3 is preferably from 4 to 20, more preferably from 4 to 16, still more preferably from 4 to 8, and particularly preferably from 4 to 5.

w4 is preferably from 0 to 10, more preferably from 0 to 8, still more preferably from 0 to 6, particularly preferably from 0 to 3, and most preferably from 0 to 1.

In a case in which there are two or more pieces of [-(O-Q^{b4})ᵤ₄-Si(R²)ₙL₃₋ₙ], two or more pieces of [-(O-Q^{b4})ᵤ₄-Si(R²)ₙL₃₋ₙ] may be the same or different from each other.

In a case in which the terminal of Z on the side of A is an alkylene chain, specific examples of the Group (3-1A-7) include the following groups. In the following formula, * represents a bonding position with Z.

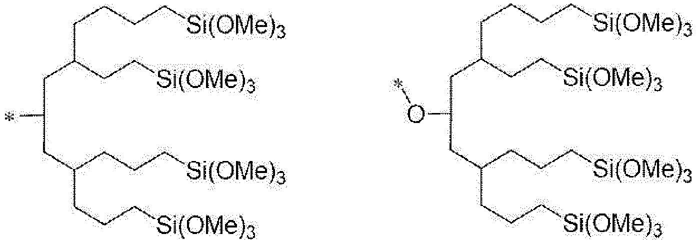

In a case in which the terminal of Z on the side of A is a polyalkylene oxide chain, specific examples of the Group (3-1A-7) include the following groups. In the following formula, * represents a bonding position with Z.

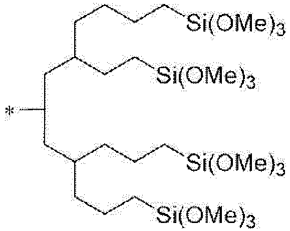

Ain Formula 1 may be a Group (g2-1) (where, j 1 = d1 + d3 and g1 = d2 + d4), a Group (g2-2) (where, j 1 = e1 and g1 = e2), a Group (g2-3) (where, j 1 = 1 and g1 = 2), a Group (g2-4) (where, j 1 = h1 and g1 = h2), a Group (g2-5) (where, j 1 = i1 and g1 = i2), a Group (g2-6) (where, j 1 = 1 and g1 = 1), or a Group (g2-7) (where j 1 = 1 and g1 = i3).

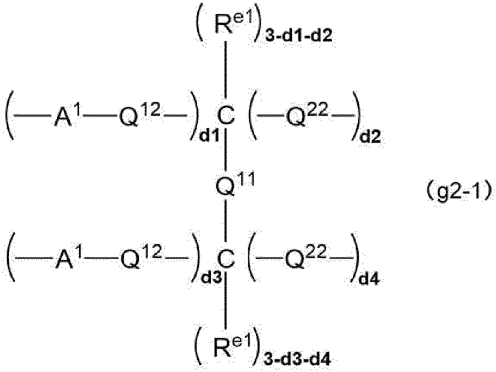

(-A¹-Q¹²-)ₑ₁C(R^{e2} )₄₋ₑ₁₋ₑ₂(-Q²²-)ₑ₂ ... (g2-2)

-A¹-Q¹³-N(-Q²³-)₂ ... (g2-3)

(-A¹-Q¹⁴-)ₕ₁Z¹(-Q²⁴-)ₕ₂ ... (g2-4)

(-A¹-Q¹⁵-)ᵢ₁Si(R^{e3})₄₋ᵢ₁₋ᵢ₂(-Q²⁵-)ᵢ₂ ... (g2-5)

-A¹-Q²⁶- (g2-6)

-A¹-Q¹²-CH(-Q²²-)-Si(R^{e3})₃₋ᵢ₃(-Q²⁵-)ᵢ₃ ... (g2-7)

In Formulas (g2-1) to (g2-7), the A¹ side is bonded to Z, and the Q²², Q²³, Q²⁴, Q²⁵, or Q²⁶ side is bonded to [-Si(R²)ₙL₃₋ₙ].

In a case in which the terminal of Z on the side bonded to A is an alkylene chain, the terminal of A¹ on the side bonded to Z is not an alkylene group.

In a case in which Z is a polyalkylene oxide chain, the terminal of A¹ on the side bonded to Z is not an alkylene oxide group.

A¹ is a single bond, -C(O)NR⁶-, -C(O)-, -OC(O)O-, -NHC(O)O-, -NHC(O)NR⁶-, -O-, or SO₂NR⁶-.

Q¹¹ is a single bond, -O-, an alkylene group, or a group having -C(O)NR⁶-, -C(O)-, - NR⁶-, or O- between carbon-carbon atoms of an alkylene group having two or more carbon atoms.

Q¹² is a single bond, an alkylene group, or a group having -C(O)NR⁶-, -C(O)-, -NR⁶-, or O- between carbon-carbon atoms of an alkylene group having two or more carbon atoms, and when A has two or more pieces of Q¹², two or more pieces of Q¹² may be the same or different from each other.

Q¹³ is a single bond (where, A¹ is -C(O)-), an alkylene group, a group having-C(O)NR⁶-, -C(O)-, -NR⁶- or O- between carbon-carbon atoms of an alkylene group having two or more carbon atoms, or a group having -C(O)- at an N-side terminal of an alkylene group.

Q¹⁴ is Q¹² when the atom in Z¹ to which Q¹⁴ is bonded is a carbon atom, Q¹³ when the atom in Z¹ to which Q¹⁴ is bonded is a nitrogen atom, and when A² has two or more pieces of Q¹⁴, two or more pieces of Q¹⁴ may be the same or different from each other.

Q¹⁵ is an alkylene group, or a group having -C(O)NR⁶-, -C(O)-, -NR⁶-, or O- between carbon-carbon atoms of an alkylene group having two or more carbon atoms, and when A has two or more pieces of Q¹⁵, the two or more Q¹⁵ may be the same or different from each other.

Q²² is an alkylene group, a group having -C(O)NR⁶-, -C(O)-, -NR⁶-, or O- between carbon-carbon atoms of an alkylene group having two or more carbon atoms, a group having-C(O)NR⁶-, -C(O)-, -NR⁶-, or O- at a terminal of the alkylene group on a side which is not connected to Si, or a group having -C(O)NR⁶-, -C(O)-, -NR⁶-, or O- between carbon-carbon atoms of an alkylene group having two or more carbon atoms and having -C(O)NR⁶-, -C(O)-, -NR⁶-, or O- at a terminal on a side which is not connected to Si, and when A has two or more pieces of Q²², two or more pieces of Q²² may be the same or different from each other.

Q²³ is an alkylene group or a group having -C(O)NR⁶-, -C(O)-, -NR⁶- or O- between carbon-carbon atoms of an alkylene group having two or more carbon atoms, and two pieces of Q²³ may be the same or different from each other.

Q¹⁴ is Q²² when the atom in Z¹ to which Q¹⁴ is bonded is a carbon atom, Q²³ when the atom in Z¹ to which Q¹⁴ is bonded is a nitrogen atom, and when A has two or more pieces of Q²⁴, two or more pieces of Q²⁴ may be the same or different from each other.

Q²⁵ is an alkylene group, or a group having -C(O)NR⁶-, -C(O)-, -NR⁶-, or O- between carbon-carbon atoms of an alkylene group having two or more carbon atoms, and when A has two or more pieces of Q²⁵, two or more pieces of Q²⁵ may be the same or different from each other.

Q²⁶ is an alkylene group, or a group having -C(O)NR⁶-, -C(O)-, -NR⁶-, or O- between carbon-carbon atoms of an alkylene group having two or more carbon atoms.

In a case in which Q²², Q²³, Q²⁴, Q²⁵, and Q²⁶ are alkylene groups, the number of carbon atoms is preferably from 1 to 20, more preferably from 1 to 10, and still more preferably from 1 to 6.

Z¹ is a group having a (h1+h2)-valent ring structure having a carbon atom or a nitrogen atom to which Q¹⁴ is directly bonded and having a carbon atom or nitrogen atom to which Q²⁴ is directly bonded.

R^{e1} is a hydrogen atom or an alkyl group, and when A has two or more pieces of R^{e1}, the two or more pieces of R^{e1} may be the same or different from each other.

R^{e2} is a hydrogen atom, a hydroxyl group, an alkyl group, or an acyloxy group.

R^{e3} is an alkyl group. R⁶ is a hydrogen atom, an alkyl group having 1 to 6 carbon atoms, or a phenyl group.
d1 is an integer from 0 to 3, and is preferably 1 or 2.
d2 is an integer from 0 to 3, and is preferably 1 or 2.
d1+d2 is an integer from 1 to 3.
d3 is an integer from 0 to 3, and is preferably 0 or 1.
d4 is an integer from 0 to 3, and is preferably 2 or 3.
d3+d4 is an integer from 1 to 3.
d1+d3 is an integer from 1 to 5, and is preferably 1 or 2.
d2+d4 is an integer from 1 to 5, and is preferably 4 or 5.
e1+e2 is 3 or 4.
e1 is an integer from 1 to 3, and is preferably 1 or 2.
e2 is an integer from 1 to 3, and is preferably 2 or 3.
h1 is an integer of 1 or more, and is preferably 1 or 2.
h2 is an integer of 1 or more, and is preferably 2 or 3.
i1+i2 is 3 or 4.
i1 is an integer from 1 to 3, and is preferably 1 or 2.
i2 is an integer from 1 to 3, and is preferably 2 or 3.
i3 is 2 or 3.

The number of carbon atoms in the alkylene group of Q¹¹, Q¹², Q¹³, Q¹⁴, Q¹⁵, Q²², Q²³, Q²⁴, Q²⁵, and Q²⁶ is preferably from 1 to 30, more preferably from 1 to 20, still more preferably from 2 to 20, may be from 2 to 10, or may be from 2 to 6 from the viewpoint of easily producing a compound and being further excellent in abrasion resistance of the surface treatment layer. Examples thereof include 2, 3, 8, 9, and 11. The number of carbon atoms may be from 1 to 10, from 1 to 6, or from 1 to 4. However, the lower limit value of the number of carbon atoms of the alkylene group is 2 in the case of having a specific bond between carbon-carbon atoms.

Examples of the ring structure in Z¹ include the ring structures described above, and preferred forms are also the same. Q¹⁴ and Q²⁴ are directly bonded to the ring structure in Z¹, and thus, for example, there is no such case where an alkylene group is linked to the ring structure and Q¹⁴ and Q²⁴ are linked to the alkylene group.

The number of carbon atoms in the alkyl group of R^{e1}, R^{e2}, or R^{e3} is preferably from 1 to 6, more preferably from 1 to 3, and particularly preferably from 1 to 2 from the viewpoint of easily producing a compound.

The number of carbon atoms in the alkyl group moiety of the acyloxy group of R^{e2} is preferably from 1 to 6, more preferably from 1 to 3, and particularly preferably from 1 to 2 from the viewpoint of easily producing a compound.

h1 is preferably from 1 to 6, more preferably from 1 to 4, still more preferably 1 or 2, and particularly preferably 1 from the viewpoint of easily producing a compound and being further excellent in abrasion resistance of the surface treatment layer.

h2 is preferably from 2 to 6, more preferably from 2 to 4, and particularly preferably 2 or 3 from the viewpoint of easily producing a compound and being further excellent in abrasion resistance of the surface treatment layer.

Other forms of A include a Group (g2-8) (where, j 1 = d1 + d3, and g1 = d2 × k3 + d4 × k3), a Group (g2-9) (where, j 1 = e1 and g1 = e2 × k3), a Group (g2-10) (where, j 1 = 1 and g1 = 2 × k3), a Group (g2-1 1) (where, j 1 = h1 and g1 = h2 × k3), a Group (g2-12) (where, j 1 = i1 and g1 = i2 × k3), a Group (g2-13) (where, j 1 = 1 and g1 = k3), or a Group (g2-14) (where, j 1 = 1 and g1 = i3 × k3).

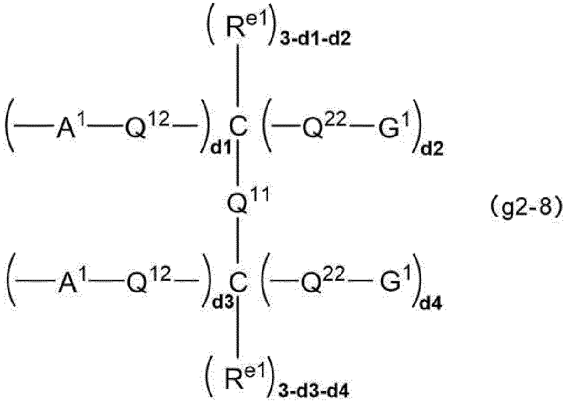

(-A¹-Q¹²-)ₑ₁C(R^{e2})₄₋ₑ₁₋ₑ₂(-Q²²-G¹)ₑ₂ ... (g2-9)

-A¹-Q¹³-N(-Q²³-G¹)₂ ... (g2-10)

(-A¹-Q¹⁴-)ₕ₁Z¹(-Q²⁴-G¹)ₕ₂ ... (g2-11)

(-A¹-Q¹⁵-)₁₁Si(R^{e3})₄₋ᵢ₁₋ᵢ₂(-Q²⁵-G¹)ᵢ₂ ... (g2-12)

-A¹-Q²⁶-G¹ ... (g2-13)

-A¹-Q¹²-CH(-Q²²-G¹)-Si(R^{e3})₃₋ᵢ₃(-Q²⁵-G¹)ᵢ₃ ... (g2-14)

In Formulas (g2-8) to (g2-14), the A¹ side is bonded to Z, and the G¹ side is bonded to [-Si(R²)ₙL₃₋ₙ].

In a case in which the terminal of Z on the side bonded to A is an alkylene chain, the terminal of A¹ on the side bonded to Z is not an alkylene group.

In a case in which Z is a polyalkylene oxide chain, the terminal of A¹ on the side bonded to Z is not an alkylene oxide group.

G¹ is the following Group (g3), and two or more pieces of G¹ of A may be the same or different from each other. The reference numerals other than G¹ are the same as the reference numerals in Formulas (g2-1) to (g2-7).

-Si(R⁸)₃₋ₖ₃(-Q³-)ₖ₃ ... (g3)

In the Group (g3), the Si side is connected to Q²², Q²³, Q²⁴, Q²⁵, and Q²⁶, and the Q³ side is connected to [-Si(R²)ₙL₃₋ₙ]. R⁸ is an alkyl group. Q³ is an alkylene group, a group having -C(O)NR⁶-, -C(O)-, -NR⁶- or -O- between carbon-carbon atoms of an alkylene group having two or more carbon atoms, or (OSi(R⁹)₂)ₚ-O-, and two or more pieces of Q³ may be the same or different from each other. k3 is 2 or 3. R⁶ is a hydrogen atom, an alkyl group having 1 to 6 carbon atoms, or a phenyl group. R⁹ is an alkyl group, a phenyl group, or an alkoxy group, and two pieces of R⁹ may be the same or different from each other. p is an integer from 0 to 5, and when p is two or more, two or more (OSi(R⁹)₂) may be the same or different from each other.

The number of carbon atoms in the alkylene group of Q³ is preferably from 1 to 30, more preferably from 1 to 20, still more preferably from 2 to 20, and may be from 2 to 10 or from 2 to 6 from the viewpoint of easily producing a compound and being further excellent in abrasion resistance of the surface treatment layer. Examples thereof include 2, 3, 8, 9, and 11. The number of carbon atoms may be from 1 to 10, from 1 to 6, or from 1 to 4. However, the lower limit value of the number of carbon atoms of the alkylene group is 2 in the case of having a specific bond between carbon-carbon atoms.

The number of carbon atoms in the alkyl group of R⁸ is preferably from 1 to 6, more preferably from 1 to 3, and still more preferably from 1 to 2 from the viewpoint of easily producing a compound.

The number of carbon atoms in the alkyl group of R⁹ is preferably from 1 to 6, more preferably from 1 to 3, and still more preferably from 1 to 2 from the viewpoint of easily producing a compound.

The number of carbon atoms in the alkoxy group of R⁹ is preferably from 1 to 6, more preferably from 1 to 3, and particularly preferably from 1 to 2 from the viewpoint of being excellent in storage stability of the compound.

p is preferably 0 or 1.

Examples of the compound of the present disclosure include a compound of the following formula. The compound of the following formula is preferable from the viewpoint of easy industrial production, easy handling, and being further excellent in water repellency and abrasion resistance of the surface treatment layer. R^{t} in the compound of the following Formula is the same as [R¹₃Si-(O)ᵣ-Z] in Formula 1 described above, and a preferable form is also the same.

In a case in which the terminal of Z on the side bonded to A is an alkylene chain, examples of the compound in which A in Formula 1 is a Group (g2-1) include a compound of the following Formula.

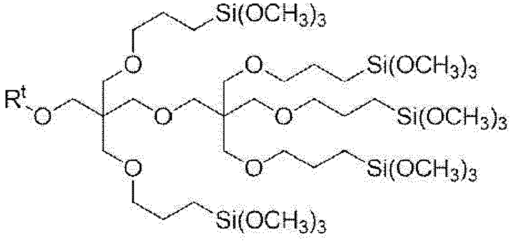

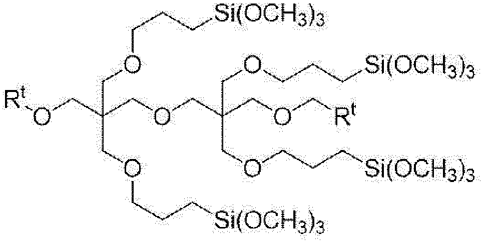

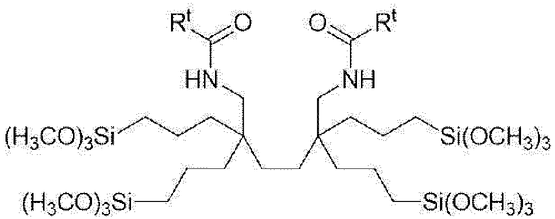

In a case in which Z is a polyalkylene oxide chain, examples of the compound in which A in Formula 1 is a Group (g2-1) include a compound of the following Formula.

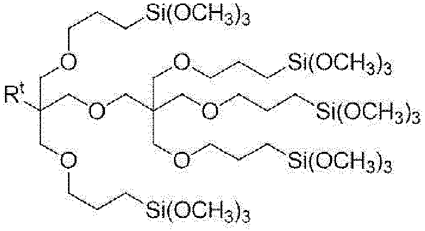

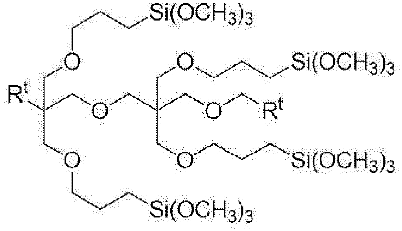

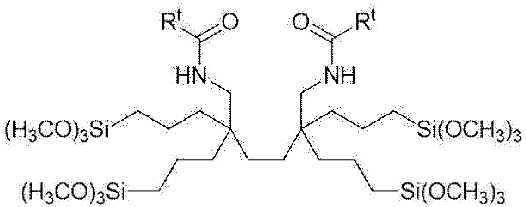

In a case in which the terminal of Z on the side bonded to A is an alkylene chain, examples of the compound in which A in Formula 1 is a Group (g2-2) include a compound of the following Formula. In the following Formula, Ak means an alkyl group (for example, an alkyl group having 1 to 15 carbon atoms).

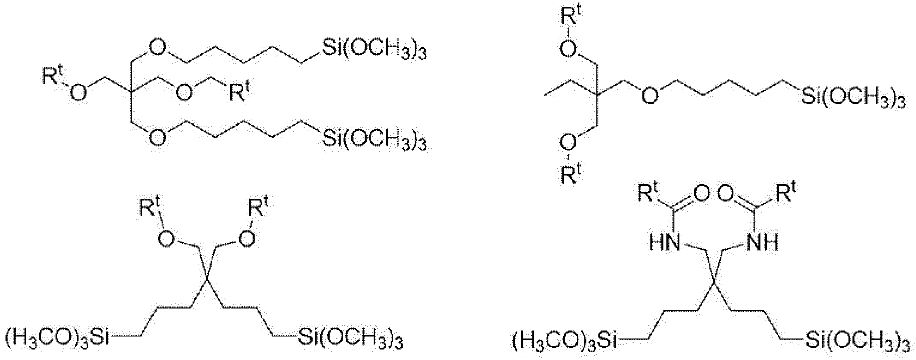

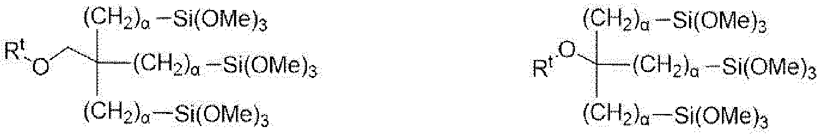

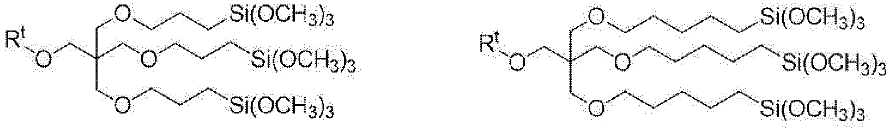

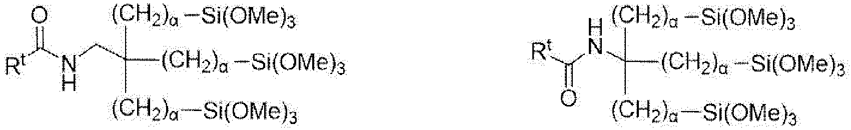

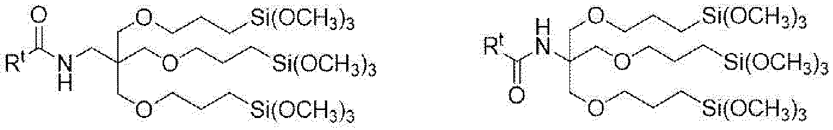

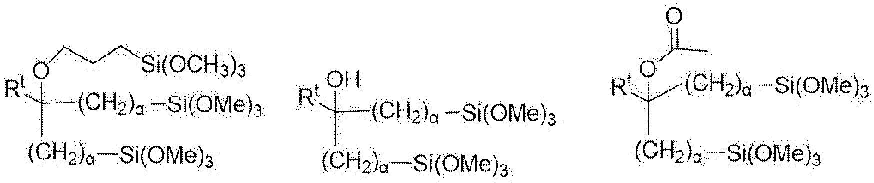

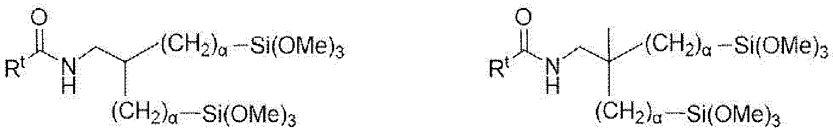

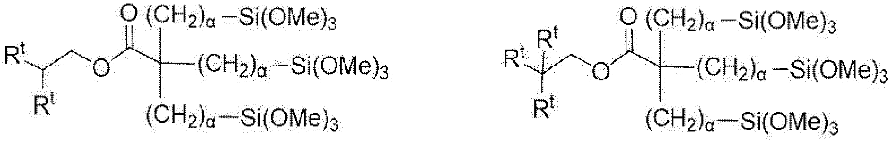

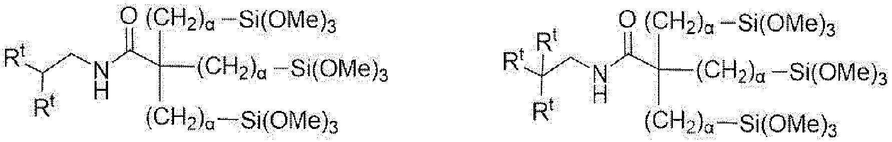

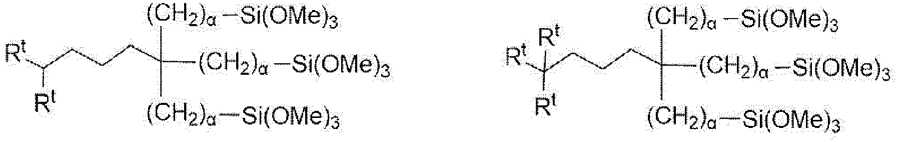

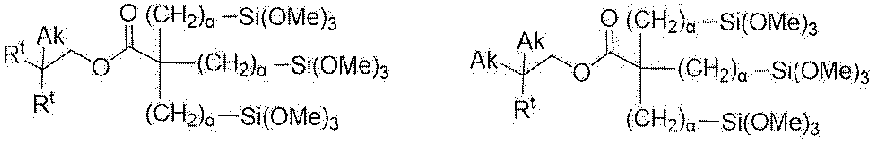

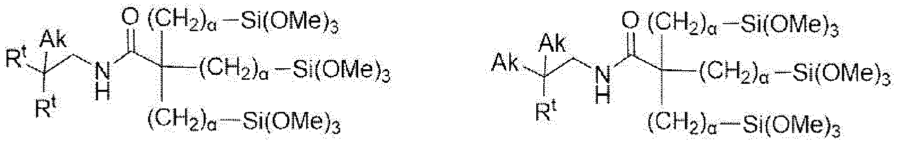

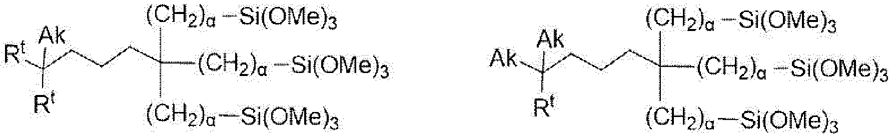

In a case in which Z is a polyalkylene oxide chain, examples of the compound in which A in Formula 1 is a Group (g2-2) include a compound of the following Formula.

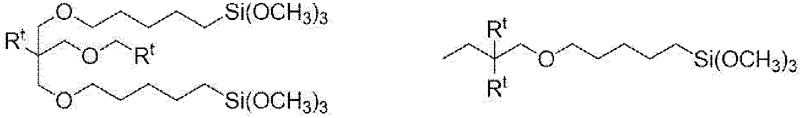

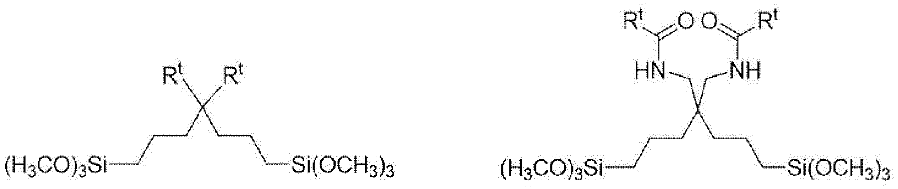

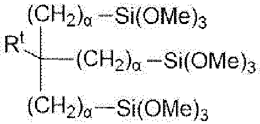

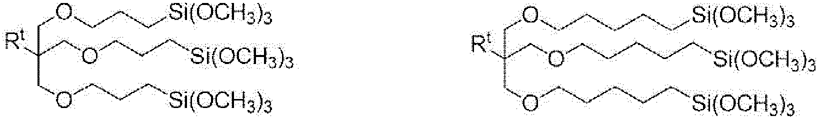

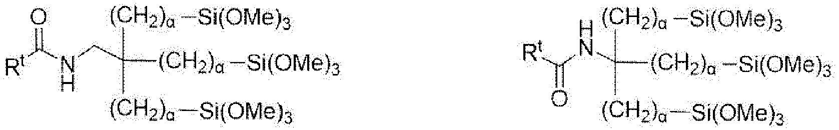

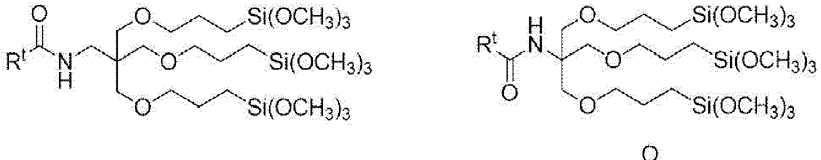

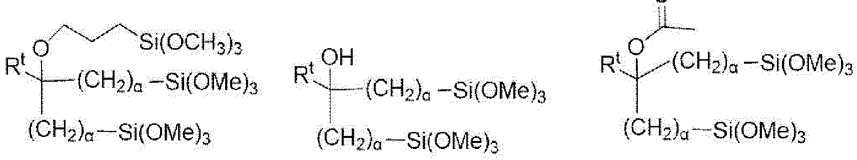

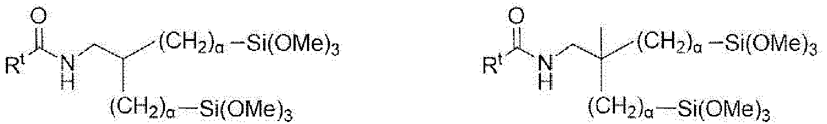

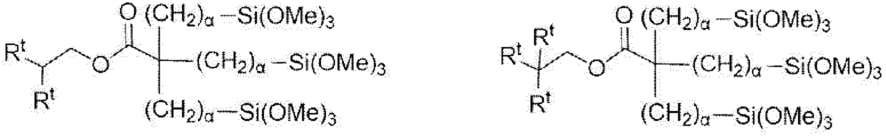

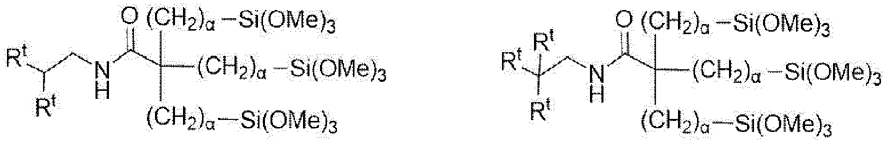

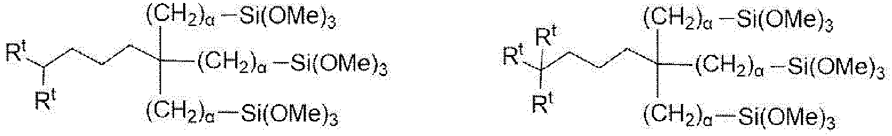

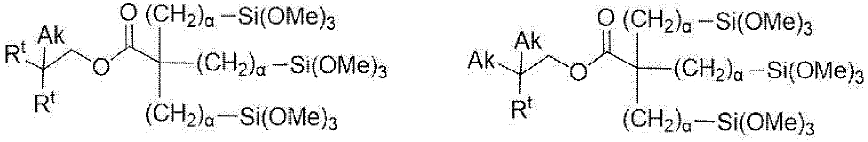

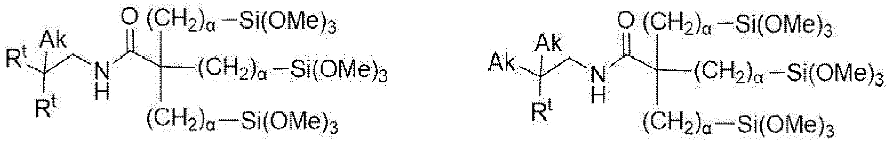

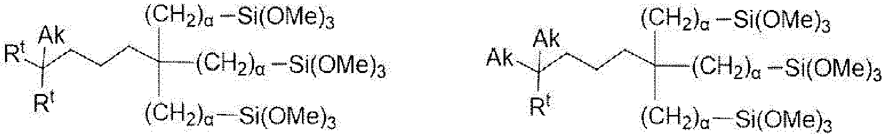

In a case in which the terminal of Z on the side bonded to A is an alkylene chain, examples of the compound in which A in Formula 1 is a Group (g2-3) include a compound of the following Formula.

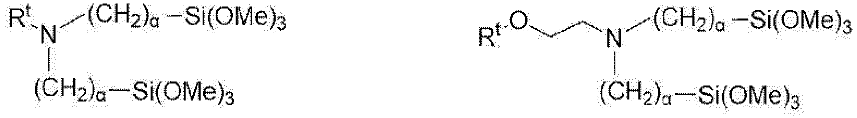

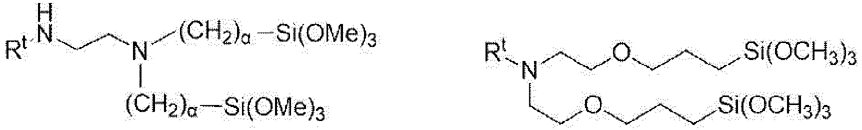

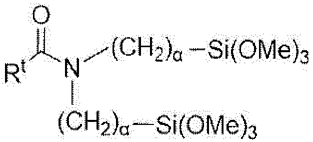

In a case in which Z is a polyalkylene oxide chain, examples of the compound in which A in Formula 1 is a Group (g2-3) include a compound of the following Formula.

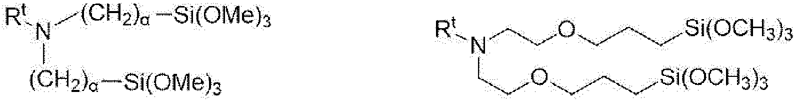

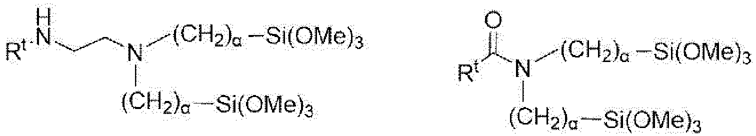

In a case in which the terminal of Z on the side bonded to A is an alkylene chain, examples of the compound in which A in Formula 1 is a Group (g2-4) include a compound of the following Formula.

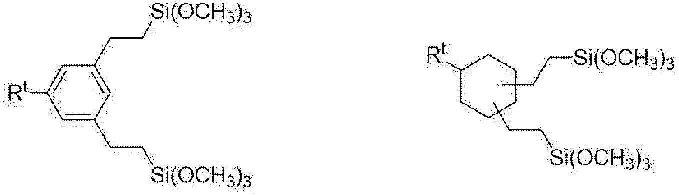

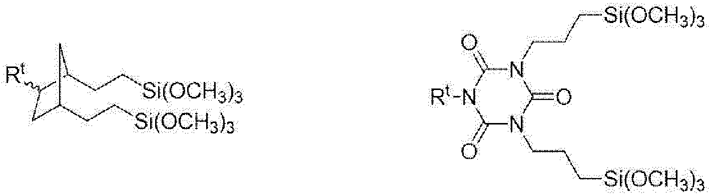

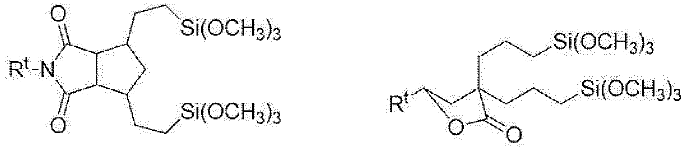

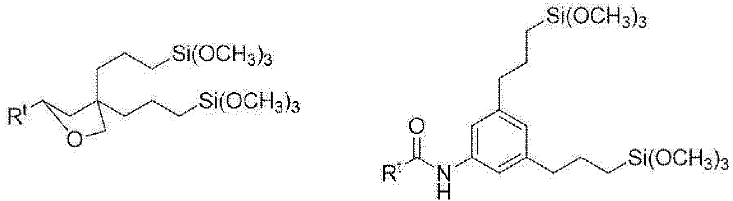

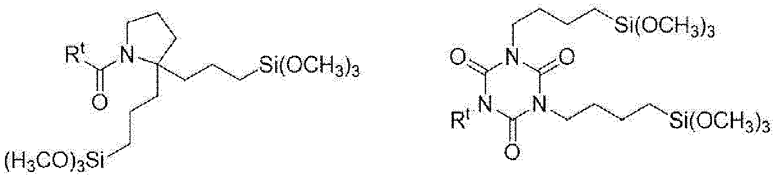

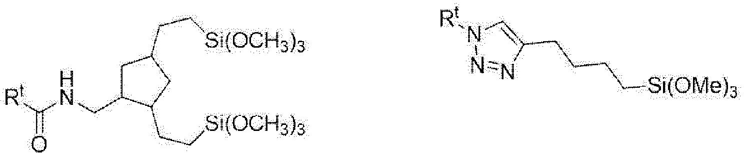

In a case in which Z is a polyalkylene oxide chain, examples of the compound in which A in Formula 1 is a Group (g2-4) include a compound of the following Formula.

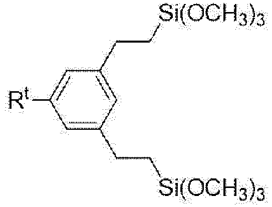

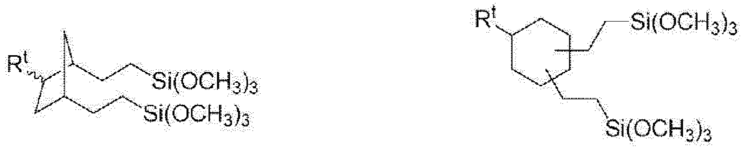

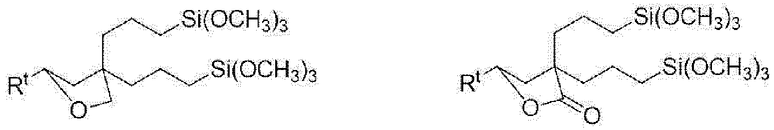

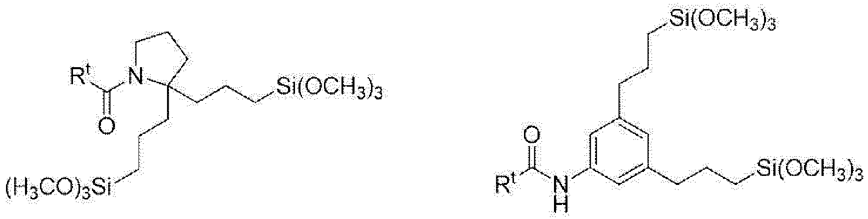

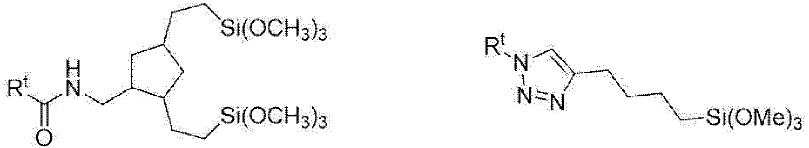

In a case in which the terminal of Z on the side bonded to A is an alkylene chain, examples of the compound in which A in Formula 1 is a Group (g2-5) include a compound of the following Formula.

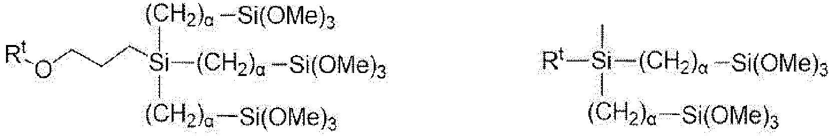

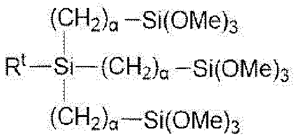

In a case in which Z is a polyalkylene oxide chain, examples of the compound in which A in Formula 1 is a Group (g2-5) include a compound of the following Formula.

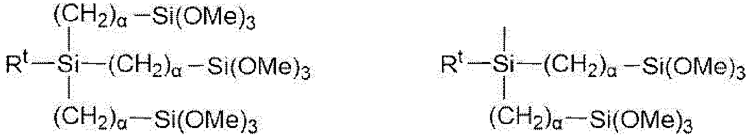

In a case in which the terminal of Z on the side bonded to A is an alkylene chain, examples of the compound in which A in Formula 1 is a Group (g2-6) include a compound of the following Formula.

R^{t}-Si(OCH₃)₃

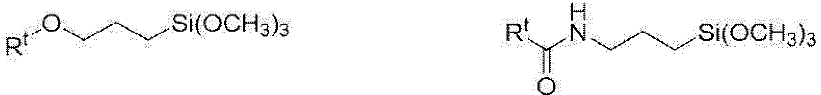

In a case in which Z is a polyalkylene oxide chain, examples of the compound in which A in Formula 1 is a Group (g2-6) include a compound of the following Formula.

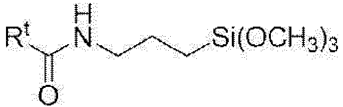

In a case in which the terminal of Z on the side bonded to A is an alkylene chain, examples of the compound in which A in Formula 1 is a Group (g2-7) include a compound of the following Formula.

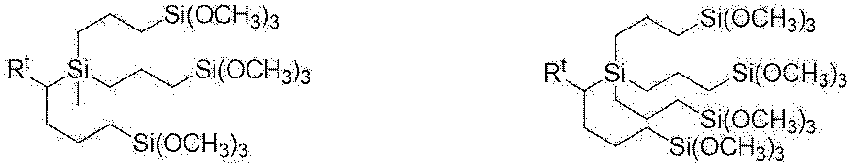

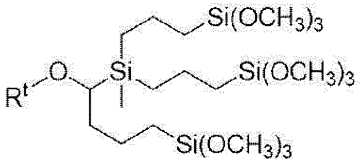

In a case in which Z is a polyalkylene oxide chain, examples of the compound in which A in Formula 1 is a Group (g2-7) include a compound of the following Formula.

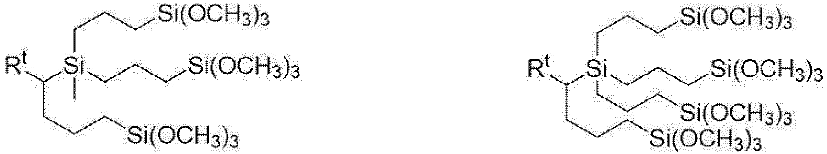

In a case in which the terminal of Z on the side bonded to A is an alkylene chain, examples of the compound in which A in Formula 1 is a Group (g2-8) include a compound of the following Formula.

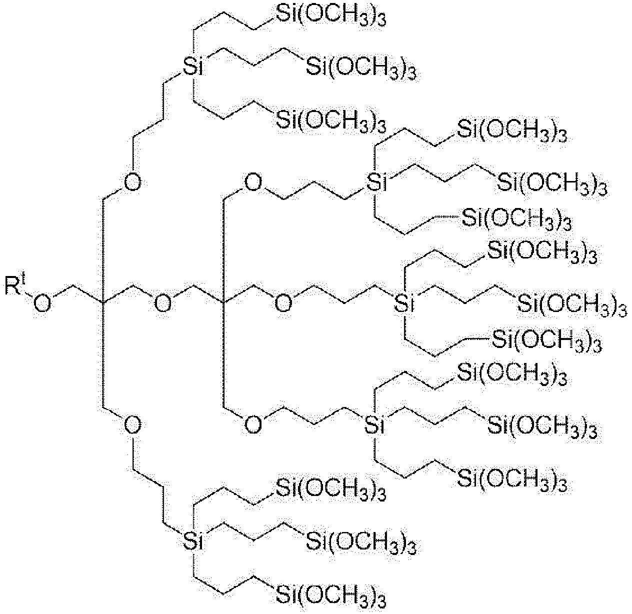

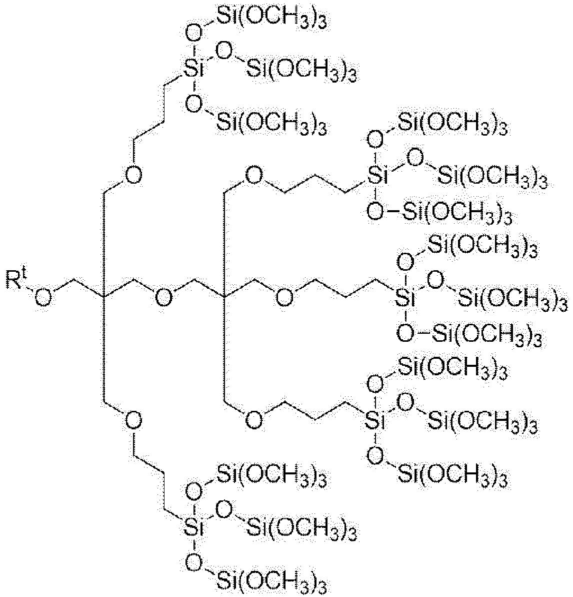

In a case in which Z is a polyalkylene oxide chain, examples of the compound in which A in Formula 1 is a Group (g2-8) include a compound of the following Formula.

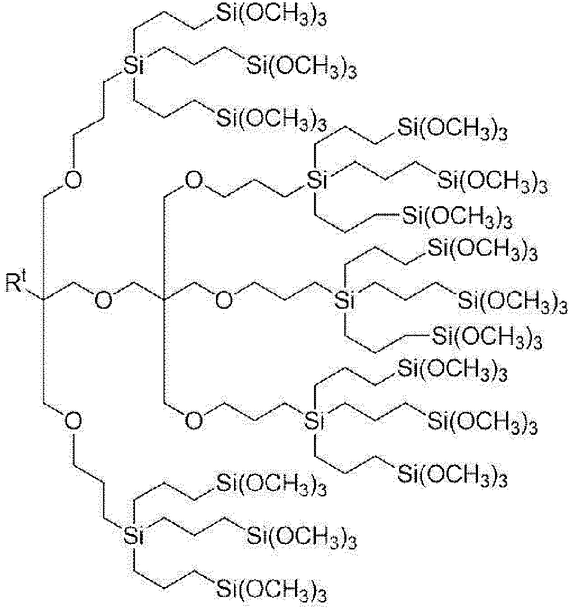

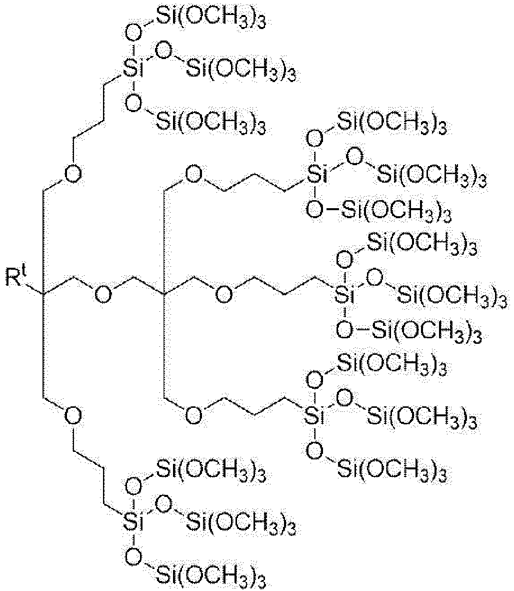

Examples of the compound in which A is a Group (g2-9) in Formula 1 include a compound of the following formula.

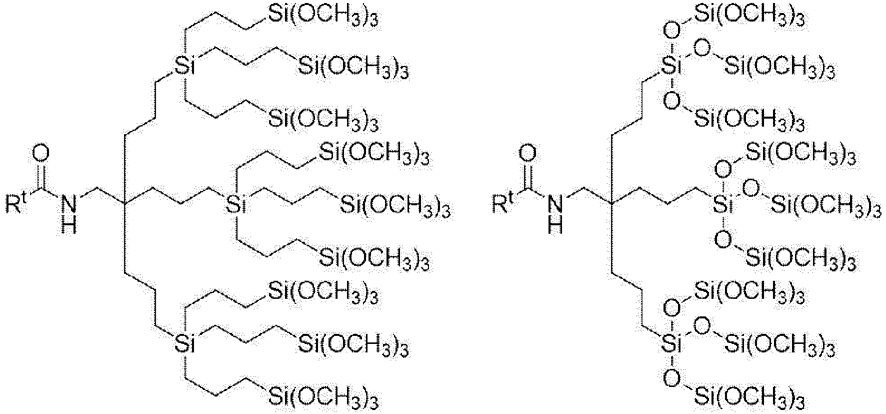

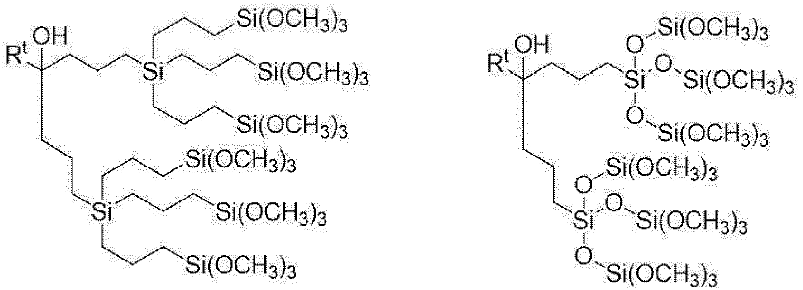

In a case in which the terminal of Z on the side bonded to A is an alkylene chain, examples of the compound in which A in Formula 1 is a Group (g2-10) include a compound of the following Formula.

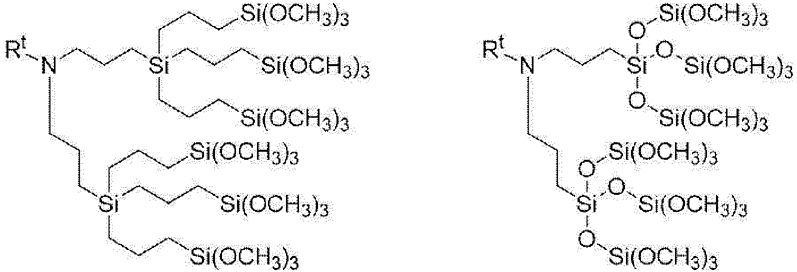

In a case in which Z is a polyalkylene oxide chain, examples of the compound in which A in Formula 1 is a Group (g2-10) include a compound of the following Formula.

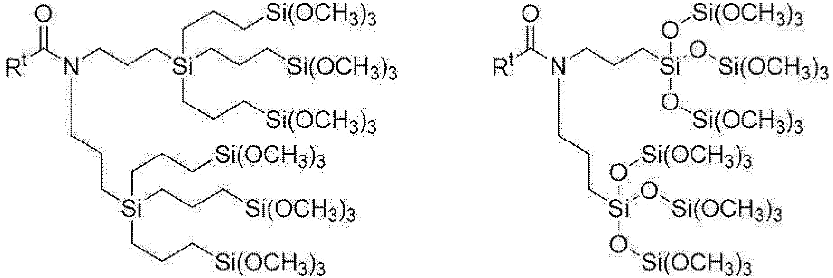

In a case in which the terminal of Z on the side bonded to A is an alkylene chain, examples of the compound in which A in Formula 1 is a Group (g2-11) include a compound of the following Formula.

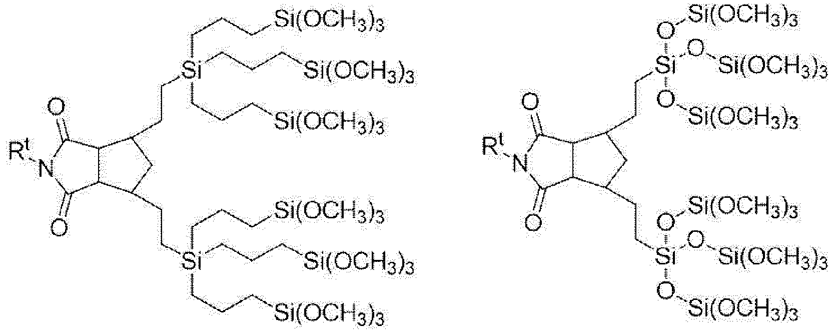

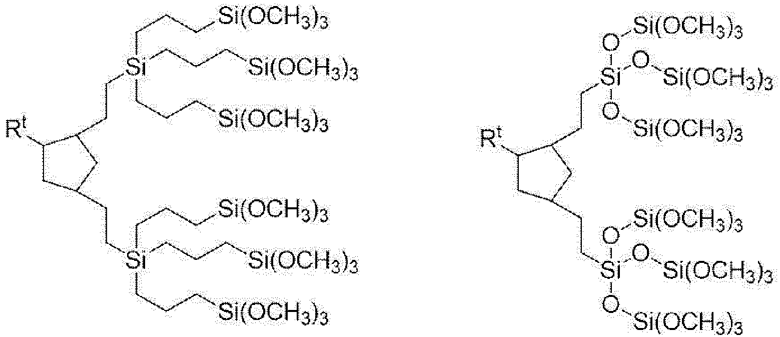

In a case in which Z is a polyalkylene oxide chain, examples of the compound in which A in Formula 1 is a Group (g2-11) include a compound of the following Formula.

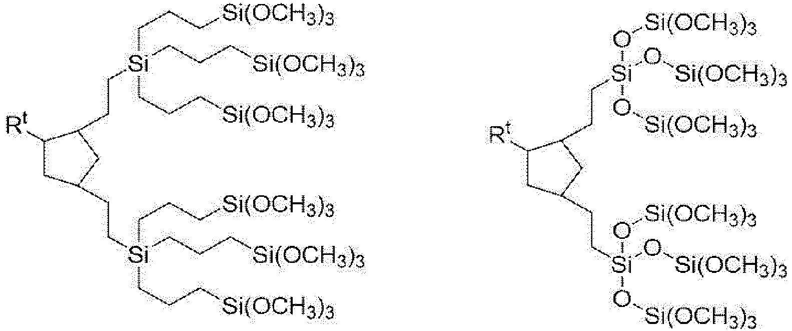

In a case in which the terminal of Z on the side bonded to A is an alkylene chain, examples of the compound in which A in Formula 1 is a Group (g2-12) include a compound of the following Formula.

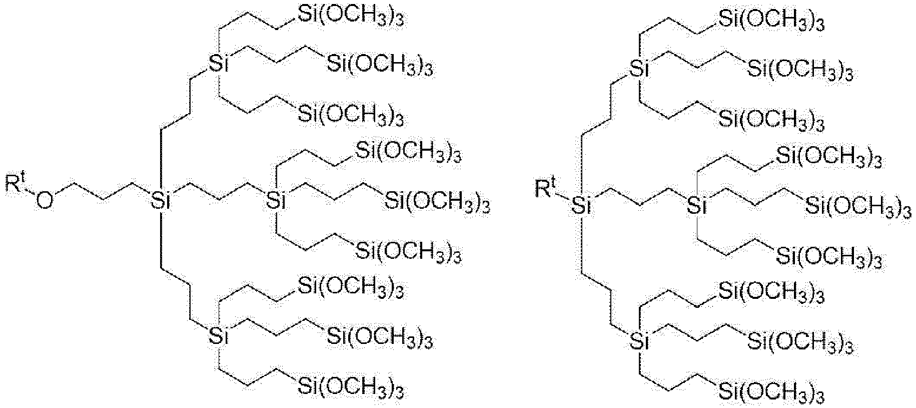

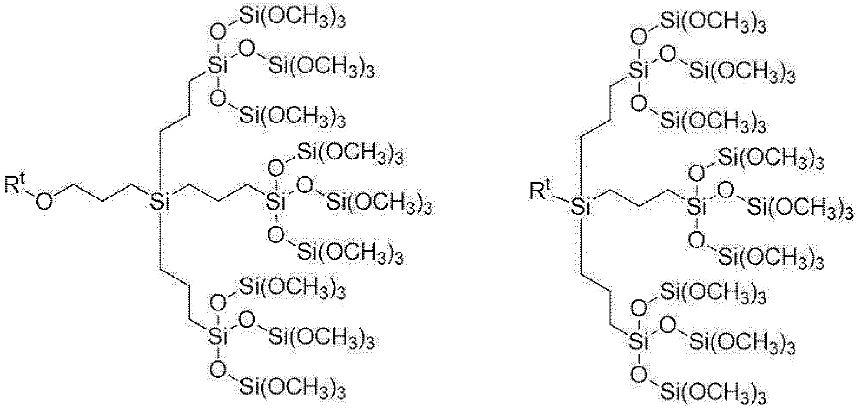

In a case in which Z is a polyalkylene oxide chain, examples of the compound in which A in Formula 1 is a Group (g2-12) include a compound of the following Formula.

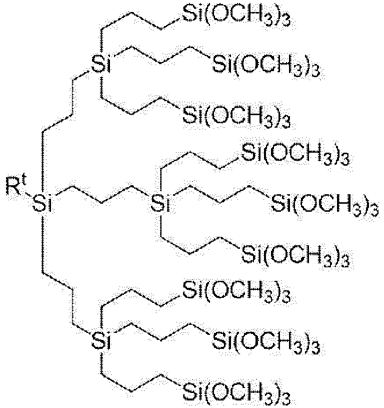

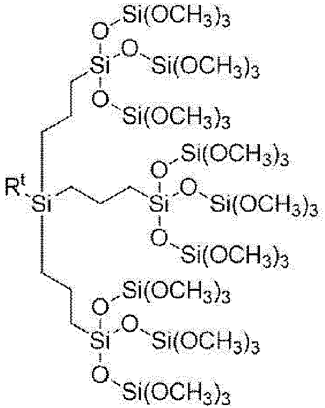

In a case in which the terminal of Z on the side bonded to A is an alkylene chain, examples of the compound in which A in Formula 1 is a Group (g2-13) include a compound of the following Formula.

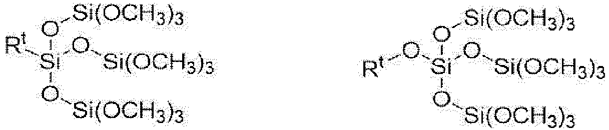

In a case in which Z is a polyalkylene oxide chain, examples of the compound in which A in Formula 1 is a Group (g2-13) include a compound of the following Formula.

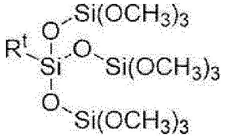

Examples of the compound in which A is a Group (g2-14) in Formula 1 include a compound of the following formula.

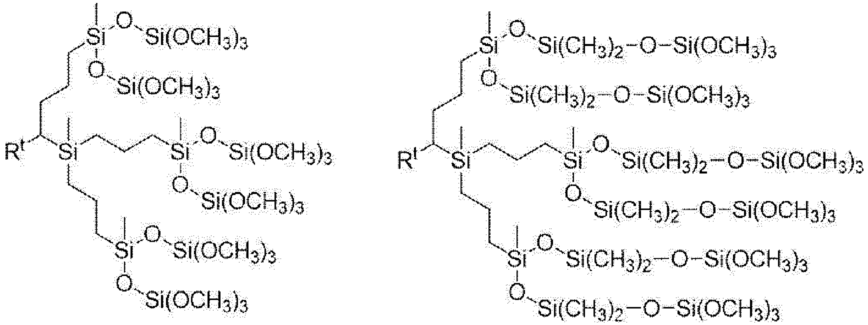

The compound of the present disclosure is preferably a compound represented by the following Formula 4.

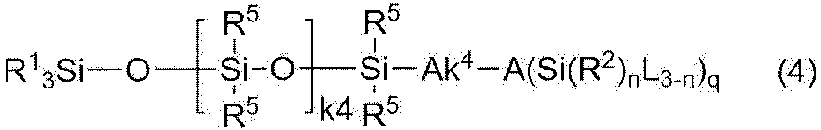

R¹ in Formula 4 represents the same as R¹ in the Group 1.

R⁵ represents the same as R⁵ in Formula B. k4 is the same as k4 in Formula C3.

The group represented by A(Si(R²)ₙL₃₋ₙ)_{q} is the same as the group represented by A(Si(R²)ₙL₃₋ₙ)_{q} in Formula 1.

Ak⁴ is the same as Ak⁴ in Formula C3.

The compound of the present disclosure is preferably a compound represented by the following Formula 4A or 4B.

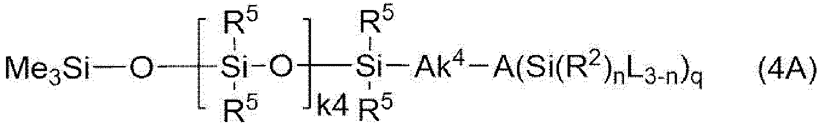

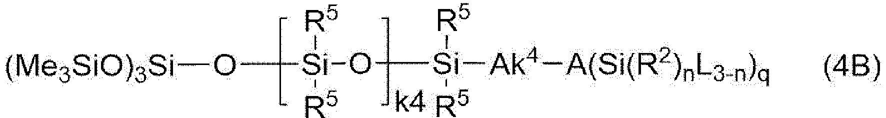

In Formula 4A and formula 4B, R⁵ is the same as R⁵ in Formula B. k4 is the same as k4 in Formula C3.

The group represented by A(Si(R²)ₙL₃₋ₙ)_{q} is the same as the group represented by A(Si(R²)ₙL₃₋ₙ)_{q} in Formula 1.

Ak⁴ is the same as Ak⁴ in Formula C3.

Examples of the compound of the present disclosure include the following compound.

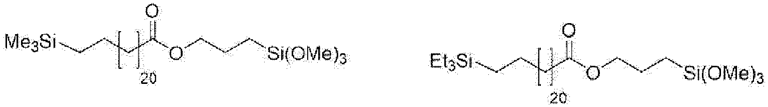

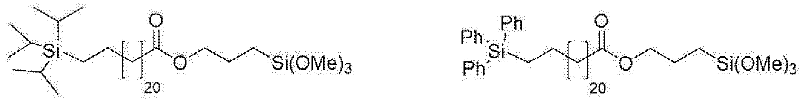

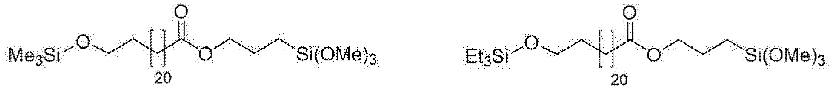

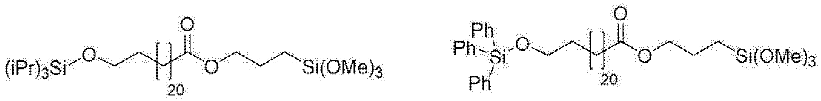

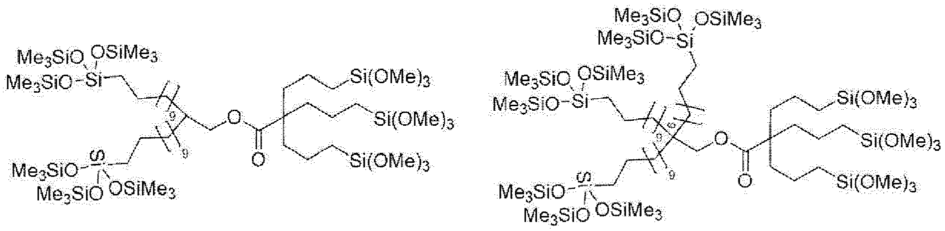

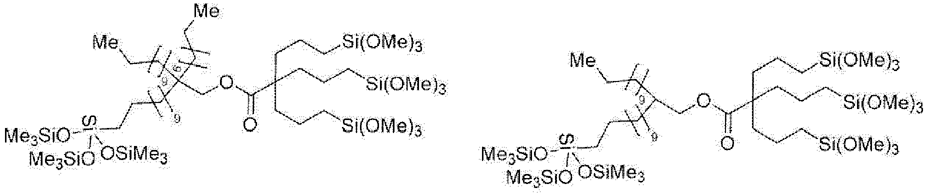

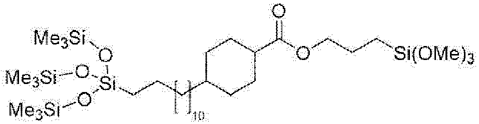

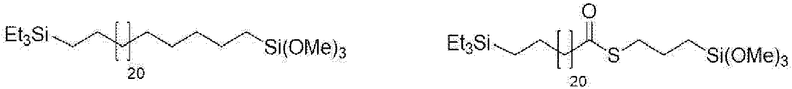

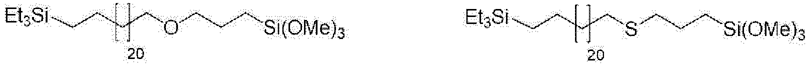

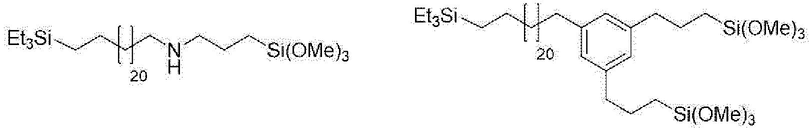

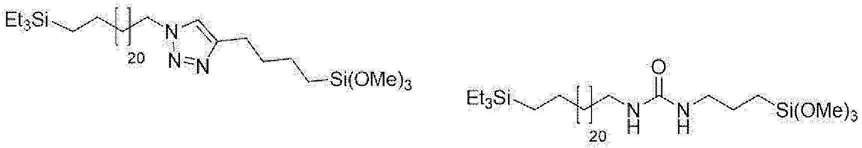

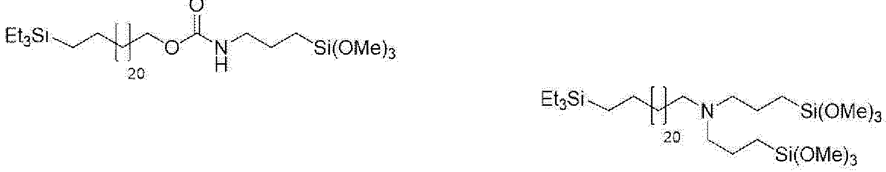

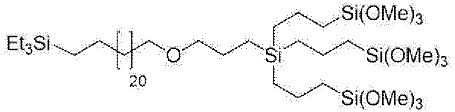

In the following Formula, n is preferably from 9 to 50, more preferably from 11 to 30, and particularly preferably from 11 to 25.

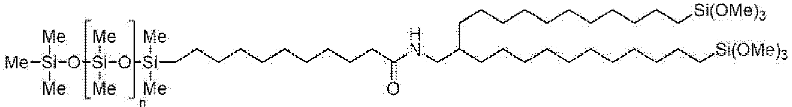

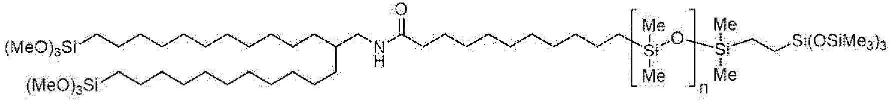

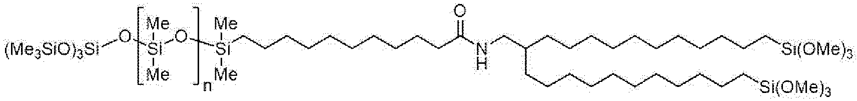

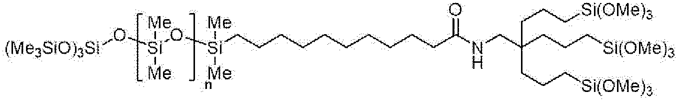

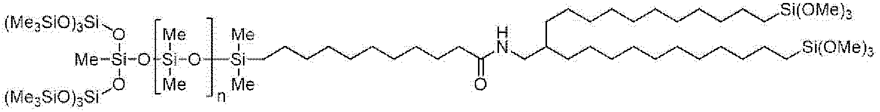

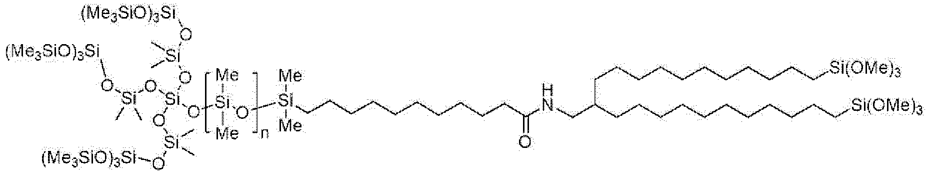

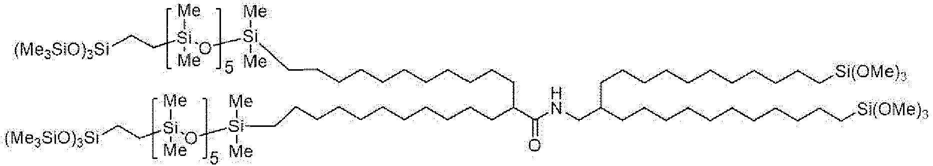

In the following Formula, k is preferably from 1 to 80, more preferably from 3 to 50, and still more preferably from 3 to 30. m is preferably from 1 to 30, more preferably from 3 to 20, and still more preferably from 3 to 10. t is preferably from 1 to 30, more preferably from 3 to 20, and still more preferably from 3 to 10.

In the following Formula, n is preferably from 9 to 50, more preferably from 11 to 30, and particularly preferably from 11 to 25.

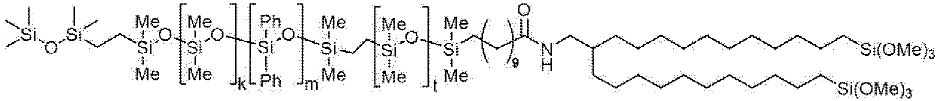

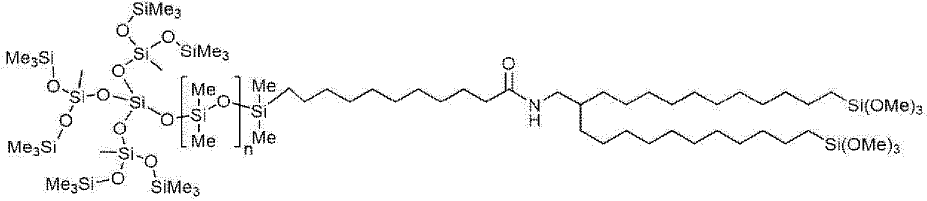

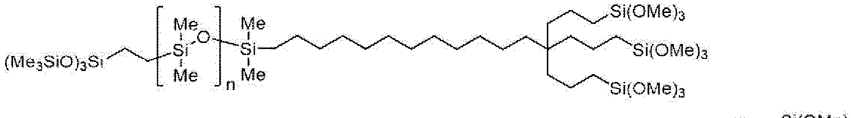

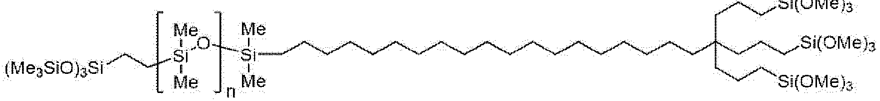

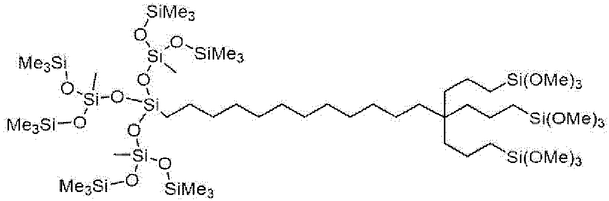

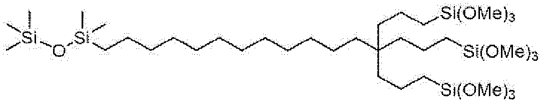

In the following Formula, n is preferably from 9 to 50, more preferably from 11 to 30, and particularly preferably from 11 to 25.

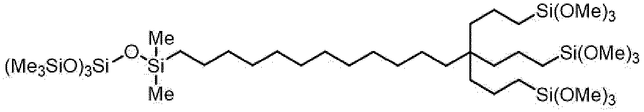

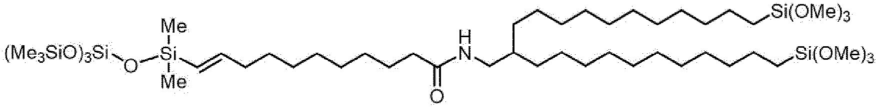

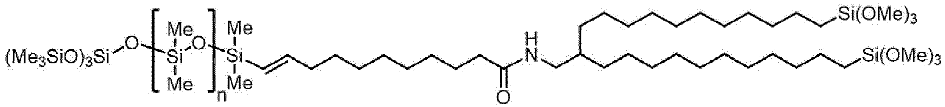

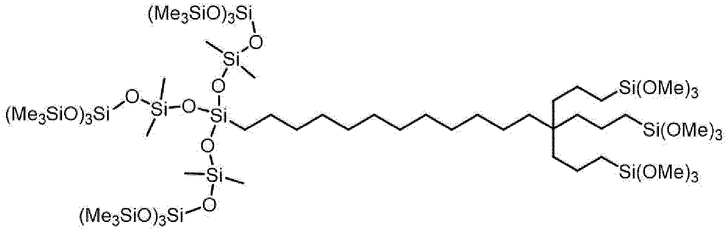

In the following Formula, s is preferably from 1 to 30, more preferably from 4 to 20, and still more preferably from 5 to 15.

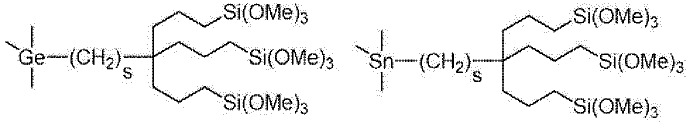

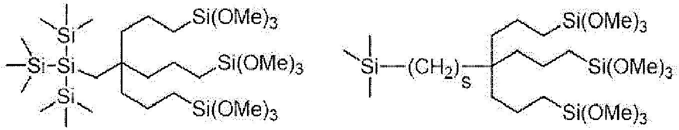

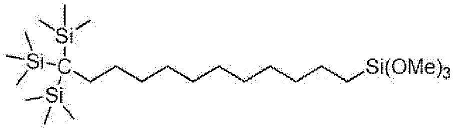

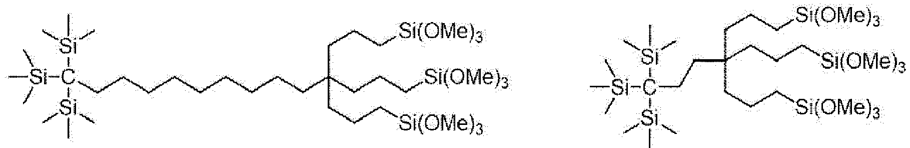

The number average molecular weight (Mn) of the compound of the present disclosure is preferably from 500 to 20,000, more preferably from 600 to 18,000, and still more preferably from 700 to 15,000.

When Mn is 500 or more, the abrasion resistance of the surface treatment layer is more excellent. When Mn is 20,000 or less, the viscosity is easily adjusted within an appropriate range, and the solubility is improved, and thus handleability at the time of film formation is excellent.

### [Composition]

The composition of the present disclosure may contain the compound of the present disclosure, and components other than the compound of the present disclosure are not particularly limited. The composition of the present disclosure preferably contains a compound of the present disclosure and a liquid medium. When the composition according to the present disclosure includes a liquid medium, the composition according to the present disclosure may be a solution, or may be a dispersion, as long as the composition is liquid.

The composition of the present disclosure may contain the compound of the present disclosure, and may contain impurities such as by-products generated in the step of producing the compound of the present disclosure.

The content rate of the compound of the present disclosure is preferably from 0.001 to 40% by mass, more preferably from 0.01 to 20% by mass, and still more preferably from 0.1 to 10% by mass with respect to the total amount of the composition of the present disclosure. In the case of the composition of the present disclosure used in the wet coating method, the content rate of the compound of the present disclosure may be from 0.01 to 10% by mass, from 0.02 to 5% by mass, from 0.03 to 3% by mass, or from 0.05 to 2% by mass with respect to the total amount of the composition of the present disclosure.

The liquid medium contained in the composition of the present disclosure may be of only one kind or two or more kinds.

The liquid medium is preferably an organic solvent.

Examples of the organic solvents include compounds composed only of hydrogen atoms and carbon atoms, and compounds composed only of hydrogen atoms, carbon atoms, and oxygen atoms, and specific examples thereof include hydrocarbon-based organic solvents, ketone-based organic solvents, ether-based organic solvents, ester-based organic solvents, glycol-based organic solvents, and alcohol-based organic solvents.

Specific examples of the hydrocarbon-based organic solvent include pentane, hexane, heptane, octane, hexadecane, isohexane, isooctane, isononane, cycloheptane, cyclohexane, bicyclohexyl, benzene, toluene, ethylbenzene, o-xylene, m-xylene, p-xylene, o-diethylbenzene, m-diethylbenzene, p-diethylbenzene, n-butylbenzene, sec-butylbenzene, and tert-butylbenzene.

Specific examples of the ketone-based organic solvent include acetone, methyl ethyl ketone, methyl isobutyl ketone, diisobutyl ketone, cyclohexanone, 2-heptanone, 4-heptanone, 3,5,5-trimethyl-2-cyclohexene-1-one, and 3,3,5-trimethylcyclohexanone, and isophorone.

Specific examples of the ether-based organic solvent include diethyl ether, cyclopentyl methyl ether, tetrahydrofuran, and 1,4-dioxane.

Specific examples of the ester-based organic solvent include methyl acetate, ethyl acetate, propyl acetate, isopropyl acetate, butyl acetate, isobutyl acetate, tert-butyl acetate, amyl acetate, isoamyl acetate, ethyl 3-ethoxypropionate, ethyl lactate ethylene glycol monobutyl ether acetate, diethylene glycol monobutyl ether acetate, propylene glycol monomethyl ether acetate, dipropylene glycol methyl ether acetate, 3-methoxy-3-methylbutyl acetate, 3-methoxybutyl acetate, propylene glycol monomethyl acetate, propylene glycol dimethyl acetate, ethylene glycol monoethyl ether acetate, ethylene glycol monomethyl ether acetate, diethylene glycol monoethyl ether acetate, cyclohexanol acetate, propylene glycol diacetate, propylene glycol monomethyl ether acetate, propylene glycol monomethyl ether propionate, propylene glycol monoethyl ether acetate, propylene glycol monobutyl ether acetate, propylene glycol monopropyl ether acetate, propylene glycol diacetate, dipropylene glycol methyl ether acetate, 1,3-butylene glycol diacetate, 1,4-butanediol diacetate, 1,3-butylene glycol diacetate, 1,6-hexanediol diacetate, γ-butyrolactone, triacetin, and 2,2,4-trimethyl-1,3-pentanediol monoisobutyrate.

Specific examples of the glycol-based organic solvent include ethylene glycol, ethylene glycol monobutyl ether, diethylene glycol monobutyl ether, triethylene glycol monobutyl ether, tetraethylene glycol monobutyl ether, ethylene glycol monohexyl ether, diethylene glycol monohexyl ether, ethylene glycol mono-2-ethylhexyl ether, diethylene glycol mono-2-ethylhexyl ether, propylene glycol monomethyl ether, propylene glycol monoethyl ether, propylene glycol monobutyl ether, propylene glycol monopropyl ether, ethylene glycol monoisopropyl ether, ethylene glycol monoethyl ether, ethylene glycol monotert-butyl ether, ethylene glycol monopropyl ether, ethylene glycol monomethyl ether, diethylene glycol monoisopropyl ether, diethylene glycol monomethyl ether, dipropylene glycol monoethyl ether, dipropylene glycol monobutyl ether, dipropylene glycol monopropyl ether, dipropylene glycol monomethyl ether, tripropylene glycol monobutyl ether tripropylene glycol monomethyl ether, propylene glycol monophenyl ether, 1,3-butylene glycol, propylene glycol n-propyl ether, propylene glycol n-butyl ether, diethylene glycol monoethyl ether, dipropylene glycol n-propyl ether, dipropylene glycol n-butyl ether, tripropylene glycol methyl ether, tripropylene glycol n-butyl ether, ethylene glycol dimethyl ether, ethylene glycol diethyl ether, ethylene glycol dibutyl ether, diethylene glycol diethyl ether, diethylene glycol dimethyl ether, dipropylene glycol dimethyl ether, diethylene glycol dibutyl ether, tetraethylene glycol dimethyl ether, dipropylene glycol dimethyl ether pentane, triethylene glycol dimethyl ether, and polyethylene glycol dimethyl ether.

Specific examples of the alcohol-based organic solvent include methanol, ethanol, 1-propanol, isopropyl alcohol, n-butanol, diacetone alcohol, isobutanol, sec-butanol, tert-butanol, pentanol, 3-methyl-1,3-butanediol, 1,3-butanediol, 1,3-butylene glycol, octanediol, 2,4-diethylpentanediol, butylethylpropanediol, 2-methyl-1,3-propanediol, 4-hydroxy-4-methyl-2-pentanone, 2-ethyl-1-hexanol, 3,5,5-trimethyl-1-hexanol, isodecanol, isotridecanol, 3-methoxy-3-methyl-1-butanol, 2-methoxybutanol, 3-methoxybutanol, cyclohexanol, furfuryl alcohol, tetrahydrofurfuryl alcohol, benzyl alcohol, and methylcyclohexanol.

Examples of the organic solvents include halogen-based organic solvents, nitrogen-containing compounds, sulfur-containing compounds, and siloxane compounds.

Specific examples of the halogen-based organic solvent include dichloromethane, chloroform, carbon tetrachloride, dichloroethane, chlorobenzene, o-chlorotoluene, m-chlorotoluene, p-chlorotoluene, m-dichlorobenzene, and 1,2,3-trichloropropane.

Examples of the nitrogen-containing compound include nitrobenzene, acetonitrile, benzonitrile, N,N-dimethylformamide, N,N-dimethylacetamide, N-methylpyrrolidone, and 1,3-dimethyl-2-imidazolidinone.

Examples of the sulfur-containing compound include carbon disulfide and dimethyl sulfoxide.

Examples of the siloxane compound include hexamethyldisiloxane, octamethyltrisiloxane, and decamethyltetrasiloxane.

The content rate of the liquid medium is preferably from 60 to 99.999% by mass, more preferably from 80 to 99.99% by mass, and still more preferably from 90 to 99.9% by mass with respect to the total amount of the composition of the present disclosure. In the case of the composition of the present disclosure used in the wet coating method, the content rate of the liquid medium may be from 90 to 99.99% by mass, from 95 to 99.98% by mass, from 97 to 99.97% by mass, or from 98 to 99.95% by mass with respect to the total amount of the composition of the present disclosure.

The composition of the present disclosure may contain other components in addition to the compound of the present disclosure and the liquid medium as long as the effects of the present disclosure are not impaired.

Examples of other components include known additives such as acid catalysts and basic catalysts that promote hydrolysis and condensation reaction of reactive silyl groups.

In addition, examples of other components include metal compounds having hydrolyzable groups (hereinafter, the metal compound having a hydrolyzable group is also referred to as "specific metal compound").

The composition of the present disclosure contains a specific metal compound, thereby allowing to further improve slippage and antifouling properties of the surface treatment layer. Examples of the specific metal compound include the following formulas (M1) to (M3).

M(X^{b1})ₘ₁(X^{b2})ₘ₂(X^{b3})ₘ₃ ... (M1)

Si(X^{b4})(X^{b5})₃ ... (M2)

(X^{b6})₃Si-(Y^{b1})-Si(X^{b7})₃ ... (M3)

In Formula (M1),
M represents a trivalent or tetravalent metal atom.

Each X^{b1} independently represents a hydrolyzable group.

Each X^{b2} independently represents a siloxane backbone-containing group.

Each X^{b3} independently represents a hydrocarbon chain-containing group.
m1 represents an integer from 2 to 4,
each of m2 and m3 independently represents an integer from 0 to 2,
when M is a trivalent metal atom, m1 + m2 + m3 is 3, and when M is a tetravalent metal atom, m1 + m2 + m3 is 4.

In Formula (M2),
X^{b4} represents a hydrolyzable silane oligomer residue.
X^{b5} each independently represents a hydrolyzable group or an alkyl group having 1 to 4 carbon atoms.

In Formula (M3),
Each of X^{b6} and X^{b7} independently represents a hydrolyzable group or a hydroxyl group.

Y^{b1} represents a divalent organic group.

In Formula (M1), the metal represented by M also includes metalloids such as Si and Ge. M is preferably a trivalent metal or a tetravalent metal, more preferably Al, Fe, In, Hf, Si, Ti, Sn, and Zr, still more preferably Al, Si, Ti, and Zr, and particularly preferably Si.

Examples of the hydrolyzable group represented by X^{b1} in Formula (M1) include the same group as the hydrolyzable group represented by L in [-Si(R²)ₙL₃₋ₙ] in the reactive silyl group.

The siloxane backbone-containing group represented by X^{b2} has a siloxane unit (-Si-O-), and may be linear or branched. The siloxane unit is preferably a dialkylsilyloxy group, and examples thereof include a dimethylsilyloxy group and a diethylsilyloxy group. The number of repetitions of the siloxane unit in the siloxane backbone-containing group is 1 or more, preferably from 1 to 5, more preferably from 1 to 4, and still more preferably from 1 to 3.

The siloxane backbone-containing group may contain a divalent hydrocarbon group in a portion of the siloxane backbone. Specifically, some oxygen atoms of the siloxane backbone may be replaced by divalent hydrocarbon groups. Examples of the divalent hydrocarbon groups include alkylene groups such as a methylene group, an ethylene group, a propylene group, and a butylene group.

A hydrolyzable group, a hydrocarbon group (preferably an alkyl group), or the like may be bonded to the silicon atom at the end of the siloxane backbone-containing group.

The number of elements of the siloxane backbone-containing group is preferably 100 or less, more preferably 50 or less, still more preferably 30 or less. The number of elements is preferably 10 or more.

The siloxane backbone-containing group is preferably a group represented by *-(O-Si(CH₃)₂)ₙCH₃, where n represents an integer from 1 to 5, and * represents a bonding site with an adjacent atom.

The hydrocarbon chain-containing group represented by X^{b3} may be a group consisting only of a hydrocarbon chain, or may be a group having an etheric oxygen atom between carbon-carbon atoms of the hydrocarbon chain. The hydrocarbon chain may be linear or branched, and is preferably linear. The hydrocarbon chain may be a saturated hydrocarbon chain or an unsaturated hydrocarbon chain, and is preferably a saturated hydrocarbon chain. The number of carbon atoms in the hydrocarbon chain-containing group is preferably from 1 to 3, more preferably from 1 to 2, and still more preferably 1. The hydrocarbon chain-containing group is preferably an alkyl group, and more preferably a methyl group, an ethyl group, or a propyl group.

m1 is preferably 3 or 4.

As the compound represented by Formula (M1), compounds represented by the following formulas (M1-1) to (M1-5) in which M is Si are preferable, and a compound represented by Formula (M1-1) is more preferable. The compound represented by Formula (M1-1) is preferably tetraethoxysilane, tetramethoxysilane, or triethoxymethylsilane.

Si(X^{b1})₄ ... (M1-1)

CH₃-Si(X^{b1})₃ ... (M1-2)

C₂H₅-Si(X^{b1})₃ ... (M1-3)

n-C₃H₇-Si(X^{b1})₃ ... (M1-4)

(CH₃)₂CH-Si(X^{b1})₃ ... (M1-5)

In Formula (M2), the number of silicon atoms contained in the hydrolyzable silane oligomer residue represented by X^{b4} is preferably 3 or more, more preferably 5 or more, still more preferably 7 or more. The number of the silicon atoms is preferably 15 or less, more preferably 13 or less, still more preferably 10 or less.

The hydrolyzable silane oligomer residue may have an alkoxy group bonded to a silicon atom. Examples of the alkoxy group include a methoxy group, an ethoxy group, a propoxy group, and a butoxy group, and a methoxy group and an ethoxy group are preferable. The hydrolyzable silane oligomer residue may have one kind or two or more kinds of these alkoxy groups, and preferably has one kind.

Examples of the hydrolyzable silane oligomer residue include (C₂H₅O)₃Si-(OSi(OC₂H₅)₂)₄O-* where * represents a binding site with an adjacent atom.

Examples of the hydrolyzable group represented by X^{b5} in Formula (M2) include the same group as the hydrolyzable group represented by L in [-Si(R²)ₙL₃₋ₙ] in the reactive silyl group, a cyano group, a hydrogen atom, and an allyl group, and an alkoxy group or an isocyanato group is preferable. The alkoxy group is preferably an alkoxy group having 1 to 4 carbon atoms.

X^{b5} is preferably a hydrolyzable group.

Examples of the compound represented by Formula (M2) include (H₅C₂O)₃-Si-(OSi(OC₂H₅)₂)₄OC₂H₅.

The compound represented by Formula (M3) is a compound having reactive silyl groups at both terminals of a divalent organic group, that is, bissilane.

Examples of the hydrolyzable group represented by X^{b6} and X^{b7} in Formula (M3) include an alkoxy group, an acyloxy group, a ketoxime group, an alkenyloxy group, an amino group, an aminoxy group, an amide group, an isocyanato group, and a halogen atom, and an alkoxy group and an isocyanato group are preferable. As the alkoxy group, an alkoxy group having 1 to 4 carbon atoms is preferable, and a methoxy group and an ethoxy group are more preferable.

In Formula (M3), X^{b6} and X^{b7} may be the same group or different groups from each other. From the viewpoint of availability, X^{b6} and X^{b7} are preferably the same group.

In Formula (M3), Y^{b1} is a divalent organic group linking reactive silyl groups at both terminals. The number of carbon atoms in Y^{b1} of the divalent organic group is preferably from 1 to 8, and more preferably from 1 to 3.

Examples of Y^{b1} include an alkylene group, a phenylene group, and an alkylene group having an etheric oxygen atom between carbon atoms. Examples thereof include - CH₂CH₂-, -CH₂CH₂CH₂-, -CH₂CH₂CH₂CH₂-, -CH₂CH₂CH₂CH₂CH₂-, - CH₂CH₂CH₂CH₂CH₂CH₂-, -CH₂C(CH₃)₂CH₂-, -C(CH₃)₂CH₂CH₂C(CH₃)₂-, - CH₂CH₂OCH₂CH₂-, -CH₂CH₂CH₂OCH₂CH₂CH₂-, -CH(CH₃)CH₂OCH₂CH(CH₃)-, and - C₆H₄-.

Examples of the compound represented by Formula (M3) include (CH₃O)₃Si(CH₂)₂Si(OCH₃)₃, (C₂H₅O)₃Si(CH₂)₂Si(OC₂H₅)₃, (OCN)₃Si(CH₂)₂Si(NCO)₃, Cl₃Si(CH₂)₂SiCl₃, (CH₃O)₃Si(CH₂)₆Si(OCH₃)₃, and (C₂H₅O)₃Si(CH₂)₆Si(OC₂H₅)₃.

The content rate of other components that may be contained in the composition of the present disclosure is preferably 10% by mass or less, and more preferably 1% by mass or less, with respect to the total amount of the composition of the present disclosure. When the composition of the present disclosure contains the specific metal compound, the content rate of the specific metal compound is preferably from 0.01 to 30% by mass, more preferably from 0.01 to 10% by mass, and still more preferably 0.05 to 5% by mass with respect to the total amount of the composition of the present disclosure.

The total content rate (hereinafter, also referred to as "solid content concentration") of the compound of the present disclosure and other components is preferably from 0.001 to 40% by mass, more preferably from 0.01 to 20% by mass, and still more preferably from 0.1 to 10% by mass with respect to the total amount of the composition of the present disclosure. The solid content concentration of the composition of the present disclosure is a value calculated from the mass of the composition before heating and the mass after heating in a convection dryer at 120°C for 4 hours.

The composition of the present disclosure contains a liquid medium, and thus it is useful as a coating application and can be used as a coating liquid.

### [Surface treatment agent]

In one aspect, the surface treatment agent of the present disclosure includes a compound of the present disclosure. In addition, the surface treatment agent of the present disclosure may contain the compound of the present disclosure and a liquid medium. The surface treatment agent of the present disclosure may be the composition of the present disclosure. Preferable aspects of the liquid medium contained in the surface treatment agent of the present disclosure are the same as the preferable aspects of the liquid medium contained in the composition of the present disclosure.

The compound of the present disclosure includes the Group 1, a partial structure that is an alkylene chain or a polyalkylene oxide chain having 3 or more carbon atoms, and the Group 2. Therefore, using a surface treatment agent containing the compound of the present disclosure allows forming a surface treatment layer excellent in water repellency and abrasion resistance.

### [Article]

In one aspect, an article of the present disclosure includes a substrate; and a surface treatment layer disposed on the substrate and formed by surface treatment with the surface treatment agent of the present disclosure.

The surface treatment layer may be formed on a portion of the surface of the substrate, or may be formed on the entire surface of the substrate. The surface treatment layer may spread in a film shape on the surface of the substrate, or may be scattered in a dot shape.

In the surface treatment layer, the compound of the present disclosure is included in a state in which hydrolysis of a some or all of the reactive silyl group has progressed and a dehydration condensation reaction of the silanol group has progressed.

The thickness of the surface treatment layer is preferably from 1 to 100 nm, and more preferably from 1 to 50 nm. When the thickness of the surface treatment layer is 1 nm or more, the effect of the surface treatment is easily sufficiently obtained. When the thickness of the surface treatment layer is 100 nm or less, utilization efficiency is high. The thickness of the surface treatment layer can be calculated from the vibration period of the interference pattern by obtaining the interference pattern of the reflected X-ray by the X-ray reflectance method with an X-ray diffractometer for thin film analysis (product name "ATX-G", manufactured by RIGAKU Corporation).

The kind of the substrate is not particularly limited, and examples thereof include a substrate required to be imparted with water repellency. As the substrate, for example, a substrate that may be used by being brought into contact with another article (for example, a stylus) or a human finger; a substrate that is hung by human fingers during operation; and a substrate that may be placed on other articles (for example, a placing table).

Examples of the material of the substrate include metal, resin, glass, sapphire, ceramic, stone, fiber, nonwoven fabric, paper, wood, natural leather, artificial leather, and composite materials thereof. The glass may be chemically strengthened.

Examples of the substrates include building materials, decorative building materials, interior goods, transportation equipment (for example, automobiles), signboards, bulletin boards, drinking vessels, tableware, water tanks, ornamental instruments (for example, frames, boxes), laboratory instruments, furniture, textile products, and packaging containers; glass or resin used for art, sports, games, or the like; and glass or resin used for exterior portions (excluding a display unit) in a device such as a mobile phone (for example, a smartphone), a portable information terminal, a game machine, or a remote controller. The shape of the substrate may be a plate shape or a film shape.

As the substrate, a substrate for a touch panel, a substrate for a display, and a spectacle lens are suitable, and a substrate for a touch panel is particularly suitable. The material of the substrate for a touch panel is preferably glass or a transparent resin.

The substrate may be a substrate having one surface or both surfaces subjected to a surface treatment such as a corona discharge treatment, a plasma treatment, or a plasma graft polymerization treatment. The substrate subjected to the surface treatment is more excellent in adhesion of the surface treatment layer, and the abrasion resistance of the surface treatment layer is further improved. Therefore, it is preferable to subject the surface of the substrate on the side in contact with the surface treatment layer to surface treatment. In addition, a surface treatment was performed.

In a case in which an underlayer described later is provided, the substrate has more excellent adhesion to the underlayer, and the abrasion resistance of the surface treatment layer is further improved. Therefore, when the underlayer is provided, it is preferable to subject the surface of the substrate on the side in contact with the underlayer to the surface treatment.

The surface treatment layer may be provided directly on the surface of the substrate, or the underlayer may be provided between the substrate and the surface treatment layer. From the viewpoint of further improving the water repellency and abrasion resistance of the surface treatment layer, the article of the present disclosure preferably includes a substrate, an underlayer disposed on the substrate, and a surface treatment layer disposed on the underlayer and surface-treated with the surface treatment agent of the present disclosure.

The underlayer is preferably a layer containing an oxide containing silicon and at least one specific element selected from the group consisting of a Group 1 elements, a Group 2 elements, a Group 4 elements, a Group 5 elements, a Group 13 elements, and a Group 15 elements of the periodic table.

The Group 1 elements in the periodic table (hereinafter, also referred to as "Group 1 elements") is lithium, sodium, potassium, rubidium, and cesium. As the Group 1 elements, lithium, sodium, and potassium are preferable, and sodium and potassium are more preferable from the viewpoint that the surface treatment layer can be more uniformly formed on the underlayer without defects, or the variation in the composition of the underlayer between samples is further suppressed. The underlayer may contain two or more kinds of the Group 1 elements.

The Group 2 elements in the periodic table (hereinafter, also referred to as "Group 2 elements") is beryllium, magnesium, calcium, strontium, and barium. As the Group 2 elements, magnesium, calcium, and barium are preferable, and magnesium and calcium are more preferable from the viewpoint that the surface treatment layer can be more uniformly formed on the underlayer without defects, or the variation in the composition of the underlayer between samples is further suppressed. The underlayer may contain two or more kinds of Group 2 elements.

The Group 4 elements in the periodic table (hereinafter, also referred to as "Group 4 elements") is titanium, zirconium, and hafnium. As the Group 4 elements, titanium and zirconium are preferable, and titanium is more preferable from the viewpoint that the surface treatment layer can be more uniformly formed on the underlayer without defects, or from the viewpoint that variations in the composition of the underlayer between samples are further suppressed. The underlayer may contain two or more kinds of Group 4 elements.

The Group 5 elements in the periodic table (hereinafter, also referred to as "Group 5 elements") is vanadium, niobium, and tantalum. As the Group 5 elements, vanadium is particularly preferable from the viewpoint of more excellent abrasion resistance of the surface treatment layer. The underlayer may contain two or more kinds of Group 5 elements.

The Group 13 elements in the periodic table (hereinafter, also referred to as "Group 13 elements") is boron, aluminum, gallium, and indium. As the Group 13 elements, boron, aluminum, and gallium are preferable, and boron and aluminum are more preferable from the viewpoint that the surface treatment layer can be more uniformly formed on the underlayer without defects or the variation in the composition of the underlayer between samples is further suppressed. The underlayer may contain the two or more kinds of Group 13 elements.

The Group 15 elements in the periodic table (hereinafter, also referred to as "Group 15 elements") is nitrogen, phosphorus, arsenic, antimony, and bismuth. As a Group 15 elements, phosphorus, antimony, and bismuth are preferable, and phosphorus and bismuth are more preferable, from the viewpoint that the surface treatment layer can be more uniformly formed on the underlayer without defects, or from the viewpoint that variation in the composition of the underlayer between samples is further suppressed. The underlayer may contain two or more kinds of Group 15 elements.

As the specific elements contained in the underlayer, Group 1 elements, Group 2 elements, and Group 13 elements are preferable because the abrasion resistance of the base layer is more excellent, Group 1 elements and Group 2 elements are more preferable, and Group 1 elements is still more preferable.

As the specific element, only one kind of element may be contained, or two or more kinds of elements may be contained.

An oxide contained in the underlayer may be a mixture of oxides of the above elements (silicon and specific elements) singly (for example, a mixture of a silicon oxide and an oxide of a specific element), a composite oxide containing two or more kinds of the above elements, or a mixture of an oxide of the above elements singly and a composite oxide.

The ratio of the total molar concentration of the specific element in the underlayer to the molar concentration of silicon in the underlayer (specific element/silicon) is preferably from 0.02 to 2.90, more preferably from 0.10 to 2.00, and still more preferably from 0.20 to 1.80 from the viewpoint of being more excellent in abrasion resistance of the surface treatment layer.

The molar concentration (mol%) of each element in the underlayer can be measured by, for example, depth direction analysis by X-ray photoelectron spectroscopy (XPS) with ion sputtering.

The underlayer may be a single layer or a multilayer. The underlayer may have irregularities on the surface.

The thickness of the underlayer is preferably from 1 to 100 nm, more preferably from 1 to 50 nm, and still more preferably from 2 to 20 nm. When the thickness of the underlayer is the above lower limit value or more, the adhesion of the surface treatment layer by the underlayer is further improved, and the abrasion resistance of the surface treatment layer is further excellent. When the thickness of the underlayer is the above upper limit value or less, the abrasion resistance of the underlayer itself is excellent.

The thickness of the underlayer is measured by observing a cross-section of the underlayer with a transmission electron microscope (TEM).

The underlayer can be formed by, for example, a vapor deposition method with a vapor deposition material or a wet coating method.

The vapor deposition material used in the vapor deposition method preferably contains silicon and an oxide containing a specific element.

Specific examples of the form of the vapor deposition material include a powder, a melt, a sintered body, a granulated body, and a crushed body, and from the viewpoint of handleability, the melt, the sintered body, and the granulated body are preferable.

The melt body is a solid obtained by melting a powder of the vapor deposition material at a high temperature and then cooling and solidifying the powder. The sintered body is a solid obtained by firing a powder of the vapor deposition material, and a molded body obtained by press-molding the powder may be used instead of the powder of the vapor deposition material if necessary. The granulated body is a solid obtained by kneading a powder of a vapor deposition material and a liquid medium (for example, water or an organic solvent) to provide particles and then drying the particles.

The deposition material can be produced, for example, by the following method.
- A method of mixing a powder of silicon oxide and a powder of an oxide of a specific element to provide a powder of a vapor deposition material.
- A method of kneading the powder of the vapor deposition material and water to provide particles, and then drying the particles to provide a granulated body of the vapor deposition material.
- A method of drying a mixture obtained by mixing a powder containing silicon (for example, a powder made of a silicon oxide, silica sand, or silica gel), a powder containing a specific element (for example, a powder of an oxide of a specific element, a carbonate, a sulfate, a nitrate, an oxalate, or a hydroxide), and water, and then firing the dried mixture or a molded body obtained by press-molding the dried-mixture to provide a sintered body.
- A method of melting, at a high temperature, a powder containing silicon (for example, a powder made of a silicon oxide, silica sand, or silica gel) and a powder containing a specific element (for example, a powder of an oxide of a specific element, a carbonate, a sulfate, a nitrate, an oxalate, or a hydroxide), and then cooling and solidifying the melted powders to provide a melt.

Specific examples of the vapor deposition method with the vapor deposition material include a vacuum vapor deposition method. The vacuum vapor deposition method is a method of evaporating a vapor deposition material in a vacuum chamber and adhering to a surface of a substrate.

The temperature (for example, the temperature of the boat on which the vapor deposition material is disposed when a vacuum vapor deposition apparatus is used) during vapor deposition is preferably from 100 to 3,000°C, and more preferably from 500 to 3,000°C.

The pressure (for example, the pressure in a tank in which the vapor deposition material is disposed when a vacuum vapor deposition apparatus is used) during vapor deposition is preferably 1 Pa or less, and more preferably 0.1 Pa or less.

When the underlayer is formed with the vapor deposition material, one vapor deposition material may be used, or two or more kinds of vapor deposition materials containing different elements may be used.

Specific examples of the evaporation method of the vapor deposition material include a resistance heating method of melting and evaporating the vapor deposition material on a resistance heating boat made of a high melting point metal, and an electron gun method of irradiating the vapor deposition material with an electron beam and directly heating the vapor deposition material to melt the surface and evaporate the vapor deposition material. As a method of evaporating the vapor deposition material, the electron gun method is preferable from the viewpoint that a high melting point substance can be locally heated and thus can also be evaporated, and from the viewpoint that there is no possibility of reaction with a container or mixing of impurities because a portion that is not hit by an electron beam is at a low temperature.

As the evaporation method of a vapor deposition material, a plurality of boats may be used, or all vapor deposition materials may be placed in a single boat and used. The vapor deposition method may be co-vapor deposition, alternate vapor deposition, or the like. Specific examples thereof include an example in which silica and a specific source are mixed in the same boat and used, an example in which silica and a specific element source are placed in separate boats and co-deposited, and an example in which silica and a specific element source are placed in separate boats and alternately deposited. Conditions, order, and the like of vapor deposition are appropriately selected depending on the configuration of the underlayer.

In the wet coating method, it is preferable to form an underlayer on a substrate by a wet coating method with a coating liquid containing a compound containing silicon, a compound containing a specific element, and a liquid medium.

Specific examples of the silicon compound include silicon oxide, silicic acid, and partial condensates of silicic acid, alkoxysilane, and partial hydrolysis condensates of alkoxysilane.

Specific examples of the compound containing a specific element include an oxide of the specific element, an alkoxide of the specific element, a carbonate of the specific element, a sulfate of the specific element, a nitrate of the specific element, an oxalate of the specific element, and a hydroxide of the specific element.

Examples of the liquid medium include those same the liquid medium contained in the composition of the present disclosure.

The content rate of the liquid medium is preferably from 0.01 to 20% by mass, and more preferably from 0.1 to 10% by mass with respect to the total amount of the coating liquid used for forming the underlayer.

Specific examples of the wet coating method of forming the underlayer include a spin coating method, a wipe coating method, a spray coating method, a squeegee coating method, a dip coating method, a die coating method, an inkjet method, a flow coating method, a roll coating method, a casting method, a Langmuir-Blodgett method, and a gravure coating method.

It is preferable to wet coat the coating liquid and then dry the coating film. The drying temperature of the coating film is preferably from 20 to 200°C, and more preferably from 80 to 160°C.

The article of the present disclosure is preferably an optical member. Examples of the optical member include a car navigation, a mobile phone, a smartphone, a digital camera, a digital video camera, a PDA, a portable audio player, a car audio, a game machine, a spectacle lens, a camera lens, a lens filter, sunglasses, a medical instrument such as a stomach camera, a copying machine, a PC, a display (for example, a liquid crystal display, an organic EL display, a plasma display, or a touch panel display), a touch panel, a protective film, and an antireflection film. In particular, the article is preferably a display or a touch panel.

### [Method of producing article]

The method of producing an article of the present disclosure is, for example, a method of producing an article in which a surface treatment layer is formed on a substrate by performing a surface treatment on the substrate with the surface treatment agent of the present disclosure. Examples of the surface treatment include a dry coating method and a wet coating method.

Examples of the dry coating method include methods such as vacuum vapor deposition, CVD, and sputtering. As the dry coating method, a vacuum vapor deposition method is preferable from the viewpoint of suppressing decomposition of the compound and convenience of the apparatus. At the time of vacuum vapor deposition, a pellet-shape substance may be used which is obtained by impregnating a metal porous body of iron, steel, or the like with the compound of the present disclosure. A pellet-shaped substance may be used which is impregnated with the compound of the present disclosure by impregnating a metal porous body such as iron or steel with a composition containing the compound of the present disclosure and a liquid medium and drying the liquid medium.

Examples of the wet coating method include a spin coating method, a wipe coating method, a spray coating method, a squeegee coating method, a dip coating method, a die coating method, an inkjet method, a flow coating method, a roll coating method, a casting method, a Langmuir-Blodgett method, and a gravure coating method.

In order to improve the abrasion resistance of the surface treatment layer, an operation for promoting the reaction between the compound of the present disclosure and the substrate may be performed as necessary. Examples of the operation include heating, humidification, and light irradiation.

For example, the substrate on which the surface treatment layer is formed can be heated in the atmosphere having moisture to promote reactions such as a hydrolysis reaction of a hydrolyzable group, a reaction between a hydroxyl group or the like on the surface of the substrate and a silanol group, and generation of a siloxane bond by a condensation reaction of a silanol group.

After the surface treatment, the compound in the surface treatment layer, which is not chemically bonded to another compound or the substrate, may be removed as necessary. Examples of the removal method include a method of pouring a solvent on the surface treatment layer and a method of wiping the surface treatment layer with a cloth soaked with the solvent. Examples

Hereinafter, the present invention will be described in more detail with reference to Examples, but the present invention is not limited to these Examples.

### [Synthesis of Compound 1C]

22-tricosenoic acid (2.0 g), tris(trimethylsilyloxy)silane (1.7 g), and 1,3-bistrifluoromethylbenzene (10 g) were added and stirred. Thereafter, a toluene solution (platinum content rate 3%, 0.1 g) of platinum/1,3-divinyl -1,1,3,3-tetramethyldisiloxane complex and aniline (0.1 g) were added, and stirred at 85°C for 24 hours. After cooling to 25°C, the solvent was distilled off, and flash column chromatography (developing solvent: ethyl acetate/hexane) with silica gel was performed to provide 3.0 g of a Compound 1A. The structure of the Compound 1A was confirmed from the following NMR data.

¹H-NMR (500MHz, CDCl₃):δ 2.31 (t, J= 7.1 Hz, 2H), 1.60 (p, J = 7.1 Hz, 2H), 1.40 (pd, J = 7.0, 0.8 Hz, 2H), 1.33-1.20 (m, 36H), 0.36 (t, J = 7.0 Hz, 2H), 0.10 (s, 27H).

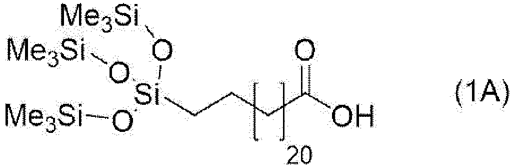

Allyl alcohol (30 g) was added to the Compound 1A (3.0 g) and stirred, and then N-methylmorpholine (1.0 g) and 4-(4,6-dimethoxy -1,3,5-triazine-2-yl)-4-methylmorpholinium chloride (3.0 g) were added thereto. The temperature was raised to 50°C, and heating and stirring were performed for 24 hours. After cooling to 25°C, the solvent was distilled off, and flash column chromatography (developing solvent: ethyl acetate/hexane) with silica gel was performed to provide 2.1 g of a Compound 1B. The structure of the Compound 1B was confirmed from the following NMR data.

¹H-NMR (500 MHz, CDCl₃) δ 6.03-5.82 (m, 1H), 5.31 (dt, J = 13.3,1.0 Hz, 2H), 4.57 (dt, J = 6.2, 1.0 Hz, 2H), 1.69-1.62 (m, 2H), 1.62-1.53 (m,2H), 1.40 (pd, J = 7.0, 0.8 Hz, 2H), 1.36-1.14 (m, 36H), 0.36 (t, J = 7.0 Hz, 2H), 0.10 (s, 27H).

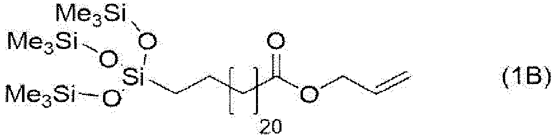

1,3-Bistrifluoromethylbenzene (10 g) was added to the Compound 1B (2.1 g) and stirred. Thereafter, a toluene solution (platinum content rate 3%, 0.1 g) of platinum/1,3-divinyl-1,1,3,3-tetramethyldisiloxane complex, aniline (0.1 g), and trimethoxysilane (0.5 g) were added and stirred at 40°C. The solvent was distilled off under reduced pressure to provide 2.4 g of a Compound 1C. The structure of the Compound 1C was confirmed from the following NMR data.

¹H-NMR (500 MHz, CDCl₃) δ 4.09 (t, J = 7.1 Hz, 2H), 3.58 (s, 9H),2.31 (t, J = 7.1 Hz, 2H), 1.80 (p, J = 7.1 Hz, 2H), 1.58 (p, J = 7.1 Hz, 2H), 1.40 (pd, J = 7.0, 0.8 Hz, 2H), 1.35-1.14 (m, 36H), 0.66 (t, J = 7.1 Hz, 2H), 0.36 (t, J = 7.0 Hz, 2H), 0.10 (s, 27H).

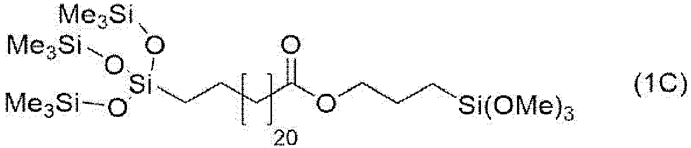

### [Synthesis of Compound 2C]

The Compound 2A was obtained according to the method described in Synthesis Examples 3 to 5 of WO2021/054413.

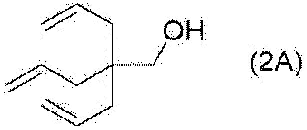

The Compound 1A(3.0 g) was added to the Compound 2A (5.0 g) and stirred, and then N-methylmorpholine (1.0 g) and 4-(4,6-dimethoxy-1,3,5-triazine-2-yl)-4-methylmorpholinium chloride (3.0 g) were added thereto. The temperature was raised to 50°C, and stirring was performed for 24 hours. After cooling to 25°C, flash column chromatography (developing solvent: ethyl acetate/hexane) with silica gel was performed to provide 2.4 g of a Compound 2B. The structure of the Compound 2B was confirmed from the following NMR data.

¹H-NMR (500 MHz, CDCl₃) δ 5.66 (ddt, J = 13.7, 12.6, 6.2 Hz, 3H),5.13 (dt, J = 13.4, 1.1 Hz, 6H), 3.98 (s, 2H), 2.37 (t, J= 7.1 Hz, 2H), 1.91 (dt, J = 6.2, 1.0 Hz, 6H), 1.58 (p, J = 7.1 Hz, 2H), 1.40 (pd, J = 7.0, 0.8 Hz, 2H), 1.35-1.14 (m, 36H), 0.36 (t, J = 7.0 Hz, 2H), 0.10 (s, 27H).

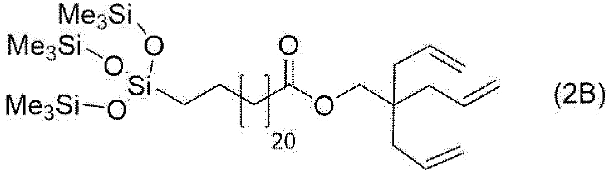

1,3-Bistrifluoromethylbenzene (10 g) was added to the Compound 2B (2.4 g) and stirred. Thereafter, a toluene solution (platinum content rate 3%, 0.1 g) of platinum/1,3-divinyl-1,1,3,3-tetramethyldisiloxane complex, aniline (0.1 g), and trimethoxysilane (1.5 g) were added and stirred at 40°C. The solvent was distilled off under reduced pressure to provide 2.9 g of a Compound 2C. The structure of the Compound 2C was confirmed from the following NMR data.

¹H-NMR (500 MHz, CDCl₃) δ 4.02 (s, 2H), 3.58 (s, 27H), 2.37 (t, J= 7.1 Hz, 2H), 1.58 (p, J = 7.1 Hz, 2H), 1.42 (dpd, J= 17.4, 7.0, 0.8 Hz, 8H), 1.34-1.18 (m, 42H), 0.69 (t, J= 7.0 Hz, 6H), 0.36 (t, J = 7.0 Hz, 2H), 0.10 (s,27H).

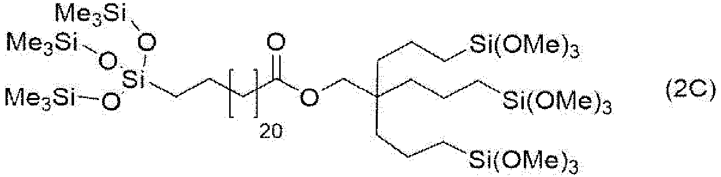

### [Synthesis of Compound 3B]

H₂N-CH₂-C(CH₂CH=CH₂)₃ (1.5 g) and methanol (10 g) were added to the Compound 1A (3.0 g) and stirred, and then N-methylmorpholine (1.0 g) and 4-(4,6-dimethoxy -1,3,5-triazine-2-yl)-4-methylmorpholinium chloride (3.0 g) were added thereto. The temperature was raised to 50°C, and stirring was performed for 24 hours. After cooling to 25°C, the solvent was distilled off, and flash column chromatography (developing solvent: ethyl acetate/hexane) with silica gel was performed to provide 2.2 g of a Compound 3A. The structure of the Compound 3A was confirmed from the following NMR data.

¹H-NMR (500 MHz, CDCl₃) δ 6.67 (t, J = 8.0 Hz, 1H), 5.74-5.52 (m, 3H), 5.13 (dt, J = 13.4, 1.1 Hz, 6H), 3.25 (d, J = 8.1 Hz, 2H), 2.20 (t, J = 7.1 Hz, 2H), 1.86 (dt, J = 6.1, 0.9 Hz, 6H), 1.63 (p, J = 7.1 Hz, 2H), 1.40 (pd, J= 7.0, 0.8 Hz, 2H), 1.35-1.17 (m, 36H), 0.36 (t, J= 7.0 Hz, 2H), 0.10 (s, 27H).

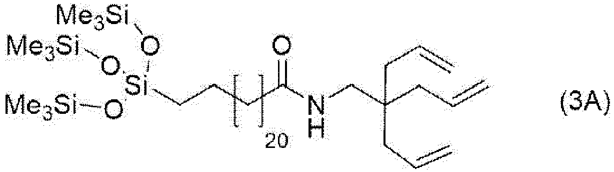

1,3-Bistrifluoromethylbenzene (10 g) was added to the Compound 3A (2.2 g) and stirred. Thereafter, a toluene solution (platinum content rate 3%, 0.1 g) of platinum/1,3-divinyl-1,1,3,3-tetramethyldisiloxane complex, aniline (0.1 g), and trimethoxysilane (1.5 g) were added and stirred at 40°C. The solvent was distilled off under reduced pressure to provide 2.7 g of a Compound 3B. The structure of the Compound 3B was confirmed from the following NMR data.

¹H-NMR (500 MHz, CDCl₃) δ 6.81 (t, J = 7.2 Hz, 1H), 3.58 (s, 27H), 3.29 (d, J = 7.1 Hz, 2H), 2.20 (t, J = 7.1 Hz, 2H), 1.63 (p, J = 7.1 Hz, 2H), 1.41 (pdd, J = 7.0, 4.7, 0.8 Hz, 8H), 1.34-1.17 (m, 35H), 0.69 (t, J = 7.0 Hz, 6H), 0.36 (t, J = 7.0 Hz, 2H), 0.10 (s, 27H).

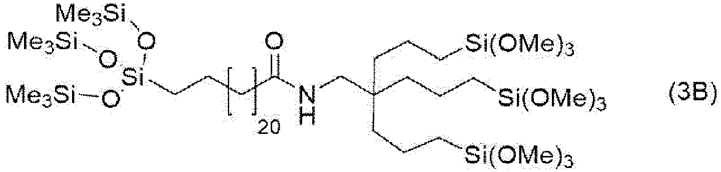

### [Synthesis of Compound 4F]

Polyethylene glycol (8.0 g) having an average molecular weight of 400 is dissolved in tetrahydrofuran (hereinafter, also referred to as "THF", 20 mL), cesium carbonate (8.0 g) and allyl bromide (2.4 g) were added thereto, and stirred at 50°C for 24 hours. Thereafter, the solvent was distilled off, and flash column chromatography (developing solvent: methanol/dichloromethane) using silica gel was performed to provide 3.1 g of a Compound 4A. The structure of the Compound 4A was confirmed from the following NMR data.

¹H-NMR (500 MHz, CDCl₃) δ 5.85 (tt, J = 13.7, 6.2 Hz, 1H), 5.22 (dt, J = 13.5, 1.1 Hz, 2H), 4.02-3.80 (m, 4H), 3.80-3.46 (m, 34H).

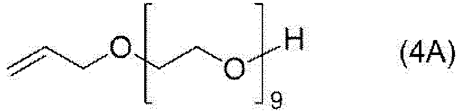

The Compound 4A (3.0 g), tris(trimethylsilyloxy)silane (2.2 g), and 1,3-bistrifluoromethylbenzene (10 g) were added, and stirred. Thereafter, a toluene solution (platinum content rate 3%, 0.1 g) of platinum/1,3-divinyl-1,1,3,3-tetramethyldisiloxane complex and aniline (0.1 g) were added, and stirred at 85°C for 24 hours. After cooling to 25°C, the solvent was distilled off, and flash column chromatography (developing solvent: ethyl acetate/hexane) with silica gel was performed to provide 4.1 g of a Compound 4B. The structure of the Compound 4B was confirmed from the following NMR data.

¹H-NMR (500 MHz, CDCl₃) δ 3.79-3.53 (m, 36H), 3.42 (t, J = 7.1 Hz, 2H), 1.68 (p, J = 7.1 Hz, 2H), 0.43 (t, J = 7.1 Hz, 2H), 0.10 (s, 27H).

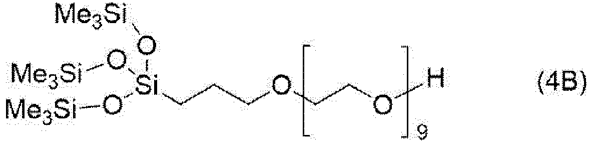

The Compound 4C was obtained according to the method described in Synthesis Examples 3 and 4 of WO2021/054413.

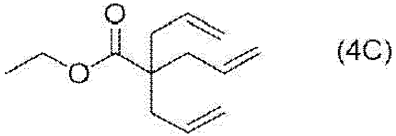

Methanol (50 g) and potassium hydroxide (5 g) were added to the Compound 4C (10 g), and heating and refluxing were performed for 24 hours. After cooling to 25°C, hydrochloric acid and dichloromethane were added to perform extraction, the solvent was distilled off, and flash column chromatography (developing solvent: methanol/dichloromethane) using silica gel was then performed to provide 8.3 g of a Compound 4D. The structure of the Compound 4D was confirmed from the following NMR data.

¹H-NMR (500 MHz, CDCl₃) δ 5.71 (ddt, J = 13.7, 12.6, 6.2 Hz, 3H),5.16 (dt, J = 13.4, 1.1 Hz, 6H), 2.20 (dt, J = 6.2, 0.9 Hz, 6H).

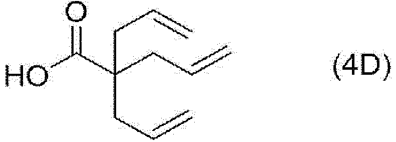

The Compound 4D (1.5 g) and THF (10 mL) were added to the Compound 4B (4.0 g) and stirred, and then N-methylmorpholine (1.0 g) and 4-(4,6-dimethoxy-1,3,5-triazine-2-yl)-4-methylmorpholinium chloride (3.0 g) were added thereto. The temperature was raised to 50°C, and stirring was performed at 50°C for 24 hours. After cooling to 25°C, flash column chromatography (developing solvent: ethyl acetate/hexane) with silica gel was performed to provide 3.5 g of a Compound 4E. The structure of the Compound 4E was confirmed from the following NMR data.

¹H-NMR (500 MHz, CDCl₃) δ 5.71 (ddt, J = 13.6, 12.6, 6.2 Hz, 3H),5.16 (dt, J = 13.4, 1.1 Hz, 6H), 4.36 (t, J = 7.0 Hz, 2H), 3.84-3.59 (m, 34H),3.42 (t, J = 7.1 Hz, 2H), 2.22 (dt, J = 6.2, 1.0 Hz, 6H), 1.68 (p, J = 7.1 Hz, 2H), 0.43 (t, J = 7.1 Hz, 2H), 0.10 (s, 27H).

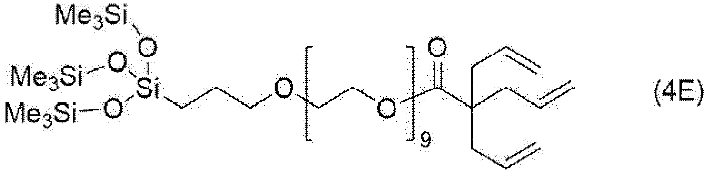

1,3-Bistrifluoromethylbenzene (10 g) was added to the Compound 4E (3.0 g) and stirred. Thereafter, a toluene solution (platinum content rate 3%, 0.1 g) of platinum/1,3-divinyl-1,1,3,3-tetramethyldisiloxane complex, aniline (0.1 g), and trimethoxysilane (1.5 g) were added thereto and stirred at 40°C, and then the solvent was distilled off under reduced pressure to provide 3.3 g of a Compound 4F. The structure of the Compound 4F was confirmed from the following NMR data.

¹H-NMR (500 MHz, CDCl₃) δ 4.36 (t, J = 7.0 Hz, 2H), 3.85-3.53 (m, 61H), 3.42 (t, J = 7.1 Hz, 2H), 1.74-1.59 (m, 8H), 1.59-1.43 (m, 6H), 0.72 (t, J = 7.0 Hz, 6H), 0.43 (t, J = 7.1 Hz, 2H), 0.10 (s, 27H).

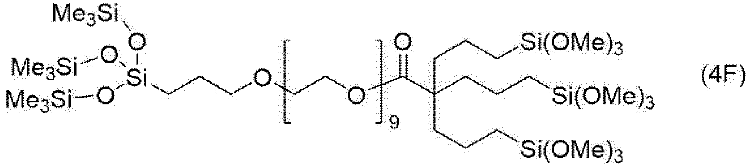

### [Synthesis of Compound 5A]

A Compound 5A was obtained according to the method described in Example 1 of JP2017-119849A.

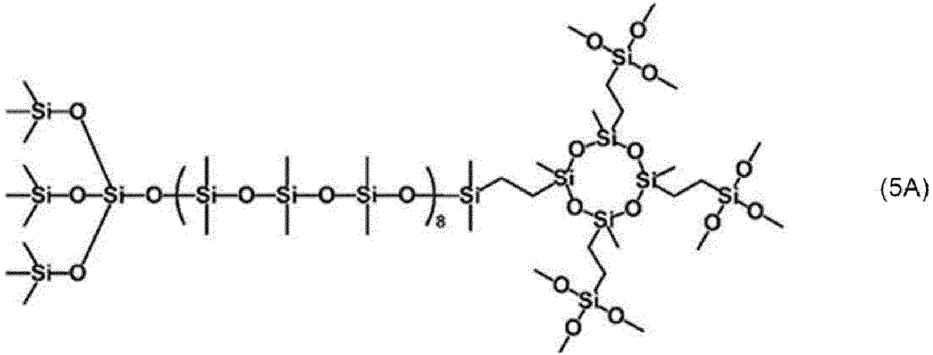

### [Preparation of Compound 6A]

Octadecyltrimethoxysilane (manufactured by Tokyo Chemical Industry Co., Ltd.) was prepared as the Compound 6A.

Then, the substrate was subjected to a surface treatment using the Compounds 1C, 2C, 3B, 4F, 5A, and 6A. As a surface treatment method, a dry coating method was used. As the substrate, chemically strengthened glass was used.

### <Dry coating method>

The dry coating was performed using a vacuum vapor deposition apparatus (product name "VTR-350M", manufactured by ULVAC, Inc.). A 20% by mass ethyl acetate solution (0.5 g) of each compound was filled in a molybdenum boat in a vacuum vapor deposition apparatus, and the inside of the vacuum vapor deposition apparatus was evacuated so that the pressure thereof was 1 × 10⁻³ Pa or less. The boat was heated at a temperature increase rate of 10°C/min or less, and when the vapor deposition rate by the crystal oscillation film thickness meter exceeded 1 nm/sec, the shutter was opened to start film formation on the surface of the substrate. When the film thickness reached about 50 nm, the shutter was closed to finish the film formation on the surface of the substrate. The substrate on which the compound was deposited was heat-treated at 200°C for 30 minutes to provide an article having a surface treatment layer on the surface of the substrate.

The article obtained by the dry coating method was evaluated for water repellency and abrasion resistance. The evaluation method is as follows.

### <Water repellency>

About 2 µL of distilled water was dropped on the surface treatment layer of the article, and the initial water contact angle was measured using a contact angle measuring apparatus (product name "DM-500", manufactured by Kyowa Interface Science Co., Ltd.). The measurement was performed at five locations on the surface treatment layer, and the average value was calculated. The water contact angle was calculated by the 2θ method. The evaluation method is as follows. A is a level at which there is no problem in practical use.
A: water contact angle is 108° or more.
B: water contact angle is less than 108°.

### <Abrasion resistance>

In accordance with JIS L0849:2013 (corresponding ISO: 105-X12:2001), a steel wool bonster (#0000) was reciprocated 10,000 times at a pressure of 98.07 kPa and a speed of 320 cm/min with a reciprocating traverse tester (manufactured by KNT Co., Ltd.), and then the water contact angle after the friction test was measured for the surface treatment layer of the article. The method of measuring the water contact angle after the friction test is the same as the initial method of measuring the water contact angle in the method of evaluating water repellency. The abrasion resistance was evaluated based on the degree of reduction in the water contact angle by the friction test. It can be said that as the reduction degree of the water contact angle decreases, the abrasion resistance is more excellent. The evaluation method is as follows. A and B are levels at which there is no problem in practical use. Reduction degree of water contact angle = (initial water contact angle) - (water contact angle after friction test)
A: degree of decrease in water contact angle was 5° or less.
B: degree of decrease in water contact angle was more than 5° and 10° or less.
C: degree of decrease in water contact angle was more than 10°.

The evaluation results are shown in Table 1. In Table 1, in a case in which the compound contains the Group 1, a partial structure that is an alkylene chain or a polyalkylene oxide chain having 3 or more carbon atoms, or the Group 2, it is described as "Y", and in a case in which it does not contain the Group 2, it is described as "N".

Examples 1 to 4 are examples, and Examples 5 and 6 are comparative examples.

**[Table 1]**

| | Compound | | | | Evaluation | |
|---|---|---|---|---|---|---|
| | Type | Group 1 | Partial structure | Group 2 | Water repellency | Abrasion resistance |
| Example 1 | Compound 1C | Y | Y | Y | A | B |
| Example 2 | Compound 2C | Y | Y | Y | A | A |
| Example 3 | Compound 3B | Y | Y | Y | A | A |
| Example 4 | Compound 4F | Y | Y | Y | A | A |
| Example 5 | Compound 5A | Y | N | Y | A | C |
| Example 6 | Compound 6A | N | Y | Y | B | B |

As shown in Table 1, the compounds of Examples 1 to 4 contain the Group 1, a partial structure that was an alkylene chain or a polyalkylene oxide chain having 3 or more carbon atoms, and the Group 2, and thus it was found that a surface treatment layer excellent in water repellency and abrasion resistance can be formed.

On the other hand, the compound of Example 5 did not contain a partial structure that was an alkylene chain or a polyalkylene oxide chain having 3 or more carbon atoms, and was found to be poor in abrasion resistance. The compound of Example 6 did not contain the Group 1, and was found to be poor in water repellency.

### [Synthesis of Compound 11F]

The Compound 11 A was obtained according to the method described in WO2021/054413.

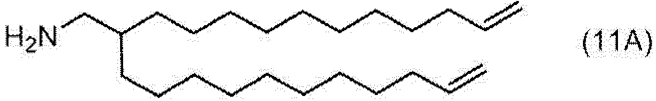

The Compound 11B was obtained according to the method described in JP2017-119849A.

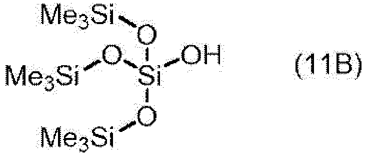

Under a nitrogen atmosphere, 2,3,4,5,6-pentafluorophenol (6.8 g), THF (42 mL), and triethylamine (5.1 g) were added to a 100 mL flask, and stirred at 25°C. To the reaction mixture, 10-undecenoyl chloride (5.0 g) was added dropwise and stirred for one hour. The reaction solution was filtered, and the solvent and low-boiling point components were distilled off under reduced pressure, and flash column chromatography (developing solvent: hexane/ethyl acetate) with silica gel was performed to provide 7.9 g of a Compound 11C. The structure of the Compound 11C was confirmed from the following NMR data.

¹H-NMR (400 MHz, CDCl₃) δ5.74(ddt, J= 16.9, 10.2, 6.6 Hz, 1H), 5.05 - 4.77(m, 2H), 2.59(t, J = 7.4 Hz, 2H), 1.97(q, J = 7.1 Hz, 2H), 1.70(p, J = 7.4 Hz, 2H), 1.42 - 1.08(m, 10H).

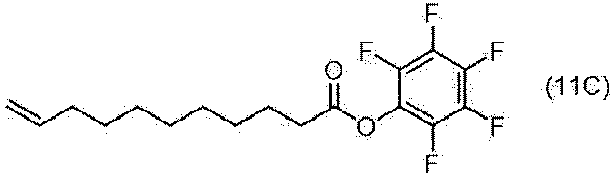

Under a nitrogen atmosphere, a xylene solution (platinum content rate: 3% by mass, 0.10 mL) of platinum/1,3-divinyl-1,1,3,3-tetramethyldisiloxane complex was added to a mixture of the Compound 11C (5.6 g), THF (5.0 mL), and chlorodimethylsilane (2.3 g) in a 200 mL flask, and stirred for 2 hours. The solvent and the low-boiling components were distilled off under reduced pressure to provide 7.2 g of a Compound 11D. The structure of the Compound 11D was confirmed from the following NMR data.

¹H-NMR (400 MHz, CDCl₃) δ 2.63 (t,J = 7.4 Hz, 2H), 1.74(p, J = 7.4 Hz,2H), 1.46 - 1.17(m, 14H), 0.90 - 0.69(m, 2H), 0.37(s, 6H).

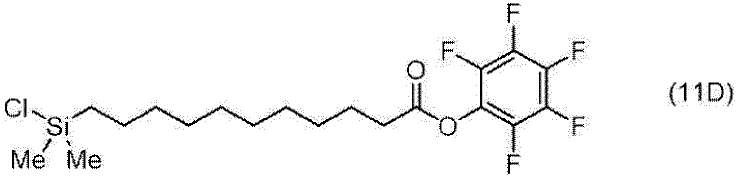

Tris(trimethylsiloxy)silanol (2.5 g) and THF (20 mL) were added to a three-necked flask under a nitrogen atmosphere and stirred. Cooling was performed to 0°C, and a hexane solution of n-BuLi (1.6M, 5.0 mL) was added dropwise. A THF solution of hexamethylcyclotrisiloxane (1.0M, 8.8 mL) was added dropwise thereto, and a THF solution of hexamethylcyclotrisiloxane (1.0M, 24 mL) was further added dropwise thereto, then stirred for 2 hours. Thereafter, the Compound 11D (3.6 g) was added and stirred for 1 hour, then the Compound 11A (3.2 g) was added and stirred for 1 hour. Hexane and ion-exchanged water were sequentially added to the reaction solution, and liquid separation was performed to separate an organic layer. The solvent and the low-boiling component were distilled off under reduced pressure, and then flash column chromatography (developing solvent: hexane/ethyl acetate) with silica gel was performed to provide 0.19 g of a Compound 11E. The structure of the Compound 11E was confirmed from the following NMR data. In the Compound 11E, the average value of n was 8.

¹H-NMR (400 MHz, CDCl₃) δ 5.71(ddt, J = 16.9, 10.2, 6.7 Hz, 2H), 5.24(t, J = 5.7 Hz, 1H), 4.95 - 4.78(m, 4H), 3.08(t, J = 5.9 Hz, 2H), 2.06(t, J = 7.6 Hz, 2H), 1.94(q, J = 6.9 Hz, 4H), 1.46 - 0.98(m, 49H), 0.42(t, J = 7.6 Hz, 2H), -0.06(s, 79H)

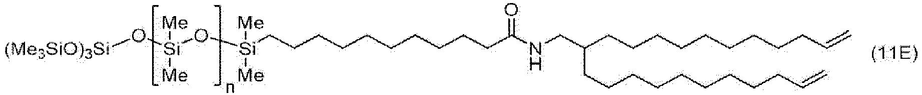

Using the Compound 11E (0.19 g), 0.21 g of a Compound 11F was obtained in the same manner as the synthesis of the Compound 13B described later. The structure of the Compound 1F was confirmed from the following NMR data. In the Compound 11F, the average value of n was 8.

¹H-NMR (400 MHz, CDCl₃) δ 5.26 - 5.17(m, 1H), 3.47(s, 18H), 3.08(t, J = 6.0 Hz, 2H), 2.12 - 1.98(m, 2H), 1.46 - 0.98(m, 57H), 0.63 - 0.46(m, 4H), 0.45(t, J = 7.6 Hz, 2H), - 0.06(s, 81H).

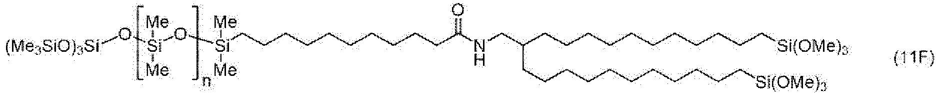

### [Synthesis of Compound 12B]

A reaction was performed in the same manner as in the synthesis of the Compound 11E, and flash column chromatography (developing solvent: hexane/ethyl acetate) using silica gel was performed to provide 0.86 g of a Compound 12A. The structure of the Compound 12A was confirmed from the following NMR data. In the Compound 12A, the average value of n was 14.

¹H-NMR (400 MHz, CDCl₃) δ 5.74 (ddt, J = 16.9, 10.1, 6.7 Hz, 2H), 5.25(q, J = 5.5 Hz, 1H), 5.13 - 4.75(m, 4H), 3.11(t, J = 5.9 Hz, 2H), 2.09(t, J = 7.6 Hz, 2H), 1.96(q, J = 7.0 Hz, 4H), 1.46 - 0.98(m, 49H), 0.45(t, J = 7.6 Hz, 2H), 0.05(s, 117H).

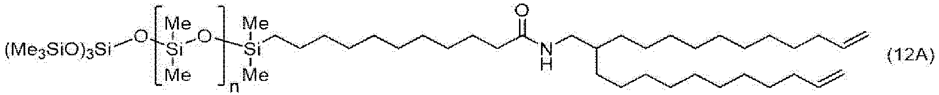

Using the Compound 12A (0.86 g), 0.88 g of a Compound 12B was obtained in the same manner as the Compound 13B described later. The structure of the Compound 12B was confirmed from the following NMR data. In the Compound 12B, the average value of n was 14.

¹H-NMR (400 MHz, CDCl₃) δ 5.25(t, J = 8.2 Hz, 1H), 3.11(t, J = 6.0 Hz, 2H), 2.09(t, J = 7.6 Hz, 2H), 1.46 - 0.99(m, 57H), 0.64 - 0.53(m, 4H), 0.45(t, J = 7.6 Hz, 2H), 0.05(s, 117H).

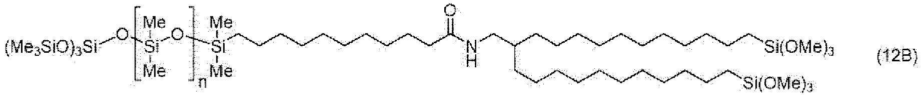

### [Synthesis of Compound 13B]

Tris(trimethylsiloxy)silanol (1.3 g) and THF (20 mL) were added to a three-necked flask under a nitrogen atmosphere and stirred. Cooling was performed to 0°C, and a hexane solution of n-BuLi (1.6M, 2.4 mL) was added dropwise. A THF solution of hexamethylcyclotrisiloxane (1.1M, 4.0 mL) was added dropwise thereto, and a THF solution of hexamethylcyclotrisiloxane (1.1M, 22 mL) was further added dropwise thereto, then stirred for 7 hours. Thereafter, the Compound 11D (3.6 g) was added and stirred for 1 hour, then the Compound 11A (3.2 g) was added and stirred for 1 hour. Hexane and ion-exchanged water were sequentially added to the reaction solution, and liquid separation was performed to separate an organic layer. The solvent and the low-boiling components were distilled off under reduced pressure, and then flash column chromatography (developing solvent: hexane/ethyl acetate) with silica gel was performed to provide 0.98 g of a Compound 13A. The structure of the Compound 13A was confirmed from the following NMR data. In the Compound 13A, the average value of n was 21.

¹H-NMR (400 MHz, CDCl₃) δ 5.81(ddt, J = 16.9, 10.2, 6.7 Hz, 2H), 5.31(d, J = 4.8 Hz, 1H),5.08 - 4.84(m, 4H), 3.19(t, J = 6.0 Hz, 2H), 2.31 - 2.11(m, 2H), 2.08 - 1.92(m, 4H), 1.63(t, J = 7.3 Hz, 2H), 1.28(d, J = 9.6 Hz, 47H), 0.53(t, J = 7.7 Hz, 2H), 0.09(s, 159H).

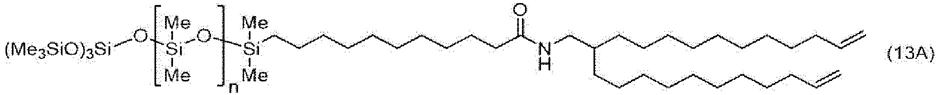

A toluene solution (platinum content rate: 3% by mass, 4.1 mg) of platinum/1,3-divinyl-1,1,3,3-tetramethyldisiloxane complex, aniline (2.6 mg), and trimethoxysilane (0.40 g) were added to the Compound 13A (0.80 g) dissolved in dichloromethane (10 g), and stirred at 25°C for 2 hours. The solvent was distilled off under reduced pressure to provide 0.69 g of a Compound 13B. The structure of the Compound 13B was confirmed from the following NMR data. In the Compound 13B, the average value of n was 21.

¹H-NMR (400 MHz, CDCl₃) δ 5.31 (d, J = 4.8 Hz, 1H), 3.57(s, 18H), 3.18(t, J = 6.0Hz, 2H), 2.31 - 2.11(m, 2H), 1.64 - 1.25(m, 57H), 0.64(m, 4H), 0.52(t, J = 7.7 Hz, 2H), 0.09(s, 159H).

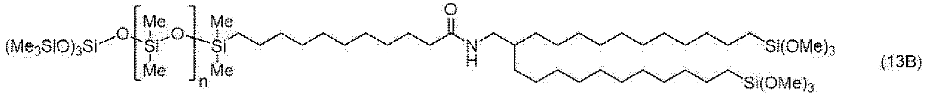

### [Synthesis of Compound 14C]

Tris(trimethylsiloxy)silanol (1.3 g) and THF (20 mL) were added to a three-necked flask under a nitrogen atmosphere and stirred. Cooling was performed to 0°C, and a hexane solution of n-BuLi (1.6M, 2.4 mL) was added dropwise. A THF solution of hexamethylcyclotrisiloxane (1.0M, 4.4 mL) was added dropwise thereto, and a THF solution of hexamethylcyclotrisiloxane (1.0M, 22 mL) was further added dropwise thereto, then stirred for 6 hours. Then, the Compound 11D (3.6 g) was added and stirred for 24 hours. Hexane and ion-exchanged water were sequentially added to the reaction solution, and liquid separation was performed to separate an organic layer. The solvent and the low-boiling components were distilled off under reduced pressure, and then flash column chromatography (developing solvent: hexane/ethyl acetate) with silica gel was performed to provide 5.5 g of a Compound 14A. The structure of the Compound 14A was confirmed from the following NMR data. In the Compound 14A, the average value of n was 23.

¹H-NMR (400 MHz, CDCl₃) δ 2.58(t, J = 7.4 Hz, 2H), 1.70(p, J = 7.4 Hz, 2H), 1.41 - 1.07(m, 14H), 0.45(t, J = 7.4 Hz, 2H), 0.10(s, 171H).

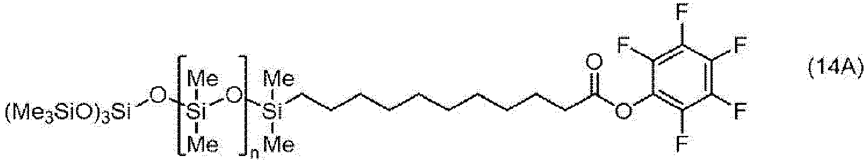

To a mixture of the Compound 14A (1.0 g) and 1,3-bis(trifluoromethyl)benzene (1.5 g), 2,2-diallylpenta-4-ene-1-amine (0.25 g) was added in a 200 mL flask, and stirred for 3 hours. Hexane and ion-exchanged water were sequentially added to the reaction solution, and liquid separation was performed to separate an organic layer. The solvent and the low-boiling components were distilled off under reduced pressure, and then flash column chromatography (developing solvent: hexane/ethyl acetate) with silica gel was performed to provide 0.35 g of a Compound 14B. The structure of the compound 14B was confirmed from the following NMR data. In the Compound 14B, the average value of n was 23.

¹H-NMR (400 MHz, CDCl₃) δ 5.80(ddt, J = 17.7, 10.6, 7.4 Hz, 3H), 5.15 - 4.90(m, 6H), 3.12(d, J = 6.3 Hz, 2H), 2.09(t, J = 7.5 Hz, 2H), 1.96(dd, J = 7.6, 1.3 Hz, 6H), 1.34 - 1.07(m, 16H), 0.45(t, J = 7.6 Hz, 2H), 0.06 - -0.10(m, 171H).

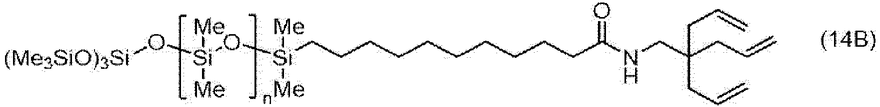

From the Compound 14B (0.33 g), 0.38 g of a Compound 14C was obtained in the same manner as the synthesis of the Compound 13B. The structure of the Compound 14C was confirmed from the following NMR data. In the Compound 14C, the average value of n was 23.

¹H-NMR (400 MHz, CDCl₃) δ 5.66(d, J= 6.4 Hz, 1H), 3.46(d, J= 29.0 Hz, 2H), 2.12(t, J = 7.5 Hz, 2H),1.61 - 1.42(m, 2H), 1.32 - 1.02(m, 26H), 0.53(t, J = 7.7 Hz, 6H), 0.45(t, J = 7.0 Hz, 2H),0.22 - -0.24(m, 171H).

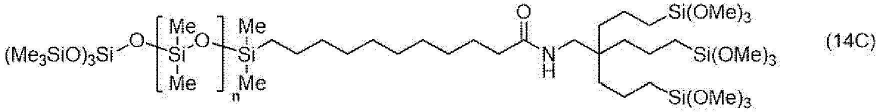

### [Synthesis of Compound 15B]

Under a nitrogen atmosphere, trimethylsilanol (0.15 g) and tetrahydrofuran (10 mL) were added to a three-necked flask and stirred. Cooling was performed to 0°C, and a hexane solution of n-BuLi (1.6M, 0.95 mL) was added dropwise. A THF solution (1.0M, 11 mL) of hexamethylcyclotrisiloxane was added dropwise, and stirred for 18 hours. Thereafter, the Compound 11D (1.5 g) was added and stirred for 6 hours, then the Compound 11A (2.7 g) was added and stirred for 24 hours. Hexane and ion-exchanged water were sequentially added to the reaction solution, and liquid separation was performed to separate an organic layer. The solvent and the low-boiling component were distilled off under reduced pressure, and then flash column chromatography (developing solvent: hexane/ethyl acetate) with silica gel was performed to provide 1.4 g of a Compound 15A. The structure of the Compound 15A was confirmed from the following NMR data. In the Compound 15A, the average value of n was 22.

¹H-NMR (400 MHz, CDCl₃) δ 5.74(ddt, J = 16.9, 10.2, 6.7 Hz, 2H), 5.28(s,1H), 5.01 - 4.71(m, 4H), 3.11(t, J = 5.8 Hz, 2H), 2.10(t, J = 7.6 Hz, 2H), 1.97(q, J = 6.9 Hz, 4H), 1.69 - 0.97(m, 48H), 0.45(t, J = 7.6 Hz, 2H), 0.07(s, 147H).

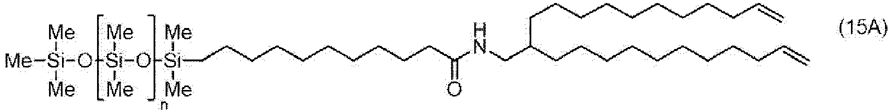

A toluene solution (platinum content rate: 3% by mass, 6.8 mg) of platinum/1,3-divinyl-1,1,3,3-tetramethyldisiloxane complex, aniline (1.0 mg), and trimethoxysilane (0.091 g) were added to the Compound 15A (0.51 g) dissolved in dichloromethane (0.63 g), and stirred at 25°C for 2 hours. The solvent was distilled off under reduced pressure to provide 0.56 g of a Compound 15B. The structure of the Compound 15B was confirmed from the following NMR data. In the Compound 15B, the average value of n was 22.

¹H-NMR (400 MHz, CDCl₃) δ 5.31(m, 1H), 3.57(s, 18H), 3.18(t, J = 6.0 Hz, 2H), 2.16(t, J = 7.5 Hz, 2H), 1.64 - 1.25(m, 57H), 0.64(m, 4H), 0.52(t, J = 7.7 Hz, 2H), 0.07(m, 147H).

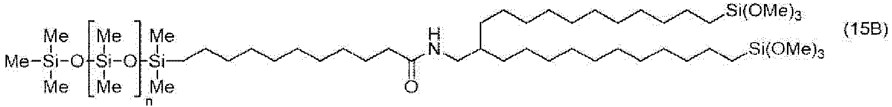

Then, the substrate was subjected to surface treatment using the Compounds 11F, 12B, 13B, 14 C, and 15B and the Compounds 5A and 6A. As a surface treatment method, a wet coating method was used.

### <Wet coating method>

30 g of silicon oxide was disposed as a vapor deposition source on a copper hearth in a vacuum vapor deposition apparatus (VTR-350M manufactured by ULVAC, Kiko Co., Ltd.). A glass substrate was disposed in the vacuum vapor deposition apparatus, and the inside of the vacuum vapor deposition apparatus was evacuated until the pressure reached 5 × 10⁻³ Pa or less. The hearth was heated to about 2,000°C, and silicon oxide was vacuum-deposited on the surface of the substrate. Thereby, a silicon oxide layer having a thickness of about 20 nm was formed on the substrate.

The substrate on which the silicon oxide layer was formed was placed on a sample stage of a spray coater (API-90RS manufactured by Apiros Co., Ltd.) so that the silicon oxide layer was on the surface. Then, 13 g of 0.2% by mass of a heptane solution of each compound was charged into a syringe in the spray coater, and spray-applied at an atomization pressure of 130 kPa, a distance between a nozzle and a sample surface of 50 mm, and a scanning speed of 300 mm/sec. Thereafter, the applied substrate was heat-treated at 140°C for 30 minutes. As a result, an article having a surface treatment layer on the surface of the silicon oxide layer was obtained.

The article obtained by the wet coating method was evaluated for water repellency, abrasion resistance, and fingerprint resistance. The method of evaluating water repellency and abrasion resistance is as described above. The method of evaluating fingerprint resistance is as follows.

### <Fingerprint resistance>

A 1 kg weight including a red rubber stopper having a diameter of 2 cm as a fingerprint stamp portion was prepared. Then, 70 µL of a population fingerprint solution (manufactured by Isekyu Co., Ltd.) was dropped onto a cloth, and the fingerprint stamp was attached to the artificial fingerprint solution for 1 minute. In order to remove the artificial fingerprint solution excessively attached to the fingerprint stamp, the fingerprint stamp was attached to the new cloth for 20 seconds. Thereafter, the article on which the surface treatment layer was formed was placed on a hot plate with the temperature adjusted to 23°C. The fingerprint stamp was stamped against the surface treatment layer.

The article to which the artificial fingerprint solution was attached was placed on a sliding device (product name "HHS -2000", manufactured by Shinto Scientific Co., Ltd.). A planar indenter having an area of 1 cm square was attached to a wiping cloth (Savina Minimax manufactured by KB SEIREN Co., Ltd.) using a double-sided tape, and was installed in a sliding device. The artificial fingerprint solution attached to the surface treatment layer was wiped off with the wiping cloth in one direction with a load of 100 g. The haze of the wiped portion was measured with a haze meter (product name "NDH7000SP", manufactured by Nippon Denshoku Industries Co., Ltd.). The evaluation method is as follows.
A: Haze value is less than 0.1%.
B: Haze value is 0.1% or more and less than 1%.
C: Haze value is 1% or more.

The evaluation results are shown in Table 2. In Table 2, in a case in which the compound contains a partial structure that is an alkylene chain or a polyalkylene oxide chain having 3 or more carbon atoms, or the Group 2, it is described as "Y", and in a case in which it does not contain, it is described as "N". The specific structure of the Group 1 was described. In addition, n is the number of repetitions of the organopolysiloxane residue, n.

Examples 11 to 15 are examples, and Examples 16 and 17 are comparative examples.

**[Table 2]**

| | Compound | | | | | Evaluation | | |
|---|---|---|---|---|---|---|---|---|
| | Type | n | Group 1 | Partial structure | Group 2 | Water repellency | Abrasion resistance | Fingerprint resistance |
| Compound 11 | Compound 11F | 8 | -Si (OSiMe₃)₃ | Y | Y | A | A | B |
| Compound 12 | Compound 12B | 14 | -Si(OSiMe₃)₃ | Y | Y | A | A | A |
| Compound 13 | Compound 13B | 21 | -Si(OSiMe₃)₃ | Y | Y | A | A | A |
| Compound 14 | Compound 14C | 23 | -Si(OSiMe₃)₃ | Y | Y | A | A | A |
| Compound 15 | Compound 15B | 22 | -SiMe₃ | Y | Y | A | A | A |
| Compound 16 | Compound 5A | | -Si(OSiMe₃) | N | Y | B | C | C |
| Compound 17 | Compound 6A | | N | Y | Y | B | B | C |

As shown in Table 2, the compounds of Examples 11 to 15 contain the Group 1, a partial structure that was an alkylene chain or a polyalkylene oxide chain having 3 or more carbon atoms, and the Group 2, and thus it was found that a surface treatment layer excellent in water repellency and abrasion resistance can be formed. In addition, the compounds of Examples 11 to 15 were found to be excellent in fingerprint resistance.

### INDUSTRIAL APPLICABILITY

The compound of the present disclosure is useful as a surface treatment agent. The surface treatment agent can be used, for example, for a substrate in a display device such as a touch panel display, an optical element, a semiconductor element, a building material, an automobile component, a nanoimprint technology, or the like. In addition, the surface treatment agent can be used for a body, a window glass (windshield, side glass, rear glass), a mirror, a bumper, and the like in transportation equipment such as a train, an automobile, a ship, and an airplane. Further, the surface treatment agent can be used for outdoor articles such as a building outer wall, a tent, a solar power generation module, a sound insulating plate, or concrete; a fishing net, an insect trap net, and a water tank. In addition, the surface treatment agent is used for a kitchen, a bathroom, a wash basin, a mirror, and a toilet peripheral component; chinaware such as a chandelier and a tile; various indoor facilities such as artificial marble and an air conditioner. In addition, the surface treatment agent can be used as an antifouling treatment for jigs, inner walls, pipes, and the like in a factory. In addition, the surface treatment agent can be used for goggles, glasses, helmets, pachinko, fibers, umbrellas, playing tools, and soccer balls. In addition, the surface treatment agent can be used as an adhesion inhibitor for various packaging materials such as food packaging materials, cosmetic packaging materials, and the inside of a pot. In addition, the surface treatment agent can be used for car navigation, mobile phones, smartphones, digital cameras, digital video cameras, PDAs, portable audio players, car audio, game machines, spectacle lens, camera lens, lens filters, sunglasses, medical instruments such as stomach cameras, copying machines, PCs, displays (for example, liquid crystal displays, organic EL displays, plasma displays, or touch panel displays), touch panels, protective films, and optical members such as antireflection films.

The disclosure of Japanese Patent Application No. 2022-049060 filed on March 24, 2022 is incorporated herein by reference in its entirety. Furthermore, all documents, patent applications, and technical standards described in this specification are incorporated herein by reference to the same extent as if each individual document, patent application, and technical standard were specifically and individually described to be incorporated by reference.

## Claims

1. A compound comprising the following Group 1, a partial structure that is an alkylene chain having 3 or more carbon atoms or a polyalkylene oxide chain, and the following Group 2:
Group 1: -M¹R¹₃
Group 2: -Si(R²)ₙL₃₋ₙ
wherein, in Group 1 and Group 2, M¹ is Si, Sn, or Ge, each R¹ independently represents a hydrocarbon group or a trialkylsilyloxy group, each R² independently represents a hydrocarbon group, each L independently represents a hydrolyzable group or a hydroxyl group, and n is an integer from 0 to 2.

2. The compound according to claim 1, which is represented by the following Formula 1:
[R¹₃Si-(O)ᵣ-Z]ₚA(Si(R²)ₙL₃₋ₙ)_{q} ... (1)
wherein, in Formula 1, each R¹ independently represents a hydrocarbon group or a trialkylsilyloxy group, r represents 0 or 1, each Z independently represents an alkylene chain or a polyalkylene oxide chain, or any combination of an alkylene chain and a divalent polysiloxane residue, A represents a single bond or a (p+q)-valent linking group, each R² independently represents a hydrocarbon group, each L independently represents a hydrolyzable group or a hydroxyl group, each n independently represents an integer from 0 to 2, and each of p and q independently represents an integer of 1 or more.

3. The compound according to claim 2, wherein Z is an alkylene chain having 10 or more carbon atoms in Formula 1.

4. The compound according to claim 2, wherein Z is a polyalkylene oxide chain having a repeat number of 3 or more in Formula 1.

5. The compound according to any one of claims 2 to 4, wherein each R¹ independently represents a trialkylsilyloxy group in Formula 1.

6. The compound according to any one of claims 2 to 5, wherein each R¹ independently represents a trimethylsilyloxy group or a triethylsilyloxy group in Formula 1.

7. The compound according to any one of claims 2 to 6, wherein p is from 2 to 4 in Formula 1.

8. The compound according to any one of claims 2 to 7, wherein q is from 2 to 4 in Formula 1.

9. A composition, comprising the compound according to any one of claims 1 to 8 and a liquid medium.

10. A surface treatment agent, comprising the compound according to any one of claims 1 to 8.

11. A surface treatment agent, comprising the compound according to any one of claims 1 to 8 and a liquid medium.

12. A method of producing an article, the method comprising: subjecting a substrate to a surface treatment with the surface treatment agent according to claim 10 or 11 to produce an article having a surface treatment layer formed on the substrate.

13. An article, comprising: a substrate; and a surface treatment layer disposed on the substrate and surface-treated with the surface treatment agent according to claim 10.

14. The article according to claim 13, the article being an optical member.

15. The article according to claim 13, the article being a display or a touch panel.

16. A compound, comprising the following Group 1, a partial structure that is an alkylene chain having 3 or more carbon atoms or a polyalkylene oxide chain, and the following Group 2:
Group 1: -M¹R¹₃
Group 2: -Si(R²)ₙL₃₋ₙ
wherein, in Group 1 and Group 2, M¹ is Si, Sn, or Ge, each R¹ independently represents a hydrocarbon group or a trialkylsilyloxy group, each R² independently represents a hydrocarbon group, each L independently represents a hydrolyzable group or a hydroxyl group, and n is an integer from 0 to 2.
